# NEUE EUROPÄISCHE PATENTSCHRIFT

(11) **EP 1 415 099 B2**
(45) Veröffentlichungstag und Bekanntmachung des Hinweises auf die Entscheidung über den Einspruch: **18.06.2014**
(45) Hinweis auf die Patenterteilung: 12.01.2005
(21) Anmeldenummer: 02735184.0
(22) Anmeldetag: 27.03.2002
(51) Int. Cl.: F16H 3/66

(54) **MEHRSTUFENGETRIEBE**
MULTISTEP GEAR
TRANSMISSION A NIVEAUX MULTIPLES

(30) Priorität: 30.03.2001 DE 10115983
(43) Veröffentlichungstag der Anmeldung: 06.05.2004
(73) Patentinhaber: ZF FRIEDRICHSHAFEN Aktiengesellschaft, 88038 Friedrichshafen (DE)
(72) Erfinder: ZIEMER, Peter, 88069 Tettnang (DE)
(86) Internationale Anmeldenummer: PCT/EP2002/003434
(87) Internationale Veröffentlichungsnummer: WO 2002/079670

(56) Entgegenhaltungen:
- EP-A- 0 427 459
- DE-A- 19 949 507
- US-A- 5 106 352
- US-A- 5 342 257
- US-A- 6 083 135

## Beschreibung

Die vorliegende Erfindung betrifft ein Mehrstufengetriebe nach dem Oberbegriff des Patentanspruchs 1.

In der WO-A-01/27496 (Stand der Technik nach Art. 54(3) EPÜ) werden mehrere Getriebeschematas für ein automatisches Mehrstufengetriebe mit verschiedenen Kombinationen gekoppelter Planetenradsätze beschrieben. Durch geeignete Anbindung einer nichtschaltbaren Vorschaltradsatzkombination an eine schaltbare Nachschaltradsatzkombination können jeweils mindestens sieben Vorwärtsgänge ohne Gruppenschaltung geschaltet werden. Die Anzahl der schaltbaren Vorwärtsgänge ist dabei mindestens um zwei größer als die Anzahl der Schaltelemente. Diese Schrift schlägt vor, den schaltbaren Nachschaltsatz als Zweisteg-Vierwellen-Getriebe auszubilden, wobei auf dessen erster Welle genau ein Schaltelement angeordnet ist, auf der zweiten Welle mindestens zwei und auf der dritten Welle genau zwei. Die vierte Welle des Zweisteg-Vierwellen-Getriebe ist mit der Abtriebswelle des Getriebes verbunden. Wesentlich bei allen Ausführungsvarianten ist auch, daß maximal zwei Schaltelemente gleiches Drehzahlniveau aufweisen.

Unter Zweisteg-Vierwellen-Getriebe ist hierbei eine Anordnung von zwei einzelnen mechanisch gekoppelten Einsteg-Planetenradsätzen zu verstehen, bei denen die gekoppelten Einheiten infolge einer zweifachen Bauteilbindung vier sogenannte "freie Wellen" aufweist, wobei eine "Welle" ein Sonnenrad, ein Hohlrad oder auch ein Steg eines Planetenradsatzes sein kann.

Die Aufgabe der vorliegenden Erfindung besteht nun darin, ausgehend vom genannten Stand der Technik ein Mehrstufengetriebe mit wenigstens sieben ohne Gruppenschaltung schaltbaren Vorwärtsgängen hinsichtlich vergleichsweise geringerem Bauaufwand weiterzuentwickeln, bei unverändert günstiger Gangstufung und großer Spreizung.

Diese Aufgabe wird durch ein die Merkmale des Anspruchs 1, 2, 3 oder 4 aufweisendes Mehrstufengetriebe gelöst.

Ausgehend vom Stand der Technik der WO-A-01/27496 weist das Mehrstufengetriebe einen mit der Antriebswelle des Getriebes verbundenen Vorschaltsatz und einen mit der Abtriebswelle des Getriebes verbundenen Nachschaltsatz auf. Der Vorschaltsatz weist dabei entweder einen nicht schaltbaren Vorschalt-Planetenradsatz, einen schaltbaren Vorschalt-Planetenradsatz oder zwei gekoppelte, nicht schaltbare Vorschalt-Planetenradsätze auf. Der Nachschaltsatz ist als Zweisteg-Vierwellen-Getriebe mit zwei schaltbaren, gekoppelten Nachschalt-Planetenradsätzen ausgebildet. Der Nachschaltsatz umfaßt also zwei Stege und vier Zentralräder, wobei unter Zentralrad entweder ein Sonnenrad oder ein Hohlrad eines Planetenradsatzes zu verstehen ist. Eine "freie Welle" des Zweisteg-Vierwellengetriebes kann ein Sonnenrad, ein Hohlrad oder auch ein Steg eines Planetenradsatzes sein.

Der Vorschaltsatz ist über wahlweises Schalten von maximal sieben Schaltelementen selektiv mit den schaltbaren Nachschalt-Planetenradsätzen verbindbar. Der schaltbare Nachschaltsatz ist immer über ein Schaltelement mit der Antriebswelle des Getriebes verbindbar. In jedem geschalteten Gang sind zwei Schaltelemente geschaltet. Beim Umschalten von einem Gang in den nächsten wird dabei lediglich ein Schaltelement abgeschaltet und ein weiteres Schaltelement zugeschaltet, wodurch schaltqualitätskritische Gruppenschaltungen, bei denen mehrere Schaltelemente gleichzeitig zu- bzw. abgeschaltet werden müssen, vermieden werden.

In einer ersten Lösung der Aufgabe weist das erfindungsgemäße Mehrstufengetriebe sechs Schaltelemente, einen Vorschalt-Planetenradsatz und zwei als Zweisteg-Vierwellen-Getriebe gekoppelte, schaltbare Nachschalt-Planetenradsätze auf, hat sieben Vorwärtsgänge und einen Rückwärtsgang. Erfindungsgemäß wird vorgeschlagen, die erste freie Welle des Nachschaltsatzes mit einem Schaltelement, die zweite freie Welle des Nachschaltsatzes mit zwei Schaltelementen und die dritte freie Welle des Nachschaltsatzes mit drei Schaltelementen zu verbinden. Die vierte freie Welle des Nachschaltsatzes ist direkt mit der Abtriebswelle des Getriebes verbunden. Gegenüber dem vergleichbaren Getriebe gemäß genanntem Stand der Technik ist also ein zusätzliches Schaltelement mit der dritten freien Welle des als Zweisteg-Vierwellen-Getriebes ausgebildeten Nachschaltsatzes verbunden.

Der Vorschalt-Planetenradsatz ist hierbei vorzugsweise als nicht schaltbar ausgeführt.

Die erste freie Welle des Nachschaltsatzes ist hierbei mit dem ersten Schaltelement verbunden und rotiert bei geschaltetem ersten Schaltelement mit einer Drehzahl kleiner oder gleich der Eingangsdrehzahl der Antriebswelle. Die zweite freie Welle des Nachschaltsatzes ist mit dem zweiten und dritten Schaltelement verbunden. Die dritte freie Welle des Nachschaltsatzes ist mit dem vierten und fünften Schaltelement verbunden. Bei geschaltetem vierten Schaltelement ist die dritte freie Welle vorzugsweise festgesetzt, kann aber je nach Ausführungsform auch mit einer Drehzahl kleiner der Antriebsdrehzahl der Eingangswelle rotieren. Bei geschaltetem fünften Schaltelement rotiert die dritte freie Welle mit Eingangsdrehzahl der Antriebswelle und erzeugt somit den Direktgang und die Overdrive-Übersetzungen. Auf der vierten freien Welle des Nachschaltsatzes ist kein Schaltelement angeordnet. Erfindungsgemäß ist die dritte freie Welle des Nachschaltsatzes mit dem sechsten Schaltelement verbunden. Bei geschaltetem sechsten Schaltelement rotiert die dritte freie Welle stets mit einer Drehzahl kleiner als die Eingangsdrehzahl der Antriebswelle.

In einer zweiten Lösung der Aufgabe weist das erfindungsgemäße Mehrstufengetriebe sechs Schaltelemente, maximal zwei gekoppelte Vorschalt-Planetenradsätze und zwei als Zweisteg-Vierwellen-Getriebe gekoppelte, schaltbare Nachschalt-Planetenradsätze auf, hat ebenfalls sieben Vorwärtsgänge und einen Rückwärtsgang. Erfindungsgemäß wird vorgeschlagen, die erste, zweite und dritte freie Welle des Nachschaltsatzes jeweils mit zwei Schaltelementen zu verbinden. Die vierte freie Welle des Nachschaltsatzes ist direkt mit der Abtriebswelle des Getriebes verbunden. Gegenüber dem genannten Stand der Technik ist also ein zusätzliches Schaltelement mit der ersten freien Welle des Nachschaltsatzes verbunden.

Der Vorschaltsatz kann hierbei einen nicht schaltbaren Vorschalt-Planetenradsatz oder zwei gekoppelte, nicht schaltbare Vorschalt-Planetenradsätze oder einen schaltbaren Vorschalt-Planetenradsatz aufweisen.

Im Unterschied zur ersten erfindungsgemäßen Lösung der Aufgabe ist das sechste Schaltelemente anstatt mit der dritten freien Welle nunmehr mit der ersten freien Welle des Nachschaltsatzes verbunden. Ist das sechste Schaltelement geschaltet, so rotiert die erste freie Welle des Nachschaltsatzes stets mit einer Drehzahl kleiner als die Eingangsdrehzahl der Antriebswelle. Wie bei der ersten erfindungsgemäßen Lösung ist das erste Schaltelement mit der ersten freien Welle des Nachschaltsatzes verbunden, das zweite und dritte Schaltelement mit der zweiten freien Welle des Nachschaltsatzes, sowie das vierte und fünfte Schaltelement mit der dritten freien Welle des Nachschaltsatzes. Ist das erste Schaltelement geschaltet, d.h. geschlossen, so rotiert die erste freie Welle des Nachschaltsatzes mit Eingangsdrehzahl der Antriebswelle. Bei geschaltetem zweiten Schaltelement rotiert die zweite freie Welle des Nachschaltsatzes mit einer Drehzahl größer/gleich null und kleiner der Eingangsdrehzahl der Antriebswelle. Bei geschaltetem dritten Schaltelement rotiert die zweite freie Welle des Nachschaltsatzes mit einer Drehzahl kleiner/gleich null. Bei geschaltetem vierten Schaltelement rotiert die dritte freie Welle des Nachschaltsatzes mit einer Drehzahl größer/gleich null, dabei stets kleiner als die Eingangsdrehzahl der Antriebswelle. Bei geschaltetem fünften Schaltelement rotiert die dritte freie Welle mit Eingangsdrehzahl der Antriebswelle und erzeugt somit den Direktgang und die Overdrive-Übersetzungen.

In einer dritten Lösung der Aufgabe weist das erfindungsgemäße Mehrstufengetriebe wiederum sechs Schaltelemente, einen Vorschalt-Planetenradsatz und zwei als Zweisteg-Vierwellen-Getriebe gekoppelte, schaltbare Nachschalt-Planetenradsätze auf, hat sieben Vorwärtsgänge und einen Rückwärtsgang. Erfindungsgemäß wird vorgeschlagen, die erste freie Welle des Nachschaltsatzes mit zwei Schaltelementen, die zweite freie Welle des Nachschaltsatzes mit nur einem Schaltelement und die dritte freie Welle des Nachschaltsatzes mit drei Schaltelementen zu verbinden. Die vierte freie Welle ist direkt mit der Abtriebswelle des Getriebes verbunden.

Der Vorschalt-Planetenradsatz ist hierbei vorzugsweise als nicht schaltbar ausgeführt.

Gegenüber dem genannten Stand der Technik und gegenüber der ersten und zweiten erfindungsgemäßen Lösung der Aufgabe entfällt also das mit der zweiten freien Welle des Nachschaltsatzes verbundene dritte Schaltelement, zugunsten eines zusätzlichen siebten Schaltelementes, welches erfindungsgemäß als zusätzliches Schaltelement mit der ersten freien Welle des Nachschaltsatzes verbunden ist. Wie bei der ersten und zweiten erfindungsgemäßen Lösung ist gegenüber dem genannten Stand der Technik ein zusätzliches sechstes Schaltelement vorgesehen, welches erfindungsgemäß mit der dritten freien Welle des Nachschaltsatzes verbunden ist.

Beide zusätzlichen Schaltelemente sind als Bremsen ausgebildet, sodaß in derem geschalteten Zustand die dritte bzw. die erste freie Welle des Nachschaltsatzes steht. Das erste Schaltelement ist mit der ersten freien Welle des Nachschaltsatzes verbunden und rotiert in geschaltetem Zustand mit Eingangsdrehzahl der Antriebswelle. Das zweite Schaltelement ist mit der zweiten freien Welle des Nachschaltsatzes derart verbunden, daß die zweite freie Welle bei geschaltetem zweiten Schaltelement mit einer Drehzahl rotiert, die zwischen null und Eingangsdrehzahl des Antriebswelle liegt. Das geschaltete, mit der dritten freien Welle des Nachschaltsatzes verbundene vierte Schaltelement erzeugt eine Drehzahl ebenfalls zwischen null und Eingangsdrehzahl der Antriebswelle. Das gleichfalls mit der dritten freien Welle des Nachschaltsatzes verbundene fünfte Schaltelement erzeugt in geschaltetem Zustand den Direktgang und die Overdrive-Übersetzungen, die dritte frei Welle rotiert dann mit Eingangsdrehzahl der Antriebswelle.

In einer vierten erfindungsgemäßen Lösung der Aufgabe weist das Mehrstufengetriebe nunmehr sieben Schaltelemente, einen Vorschalt-Planetenradsatz oder zwei gekoppelte Vorschalt-Planetenradsätze auf, sowie zwei als Zweisteg-Vierwellen-Getriebe gekoppelte, schaltbare Nachschalt-Planetenradsätze. Insgesamt sind mindestens zehn Vorwärtsgänge und ein Rückwärtsgang schaltbar. Erfindungsgemäß wird vorgeschlagen, die erste und zweite freie Welle des Nachschaltsatzes mit je zwei Schaltelementen und die dritte freie Welle des Nachschaltsatzes mit drei Schaltelementen zu verbinden.

Vorzugsweise ist der einzige Vorschalt-Planetenradsatz bzw. sind beide gekoppelte Vorschalt-Planetenradsätze als nicht schaltbar ausgeführt.

Wie bei der dritten erfindungsgemäßen Lösung der Aufgabe ist also die dritte und die erste freie Welle des Nachschaltsatzes mit je einem gegenüber dem genannten Stand der Technik zusätzlichen Schaltelement verbunden. Das gegenüber der erfindungsgemäßen dritten Lösung zusätzliche Schaltelement ermöglicht das Schalten von mindestens drei weiteren Vorwärtsgängen.

In einer Ausbildung der vierten erfindungsgemäßen Lösung mit nur einem nicht schaltbaren Vorschalt-Planetenradsatz weist das erfindungsgemäße Mehrstufengetriebe insgesamt zehn Vorwärtsgänge und einen Rückwärtsgang auf. In einer anderen Ausbildung der vierten erfindungsgemäßen Lösung wird vorgeschlagen, den Vorschaltsatz aus zwei gekoppelten, nicht schaltbaren Vorschalt-Planetenradsätzen zu bilden, wodurch in Verbindung mit den sieben Schaltelementen insgesamt zwölf Vorwärtsgänge und ein Rückwärtsgang realisiert werden.

Bei dem erfindungsgemäßen Mehrstufengetriebe gemäß der vierten Lösung ist das erste Schaltelement stets mit der ersten freien Welle des Nachschaltsatzes verbunden und mit der Antriebswelle verbindbar, sodaß die erste freie Welle bei geschaltetem ersten Schaltelement mit Eingangsdrehzahl der Antriebswelle rotiert. Das zweite Schaltelement ist mit der zweiten freien Welle des Nachschaltsatzes verbunden, welche bei geschaltetem zweiten Schaltelement dann mit einer Drehzahl zwischen null und Eingangsdrehzahl der Antriebswelle rotiert. Das dritte Schaltelement ist als Bremse ausgebildet und mit der zweiten freien Welle des Nachschaltsatzes verbunden, sodaß diese bei geschaltetem dritten Schaltelement steht. Das vierte Schaltelement ist mit der dritten freien Welle des Nachschaltsatzes verbunden. Ist das vierte Schaltelement geschaltet, so rotiert die dritte freie Welle stets mit einer Drehzahl, die kleiner als die Eingangsdrehzahl der Antriebswelle und größer als null ist. Das fünfte Schaltelement ist ebenfalls mit der dritten freien Welle des Nachschaltsatzes verbunden, rotiert in geschaltetem Zustand mit Eingangsdrehzahl der Antriebswelle und erzeugt somit den Direktgang und die Overdrive-Übersetzungen. Wie bei der ersten und dritten erfindungsgemäßen Lösung der Aufgabe ist die dritte freie Welle des Nachschaltsatzes mit einem gegenüber den genannten Stand der Technik zusätzlichen sechsten Schaltelement verbunden. Erfindungsgemäß ist das sechste Schaltelement als Bremse ausgebildet, sodaß in dessem geschalteten Zustand die dritte freie Welle des Nachschaltsatzes steht. Das gegenüber dem genanntene Stand der Technik zusätzliche siebte Schaltelement ist erfindungsgemäß - wie bei der dritten erfindungsgemäßen Lösung der Aufgabe - mit der ersten freien Welle des Nachschaltsatzes verbunden. Ist das siebte Schaltelement geschaltet, so rotiert die erste freie Welle stets mit einer Drehzahl kleiner der Eingangsdrehzahl der Antriebswelle.

In vorteilhaften Ausführungsformen aller vier erfindungsgemäßen Lösungen der Aufgabe ist die erste und die zweite freie Welle des Zweisteg-Vierwellen-Getriebes jeweils als Zentralrad des Nachschaltsatzes ausgebildet, dabei insbesondere jeweils als Sonnenrad, sowie die dritte freie Welle als Steg. Selbstverständlich können in anderen Ausgestaltungen des erfindungsgemäßen Mehrstufengetriebes auch andere mechanische Koppelungen der Bauteilkomponenten innerhalb des als Zweisteg-Vierwellen-Getriebe ausgebildeten Nachschaltsatzes vorgesehen sein.

Aus den Unteransprüchen gehen bevorzugte Ausgestaltungen der Erfindung hervor, bei denen mit einer möglichst kleinen Anzahl von Schaltelementen und Planetenradsätzen möglichst viele Gänge schaltbar und die Mehrstufengetriebe entsprechend kostengünstig herstellbar sind.

Im folgenden wird die Erfindung und deren Ausgestaltungen im Zusammenhang mit den Figuren näher erläutert. Es zeigen:
- Figuren 1A und 1B eine erste Ausführungsform eines erfindungsgemäßen Mehrstufengetriebe mit sieben Vorwärtsgängen und einem Rückwärtsgang (gemäß der ersten Lösung der Aufgabe);
- Figuren 2A und 2B eine zweite Ausführungsform eines erfindungsgemäßen Mehrstufengetriebes mit sieben Vorwärtsgängen und einem Rückwärtsgang (gemäß der zweiten Lösung der Aufgabe);
- Figuren 3A und 3B eine dritte Ausführungsform eines erfindungsgemäßen Mehrstufengetriebes mit sieben Vorwärtsgängen und einem Rückwärtsgang (gemäß der zweiten Lösung der Aufgabe);
- Figuren 3C und 3D eine Weiterbildung der dritten Ausführungsform eines erfindungsgemäßen Mehrstufengetriebes;
- Figuren 4A und 4B eine vierte Ausführungsform eines erfindungsgemäßen Mehrstufengetriebes mit sieben Vorwärtsgängen und einem Rückwärtsgang (gemäß der zweiten Lösung der Aufgabe);
- Figuren 5A und 5B eine fünfte Ausführungsform eines erfindungsgemäßen Mehrstufengetriebes mit zehn Vorwärtsgängen und einem Rückwärtsgang (gemäß der zweiten Lösung der Aufgabe);
- Figuren 6A und 6B eine sechste Ausführungsform eines erfindungsgemäßen Mehrstufengetriebes mit sieben Vorwärtsgängen und einem Rückwärtsgang (gemäß der zweiten Lösung der Aufgabe);
- Figuren 7A und 7B eine siebte Ausführungsform eines erfindungsgemäßen Mehrstufengetriebes mit sieben Vorwärtsgängen und einem Rückwärtsgang (gemäß der zweiten Lösung der Aufgabe);
- Figuren 8A und 8B eine achte Ausführungsform eines erfindungsgemäßen Mehrstufengetriebes mit sieben Vorwärtsgängen und einem Rückwärtsgang (gemäß der zweiten Lösung der Aufgabe);
- Figuren 9A und 9B eine neunte Ausführungsform eines erfindungsgemäßen Mehrstufengetriebes mit sieben Vorwärtsgängen und einem Rückwärtsgang (gemäß der zweiten Lösung der Aufgabe);
- Figuren 10A und 10B eine zehnte Ausführungsform eines erfindungsgemäßen Mehrstufengetriebes mit sieben Vorwärtsgängen und einem Rückwärtsgang (gemäß der dritten Lösung der Aufgabe);
- Figuren 11A und 11B eine elfte Ausführungsform eines erfindungsgemäßen Mehrstufengetriebes mit sieben Vorwärtsgängen und einem Rückwärtsgang (gemäß der dritten Lösung der Aufgabe);
- Figuren 12A und 12B eine zwölfte Ausführungsform eines erfindungsgemäßen Mehrstufengetriebes mit zehn Vorwärtsgängen und einem Rückwärtsgang (gemäß der vierten Lösung der Aufgabe);
- Figuren 13A und 13B eine dreizehnte Ausführungsform eines erfindungsgemäßen Mehrstufengetriebes mit zehn Vorwärtsgängen und einem Rückwärtsgang (gemäß der vierten Lösung der Aufgabe);
- Figur 13C und 13D eine Weiterbildung der zehnten und/oder elften und/oder dreizehnten Ausführungsform eines erfindungsgemäßen Mehrstufengetriebes;
- Figuren 14A und 14B eine vierzehnte Ausführungsform eines erfindungsgemäßen Mehrstufengetriebes mit zehn Vorwärtsgängen und einem Rückwärtsgang (gemäß der vierten Lösung der Aufgabe); und
- Figuren 15A und 15B eine fünfzehnte Ausführungsform eines erfindungsgemäßen Mehrstufengetriebes mit zwölf Vorwärtsgängen und einem Rückwärtsgang (gemäß der vierten Lösung der Aufgabe).

In den Figuren sind entsprechend der jeweiligen Ausführungsform des Mehrstufengetriebes das Kraftflußschema (Figuren-Index A bzw. C) sowie die Schaltlogik mit zugehörigen beispielhaften Übersetzungen der einzelnen Gänge, Gangstufung, Getriebespreizung und Standübersetzungen der einzelnen Planetenradsätze (Figuren-Index B bzw. D) dargestellt.

Um gegenüber der DE-P P 199 49 507.4 vergleichsweise kostengünstig herstellbare Mehrstufengetriebe mit möglichst wenigen Planetenradsätzen und dennoch mindestens sieben ohne Gruppenschaltung schaltbaren Vorwärtsgängen zu schaffen, insbesondere für Personenkraftwagen, Busse und Lastkraftwagen, sind die einzelnen Schaltelemente des Getriebes entsprechend der im folgenden detailliert beschriebenen fünfzehn erfindungsgemäßen Ausführungsformen mit den einzelnen freien Wellen des schaltbaren Nachschaltsatzes verbunden. Durch diese jeweiligen erfindungsgemäßen Anbindungen der Schaltelemente an den schaltbaren Nachschaltsatz sind die im nicht schaltbaren bzw. schaltbaren Vorschaltsatz erzeugten Drehzahlen neben der Eingangsdrehzahl der Antriebswelle in Abhängigkeit der betätigten Schaltelemente auf den Nachschaltsatz übertragbar.

In allen Figuren ist mit 1 eine Antriebswelle des Getriebes und mit 2 eine Abtriebswelle des Getriebes bezeichnet. Das Getriebe weist jeweils einen Vorschaltsatz VS und einen schaltbaren Nachschaltsatz NS auf. Die Antriebswelle 1 rotiert mit einer Eingangsdrehzahl n und die Abtriebswelle 2 mit einer Ausgangsdrehzahl nns des Nachschaltsatzes NS. Mit NS1 und NS2 sind ein erster und ein zweiter schaltbarer Nachschalt-Planetenradsatz bezeichnet, mit VS1 ein nicht schaltbarer oder schaltbarer erster Vorschalt-Planetenradsatz, sowie mit VS2 ein je nach Ausführungsform vorhandener nicht schaltbarer zweiter Vorschalt-Planetenradsatz. Der erste Vorschalt-Planetenradsatz VS1 umfaßt ein Sonnenrad 11, einen Steg 15 mit Planetenrädern 12 und ein Hohlrad 13. Analog zu dieser Nomenklatur sind mit 21, 31 und 41 jeweils Sonnenräder, mit 25, 35 und 45 jeweils Stege mit Planetenrädern 22, 32 und 42, sowie mit 23, 33 und 43 jeweils Hohlräder des zweiten Vorschalt-Planetenradsatzes VS2, ersten Nachschalt-Planetenradsatzes NS1 und zweiten Nachschalt-Planetenradsatzes NS2 bezeichnet. Je nach Ausführungsform sind bis zu sieben auf die Radsätze wirkende Schaltelemente (Kupplungen oder Bremsen) A, B, C, D, E sowie D', A' vorgesehen.

In allen im folgenden beispielhaft dargestellten Ausführungsformen des erfindungsgemäßen Mehrstufengetriebes ist das erste Schaltelement A mit einem ersten Zentralrad des ersten Nachschalt-Planetenradsatzes NS1 verbunden und rotiert im geschaltetem d.h. geschlossenen Zustand mit einer Drehzahl kleiner/gleich der Eingangsdrehzahl n der Antriebswelle 1. Das zweite und dritte Schaltelemente B und C ist an ein erstes Zentralrad der zweiten Nachschalt-Planetenradsatzes NS2 (als zweite freie Welle des Nachschaltsatzes NS) angeschlossen. Bezüglich der Drehzahlen an den geschalteten Schaltelementen B, C gilt:
1. Die Drehzahl an der Welle, welche die Schaltelemente B und C mit dem Zentralrad des Radsatzes NS2 verbindet, ist bei geschalteten Schaltelementen A und D kleiner/gleich als die bei betätigtem Schaltelement B bzw. C erzeugten Drehzahlen;
2. die Drehzahl an der Welle, welche die Schaltelemente B und C mit dem Zentralrad des Radsatzes NS2 verbindet, ist bei geschalteten Schaltelementen A und E größer/gleich als die bei betätigtem Schaltelement B bzw. C erzeugten Drehzahlen;

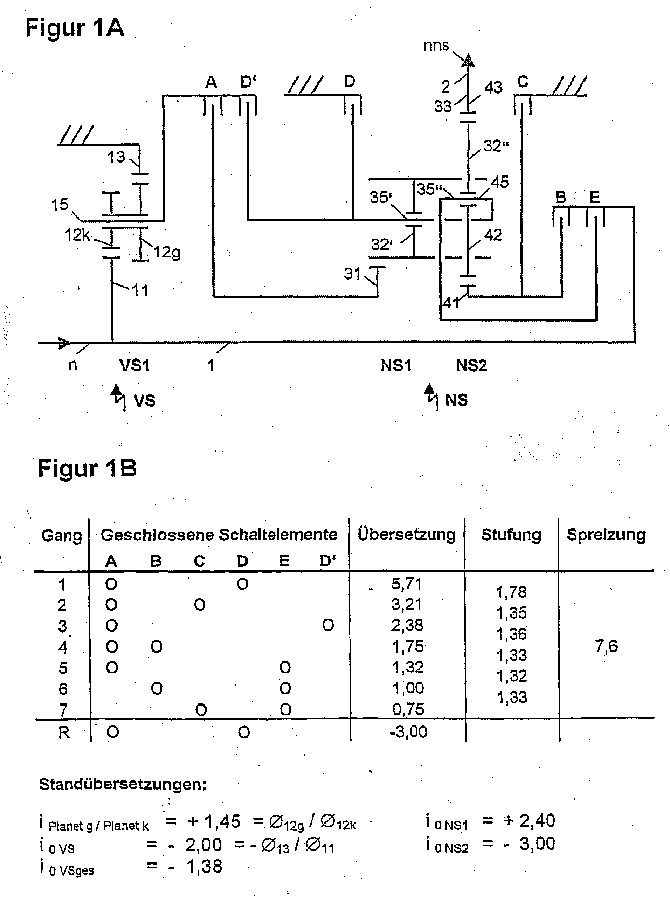

Anhand der Figuren 1A und 1B wird nun eine erste Ausführungsform eines erfindungsgemäßen Mehrstufengetriebes erläutert, beispielhaft für die erste erfindungsgemäße Lösung der Aufgabe. Hierbei weist das Mehrstufengetriebe sechs Schaltelemente A, B, C, D, E und D', einen nicht schaltbaren Vorschalt-Planetenradsatz VS1 und zwei gekoppelte, schaltbare Nachschalt-Planetenradsätze NS1 und NS2 auf, hat sieben Vorwärtsgänge und einen Rückwärtsgang. Erfindungsgemäß ist die erste freie Welle des Nachschaltsatzes NS mit einem Schaltelement A, die zweite freie Welle des Nachschaltsatzes NS mit zwei Schaltelementen B, C und die dritte freie Welle des Nachschaltsatzes NS mit drei Schaltelementen D, E, D' verbunden. Gegenüber dem vergleicharen Getriebe gemäß genanntem Stand der Technik ist also mit der dritten freien Welle des Nachschaltsatzes NS ein zusätzliches Schaltelement verbunden.

In der ersten beispielhaften erfindungsgemäßen Ausführungsform des Mehrstufengetriebes wird die erste freie Welle des als Zweisteg-Vierwellengetriebe ausgebildeten Nachschaltsatzes NS durch ein erstes Zentralrad des Nachschaltsatzes NS gebildet, konkret durch das Sonnenrad 31 des ersten Nachschalt-Planetenradsatzes NS1. Die zweite freie Welle des Nachschaltsatzes NS wird durch ein zweites Zentralrad des Nachschaltsatzes NS gebildet, konkret durch das Sonnenrad 41 des zweiten Nachschalt-Planetenradsatzes NS2. Die dritte freie Welle des Nachschaltsatzes NS wird durch einen Steg des Nachschaltsatzes gebildet, konkret durch die miteinander verbundenen Stege 45, 35', 35'' der Planetenräder 42 des zweiten Nachschalt-Planetenradsatzes NS2 und der inneren und äußeren Planetenräder 32', 32'' des ersten Nachschalt-Planetenradsatzes NS1. Die vierte freie Welle des Nachschaltsatzes wird durch ein drittes Zentralrad des Nachschaltsatzes NS gebildet, speziell durch das gemeinsame Hohlrad 33, 43 des ersten und zweiten Nachschalt-Planetenradsatzes NS1 und NS2.

Wie in Figur 1A dargestellt, ist der Vorschaltsatz VS als Minus-Planetengetriebe mit Stufenplaneten ausgeführt. Die Antriebswelle 1 (Drehzahl n) ist hierbei mit dem Sonnenrad 11 des ersten Vorschalt-Planetenradsatzes VS1 verbunden und über das als Kupplung ausgebildete fünfte Schaltelement E mit dem Steg 45 der Planetenräder 42 des zweiten Nachschalt-Planetenradsatzes NS2 und über das als Kupplung ausgebildete zweite Schaltelement B mit dem Sonnenrad 41 des zweiten Nachschalt-Planetenradsatzes NS2 verbindbar. Das Hohlrad 13 des ersten Vorschalt-Planetenradsatzes VS1 ist festgesetzt. Die Planetenräder 12 des ersten Vorschalt-Planetenradsatzes VS1 sind als Stufenplanetenräder mit kleinen Planetenrädern 12k und großen Planetenrädern 12g ausgebildet, wobei die kleinen Planetenräder 12k mit dem Sonnenrad 11 und die großen Planetenräder 12g mit dem Hohlrad 13 des ersten Vorschalt-Planetenradsatzes VS1 kämmen. Der gemeinsame Steg 15 der kleinen und großen Planetenräder 12k und 12g des ersten Vorschalt-Planetenradsatzes VS1 ist über das als Kupplung ausgebildete erste Schaltelement A mit dem Sonnenrad 31 des ersten Nachschalt-Planetenradsatzes NS1 und erfindungsgemäß über das als Kupplung ausgebildete sechste Schaltelement D' mit einem Steg 35' von inneren Planetenrädern 32' des ersten Nachschalt-Planetenradsatzes NS1 verbindbar. Der erste Nachschalt-Planetenradsatz weist also eine Doppelplaneten-Anordnung auf. Der Steg 35' der inneren Planetenräder 32' des ersten Nachschalt-Planetenradsatzes NS1 ist auch über das als Bremse ausgebildete vierte Schaltelement D festsetzbar. Das Sonnenrad 41 des zweiten Nachschalt-Planetenradsatzes NS2 über das als Bremse ausgebildete dritte Schaltelement C festsetzbar. Der Steg 35' der inneren Planetenräder 32' des ersten Nachschalt-Planetenradsatzes NS1 ist mit einem Steg 35'' von äußeren Planetenrädern 32'' des ersten Nachschalt-Planetenradsatzes NS1 und mit dem Steg 45 der Planetenräder 42 des zweiten Nachschalt-Planetenradsatzes NS2 gekoppelt. Die äußeren Planetenräder 32'' des ersten Nachschalt-Planetenradsatzes NS1 und die Planetenräder 42 des zweiten Nachschalt-Planetenradsatzes NS2 sind ebenfalls gekoppelt. Das Hohlrad 33 des ersten Nachschalt-Planetenradsatzes NS1 und das Hohlrad 43 des zweiten Nachschalt-Planetenradsatzes NS2 sind zusammengefaßt und mit der Abtriebswelle 2 (Drehzahl nns) verbunden.

Erfindungswesentlich bei der in Figur 1A gezeigten ersten Ausführungsform ist, daß die dritte freie Welle des als Zweisteg-Vierwellengetriebes ausgebildeten Nachschaltsatzes NS, an welcher die Kupplung E und die Bremse D angeschlossen sind, ein gegenüber dem genannten Stand der Technik zusätzliches Schaltelement D' aufweist, dessen Drehzahl in geschaltetem Zustand größer null und kleiner als die Eingangsdrehzahl n der Antriebswelle 1 liegt.

Durch selektives Schalten der sechs Schaltelemente A, B, C, D, E, D' können gemäß der in Figur 1B dargestellten Schaltlogik insgesamt sieben Vorwärtsgänge und ein Rückwärtsgang ohne Gruppenschaltung geschaltet werden, mit günstiger Gangabstufung und guter Spreizung.

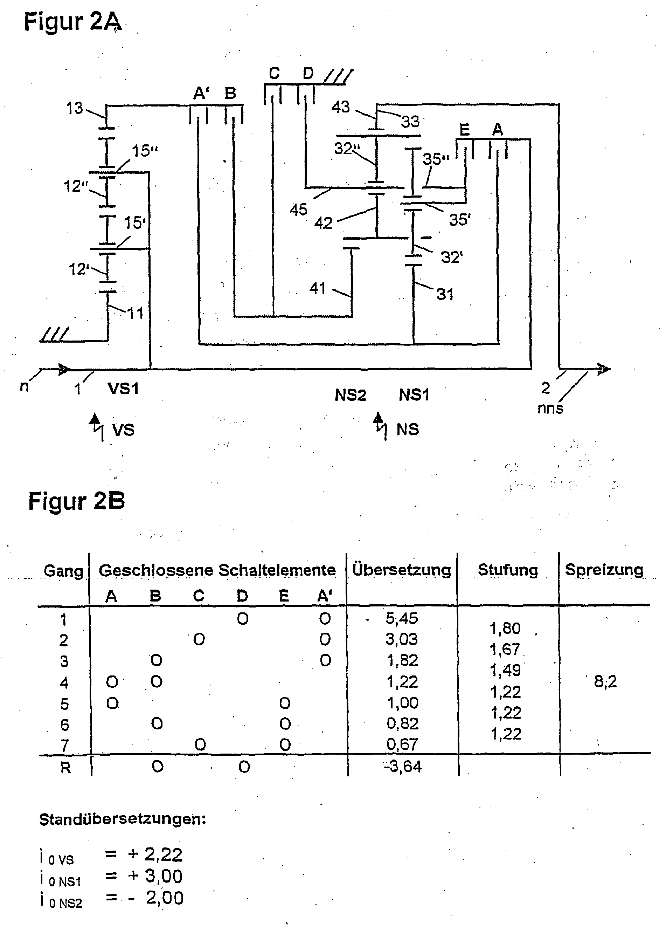

Figur 2A zeigt nun eine zweite Ausführungsform eines erfindungsgemäßen Mehrstufengetriebes, beispielhaft für die zweite erfindungsgemäße Lösung der Aufgabe. Im Unterschied zur ersten erfindungsgemäßen Ausführungsform ist anstelle des mit der dritten freien Welle des Nachschaltsatzes NS verbundenen sechsten Schaltelementes D' nunmehr an der ersten freien Welle des als Zweisteg-Vierwellen-Getriebes ausgebildeten Nachschaltsatzes NS, an welcher das erste Schaltelement A angeschlossen ist, ein gegenüber dem genannten Stand der Technik zusätzliches, siebtes Schaltelement A' angeschlossen.

Die Antriebswelle 1 (Drehzahl n) ist hierbei mit einem Steg 15' von inneren Planetenrädern 12' des ersten Vorschalt-Planetenradsatzes VS1 und einem Steg 15'' von äußeren Planetenrädern 12'' des ersten Vorschalt-Planetenradsatzes VS1 verbunden, sowie über das als Kupplung ausgebildete erste Schaltelement A mit dem Sonnenrad 31 des ersten Nachschalt-Planetenradsatzes NS1 und über das als Kupplung ausgebildete fünfte Schaltelement E über den Steg 35'' der aäßeren Planetenräder 32'' des ersten Nachschalt-Planetenradsatzes NS1 mit einem Steg 45 von Planetenrädern 42 des zweiten Nachschalt-Planetenradsatzes NS2 verbindbar. Der Steg 45 des zweiten Nachschalt-Planetenradsatzes NS2 ist somit mit beiden Stegen 35'' und 35' des ersten Nachschalt-Planetenradsatzes NS1 verbunden. Die äußeren Planetenräder 32'' des ersten Nachschalt-Planetenradsatzes NS1 und die Planetenräder 42 des zweiten Nachschalt-Planetenradsatzes NS2 sind zusammengefaßt. Das Hohlrad 13 des ersten, nicht schaltbaren Vorschalt-Planetenradsatzes VS1 ist über das als Kupplung ausgebildete zusätzliche siebte Schaltelement A' mit dem Sonnenrad 31 des ersten Nachschalt-Planetenradsatzes NS1 und über das als Kupplung ausgebildete zweite Schaltelement B mit dem Sonnenrad 41 des zweiten Nachschalt-Planetenradsatzes NS2 verbindbar. Das Sonnenrad 41 des zweiten Nachschalt-Planetenradsatzes NS2 ist über das als Bremse ausgebildete dritte Schaltelement C und der Steg 45 des zweiten Nachschalt-Planetenradsatzes NS2 über das als Bremse ausgebildete vierte Schaltelement D festsetzbar. Das Hohlrad 33 des ersten Nachschalt-Planetenradsatzes NS1 und das Hohlrad 43 des zweiten Nachschalt-Planetenradsatzes NS2 sind mit der Abtriebswelle 3 (Drehzahl nns) des Getriebes verbunden.

Gemäß der in Figur 2B dargestellten Schaltlogik können durch selektives Schalten der sechs Schaltelemente insgesamt sieben Vorwärtsgänge und ein Rückwärtsgang ohne Gruppenschaltung geschaltet werden. Die Gangabstufung ist dabei sehr harmonisch und die Spreizung groß. In einer Ausgestaltung der zweiten Ausführungsform des erfindungsgemäßen Mehrstufengetriebes kann vorgesehen sein, daß der dritte Gang über die Betätigung der Schaltelemente C und A geschaltet wird, anstelle durch Betätigung der Schaltelemente B und A'.

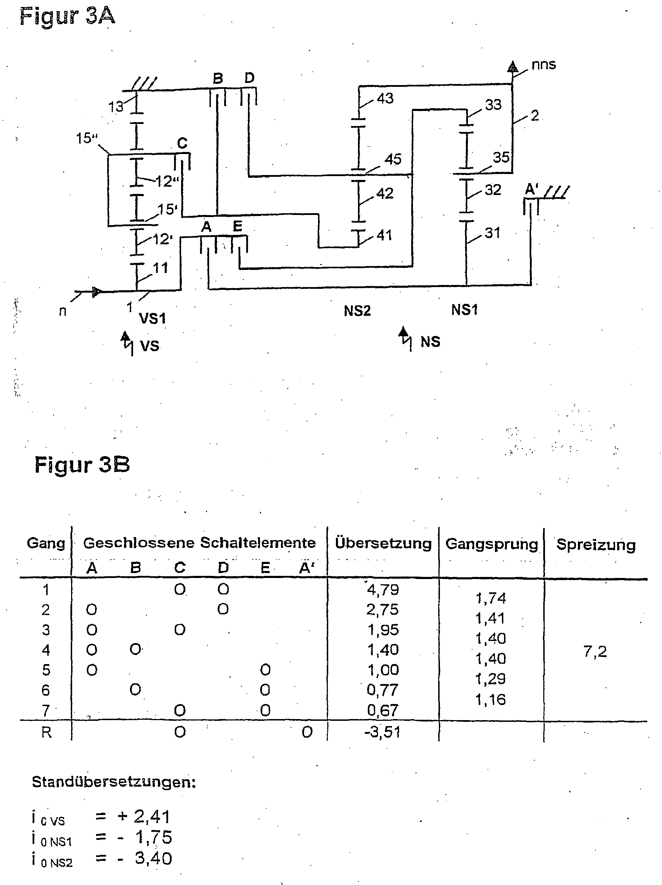

Anhand der Figuren 3A und 3B wird nun beispielhaft eine dritte Ausführungsform eines erfindungsgemäßen Mehrstufengetriebes erläutert, die bezüglich der Anzahl von Radsätzen und Schaltelementen im Vorschalt- und Nachschaltsatz vergleichbar ist mit der in Figur 2A dargestellten zweiten Ausführungsform. Auch hier ist die freie Welle des als Zweisteg-Vierwellen-Getriebe ausgebildeten Nachschaltsatzes NS, an welcher die erste Kupplung A angeschlossen ist, mit einem gegenüber dem genannten Stand der Technik zusätzliches sechstes Schaltelement A' verbunden.

Der Vorschaltsatz VS weist dabei nur einen als Doppelplanetenradsatz ausgebildeten ersten, nicht schaltbaren Vorschalt-Planetenradsatz VS1 auf, mit einem Sonnenrad 11, einem Hohlrad 13, sowie zwei gekoppelten Stegen 15', 15'' mit inneren und äußeren Planeteträdern 12', 12''. Die beiden Nachschalt-Planetenradsätzen NS1 und NS2 des Nachschaltsatzes NS sind jeweils als einfache Planetenradsätze ausgebildet.

Wie in Figur 3A dargestellt, ist die Antriebswelle 1 (Drehzahl n) mit dem Sonnenrad 11 des Vorschalt-Planetenradsatzes VS1 verbunden und über das als Kupplung ausgebildetet erste Schaltelement A mit dem Sonnenrad 31 des ersten Nachschalt-Planetenradsatzes NS1 und über das als Kupplung ausgebildete fünfte Schaltelement E mit dem Steg 45 der Planetenräder 42 des zweiten Nachschalt-Planetenradsatzes NS2 verbindbar. Das Hohlrad 13 des ersten Vorschalt-Planetenradsatzes VS1 ist festgesetzt. Das Sonnenrad 41 des zweiten Nachschalt-Planetenradsatzes NS2 ist über das als Kupplung ausgebildete dritte Schaltelement C mit dem Steg 15'' der äußeren Planetenräder 12'' des ersten Vorschalt-Planetenradsatzes VS1 und dessen angekoppelten Steg 15' der inneren Planetenräder 12' verbindbar. Das Sonnenrad 41 des zweiten Nachschalt-Planetenradsatzes NS2 ist über das als Bremse ausgebildete zweite Schaltelement B festsetzbar. Der Steg 45 des zweiten Nachschalt-Planetenradsatzes NS2 und das Hohlrad 33 des ersten Nachschalt-Planetenradsatzes NS1 sind miteinander verbunden und über das als Bremse ausgebildete vierte Schaltelement D festsetzbar. Das Sonnenrad 31 ersten Nachschalt-Planetenradsatzes NS1 ist über das zusätzliche sechste Schaltelement A' festsetzbar. Der Steg 35 der Planetenräder 32 des ersten Nachschalt-Planetenradsatzes NS1 und das Hohlrad 43 des zweiten Nachschalt-Planetenradsatzes NS2 und die Abtriebswelle 3 (Drehzahl nns) sind miteinander verbunden.

Durch selektives Schalten der sechs Schaltelemente können gemäß der in Figur 3B dargestellten Schaltlogik insgesamt sieben Vorwärtsgänge und ein Rückwärtsgang geschaltet werden.

Der Vorteil dieser dritten Ausführungsform des erfindungsgemäßen Mehrstufengetriebes gegenüber dem genannte Stand der Technik liegt darin, daß anstelle der vierten Kupplung eine dritte Bremse eingesetzt wird, mit dem entsprechend günstigen konstruktiven und fertigungstechnischen Aufwand für die Druckzuführungen.

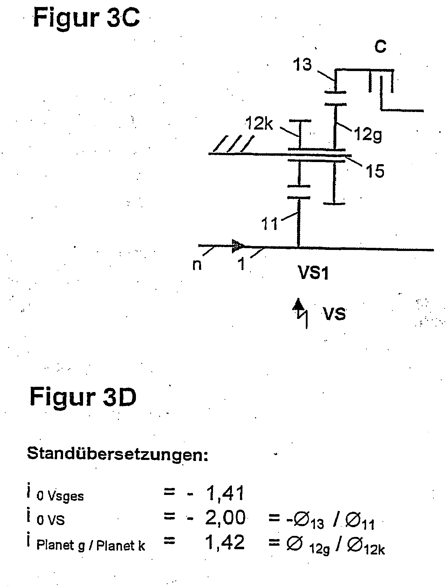

In einer Weiterbildung der dritten Ausführungsform des erfindungsgemäßen Mehrstufengetriebes wird vorgeschlagen, den Vorschaltsatz VS als Minus-Getriebe mit einem Stufenplaneten auszuführen. Diese Ausgestaltung des Vorschaltsatzes VS ist in Figur 3C dargestellt. Hierbei ist die Antriebswelle 1 (Drehzahl n) mit dem Sonnenrad 11 des ersten nicht schaltbaren Vorschalt-Planetenradsatzes VS1 verbunden. Der Steg 15 mit gekoppelten großen und kleinen Planetenrädern 12g und 12k des Vorschalt-Planetenradsatzes VS1 ist festgesetzt. An das Hohlrad 13 des ersten Vorschalt-Planetenradsatzes VS1 ist die Kupplung C angeschlossen. Das Sonnenrad 11 des ersten Vorschalt-Planetenradsatzes VS1 kämmt hierbei mit den kleinen Planetenrädern 12k des Vorschalt-Planetenradsatzes VS1, während die großen Planetenräder 12g des Vorschalt-Planetenradsatzes VS1 mit dessen Hohlrad 13 kämmen. Figur 3D zeigt die Standübersetzung des ersten Vorschalt-Planetenradsatzes VS1 dieser Weiterbildung der dritten Ausführungsform eines erfindungsgemäßen Mehrstufengetriebes. Der solchermaßen ausgebildete erste Vorschalt-Planetenradsatzes VS1 weist gegenüber der Ausgestaltung gemäß Figur 3A eine niedrigere relative Planetendrehzahl und einen besseren Wirkungsgrad auf.

In einer anderen Weiterbildung der dritten Ausführungsform des erfindungsgemäßen Mehrstufengetriebes kann die Bremse A' auch durch eine Kupplung D' ersetzt werden. Wird diese Weiterbildung aus der Ausführungsform gemäß Figur 3A abgeleitet, so ist diese Kupplung D' dann an den gekoppelten Stegen 15' und 15'' des ersten Vorschalt-Planetenradsatzes VS1 und am Steg 45 des zweiten Nachschalt-Planetenradsatzes NS2 angeschlossen. Wird diese Weiterbildung aus der Ausführungsform gemäß Figur 3C abgeleitet, so ist diese Kupplung D' dann am Hohlrad 13 des ersten Vorschalt-Planetensatzes VS1 und am Steg 45 des zweiten Nachschalt-Planetenradsatzes NS2 angeschlossen. In vorteilhafter Weise ermöglicht die Kupplungs- und Radsatzanordnung dieser Weiterbildung der vierten Ausführungsform eine Koaxialbauweise des Mehrstufengetriebes.

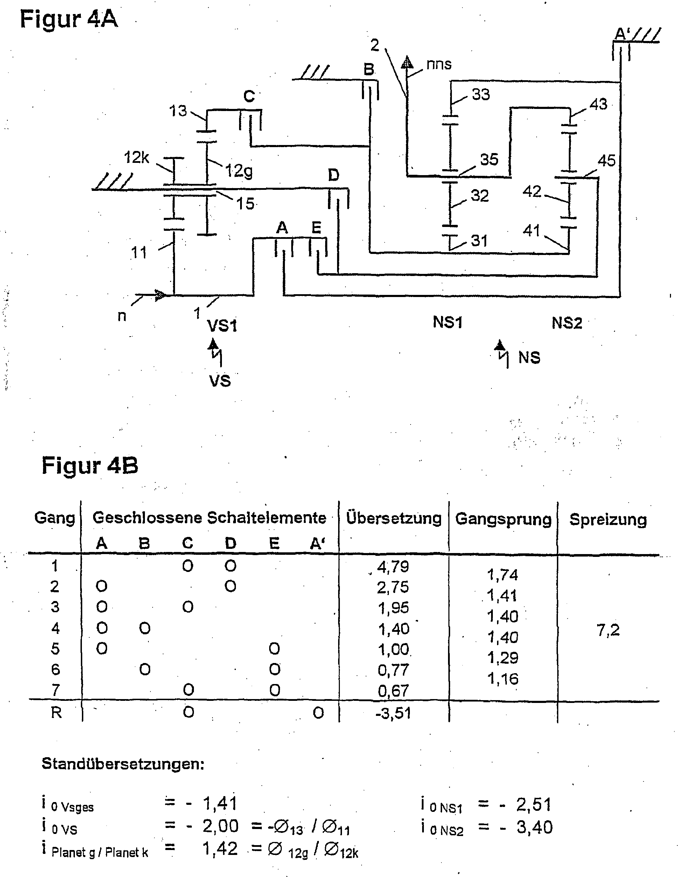

Als ein weiteres Beispiel für die zweite erfindungsgemäße Lösung der Aufgabe zeigt Figur 4A eine vierte Ausführungsform eines erfindungsgemäßen Mehrstufengetriebes. Hierin wird vorgeschlagen, den Vorschaltsatz VS als nicht schaltbares Minus-Getriebe mit einem Stufenplaneten auszubilden. Dabei kämmt das Sonnenrad 11 des ersten Vorschalt-Planetenradsatzes VS1 mit den kleinen Planetenrädern 12k des Vorschalt-Planetenradsatzes VS1, während die großen Planetenräder 12g des Vorschalt-Planetenradsatzes VS1 mit dessen Hohlrad 13 kämmen. Die Antriebswelle 1 (Drehzahl n) ist mit dem Sonnenrad 11 des ersten Vorschalt-Planetenradsatzes VS1 verbunden und über das als Kupplung ausgebildete erste Schaltelement A mit dem Hohlrad 33 des ersten Nachschalt-Planetenradsatzes NS1 und über das als Kupplung ausgebildete fünfte Schaltelement E mit dem Steg 45 der Planetenräder 42 des zweiten Nachschalt-Planetenradsatzes NS2 verbindbar. Der Steg 15 mit den gekoppelten großen und kleinen Planetenrädern 12g, 12k des Vorschalt-Planetenradsatzes VS1 ist festgesetzt. Das Sonnenrad 31 des ersten Nachschalt-Planetenradsatzes NS1 und das Sonnenrad 41 des zweiten Nachschalt-Planetenradsatzes NS2 sind miteinander verbunden und über das als Bremse ausgeführte zweite Schaltelement B festsetzbar. Das Hohlrad 13 des ersten Vorschalt-Planetenrad-satzes VS1 ist über das als Kupplung ausgebildete dritte Schaltelement C mit dem Sonnenrad 31 ersten Nachschalt-Planetenradsatzes NS1 und dem angekoppelten Sonnenrad 41 des zweiten Nachschalt-Planetenradsatzes NS2 verbindbar. Der Steg 45 des zweiten Nachschalt-Planetenradsatzes NS2 ist über das als Bremse ausgebildete vierte Schaltelement D festsetzbar, vorzugsweise über den Steg 15 des ersten Vorschalt-Planetenradsatzes VS1. Das Hohlrad 33 ersten Nachschalt-Planetenradsatzes NS1 ist über das zusätzliche sechste Schaltelement A' festsetzbar. Der Steg 35 der Planetenräder 32 des ersten Nachschalt-Planetenradsatzes NS1 und das Hohlrad 43 des zweiten Nachschalt-Planetenradsatzes NS2 sind miteinander und mit der Abtriebswelle 3 (Drehzahl nns) verbunden.

Durch selektives Schalten der sechs Schaltelemente können gemäß der in Figur 4B dargestellten Schaltlogik insgesamt sieben Vorwärtsgänge und ein Rückwärtsgang geschaltet werden.

Der Vorteil dieser vierten Ausführungsform eines erfindungsgemäßen Mehrstufengetriebes gegenüber der dritten Ausführungsform besteht zum einen darin, daß die Sonnenräder 31 und 41 im Nachschaltsatz fertigungstechnisch günstig auf einer Welle angeordnet sind. Zum anderen weist der als Minusgetriebe ausgebildete erste Vorschalt-Planetenradsatz VS1 gegenüber der Ausgestaltung gemäß Figur 3A eine niedrigere relative Planetendrehzahl und einen besseren Wirkungsgrad auf.

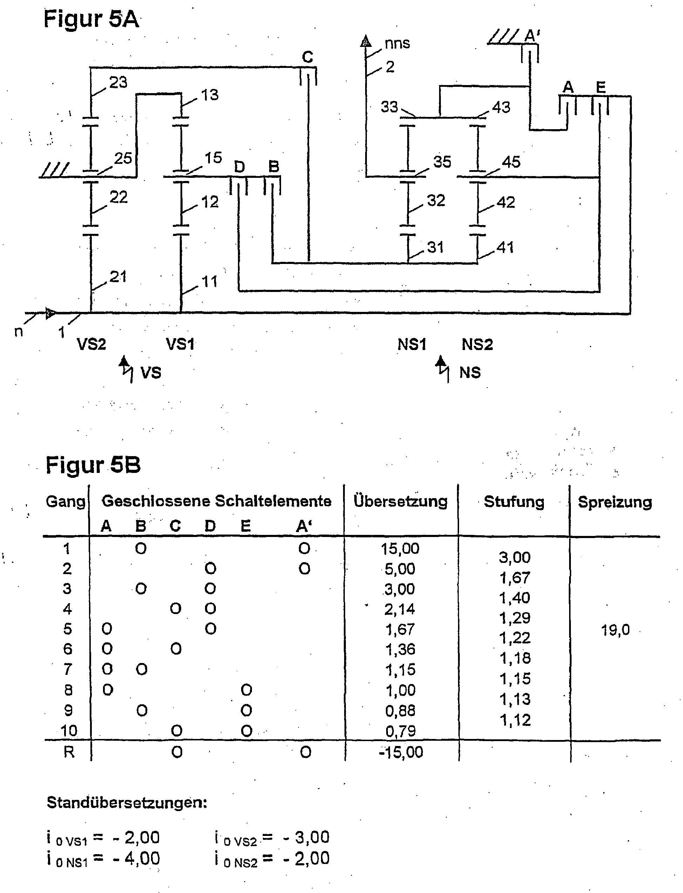

Beispielhaft für die zweite erfindungsgemäße Lösung der Aufgabe zeigt Figur 5A nun eine fünfte Ausführungsform eines erfindungsgemäßen Mehrstufengetriebes, welche wie die zuvor beschriebenen Ausführungsformen der Figuren 2A, 3A und 4A an der freien Welle des Nachschaltsatzes NS, an welcher die erste Kupplung A angeschlossen ist, ein gegenüber dem genannten Stand der Technik zusätzliches sechstes Schaltelement A' aufweist.

Der Vorschaltsatz VS weist nunmehr zwei gekoppelte, nicht schaltbare Vorschalt-Planetenradsätze VS1 und VS2 auf. Die Antriebswelle 1 (Drehzahl n) ist hierbei mit dem Sonnenrad 21 des zweiten Vorschalt-Planetenradsatzes VS2 und dem Sonnenrad 11 des ersten Vorschalt-Planetenradsatzes VS1 verbunden und über das als Kupplung ausgebildete fünfte Schaltelement E mit dem Steg 45 der Planetenräder 42 des zweiten Nachschalt-Planetenradsatzes NS2 verbindbar, sowie über das als Kupplung ausgebildete erste Schaltelement A mit dem Hohlrad 43 des zweiten Nachschalt-Planetenradsatzes NS2. Der Steg 25 der Planetenräder 22 des zweiten Vorschalt-Planetenradsatzes VS2 und das Hohlrad 13 des ersten Vorschalt-Planetenradsatzes VS1 sind festgesetzt. Das Sonnenrad 31 des ersten Nachschalt-Planetenradsatzes NS1 und das Sonnenrad 41 des zweiten Nachschalt-Planetenradsatzes NS2 sind miteinander verbunden und über das als Kupplung ausgebildete dritte Schaltelement C mit dem Hohlrad 23 des zweiten Vorschalt-Planetenradsatzes VS2 verbindbar, sowie über das als Kupplung ausgebildete zweite Schaltelement B mit dem Steg 15 der Planetenräder 12 des ersten Vorschalt-Planetenradsatzes VS1. Der Steg 15 des ersten Vorschalt-Planetenradsatzes VS1 ist über das als Kupplung ausgebildete vierte Schaltelement D mit dem Steg 45 des zweiten Nachschalt-Planetenradsatzes NS2 verbindbar. Das Hohlrad 43 des zweiten Nachschalt-Planetenradsatzes NS2 und das Hohlrad 33 ersten Nachschalt-Planetenradsatzes NS1 sind miteinander verbunden und über das als Bremse ausgebildete sechste Schaltelement A' festsetzbar. Der Steg 35 der Planetenräder 32 des ersten Nachschalt-Planetenradsatzes NS1 ist mit der Abtriebswelle 3 (Drehzahl nns) verbunden.

Durch selektives Schalten der sechs Schaltelemente können gemäß der in Figur 5B dargstellten Schaltlogik insgesamt zehn Vorwärtsgänge und ein Rückwärtsgang geschaltet werden.

Diese fünfte Ausführungsform eines erfindungsgemäßen Mehrstufengetriebes zeichnet sich durch die hohe Gangzahl und durch eine Kriechgangcharakteristik des ersten Vorwärtsgangs und des Rückwärtsgangs aus. Bedingt durch die beschriebene bauteilseitige Koppelung der Komponenten der Nachschalt-Planetenradsätze NS1, NS2 und deren kraftflußseitige Anbindung durch die Kupplungen A, E und die Bremse A' und einer vorteilhaften räumlichen Anordnung dieser drei Schaltelemente A, E, A' auf der der Antriebsseite abgewandten Getriebesseite, also in Kraftflußrichtung räumlich hinter allen vorzugsweise koaxial zur Antriebswelle 1 angeordneten Planetenradsätzen, und dem hierdurch möglichen ungefähr getriebemittigen Abtrieb eignet sich die vierte erfindungsgemäße Ausführungsform des Mehrstufengetriebes in besonderer Weise für eine Front-Quer-Anwendung, also ein Antriebssystem mit quer zum Abtrieb angeordneter Antriebsmaschine.

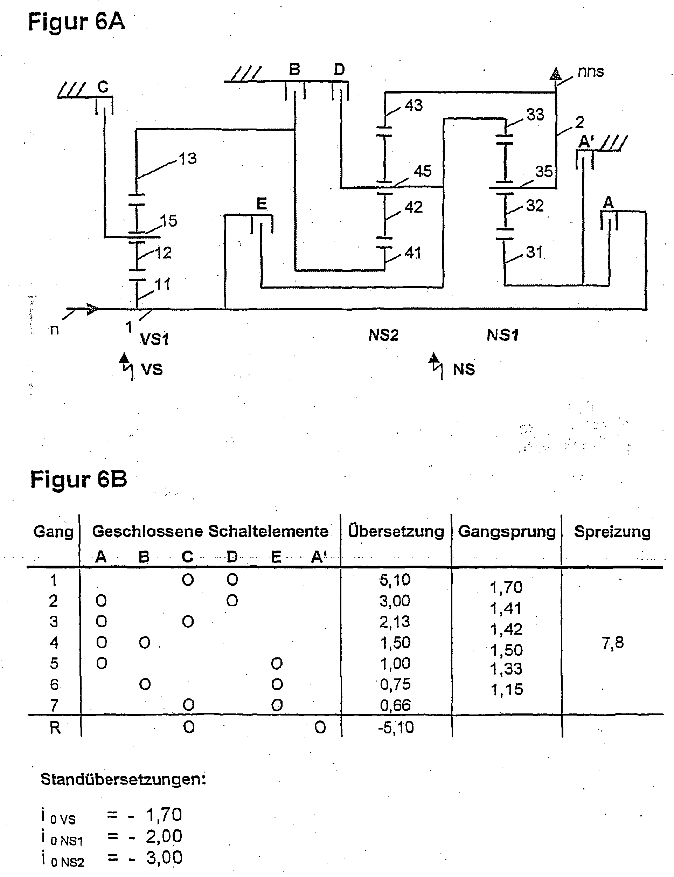

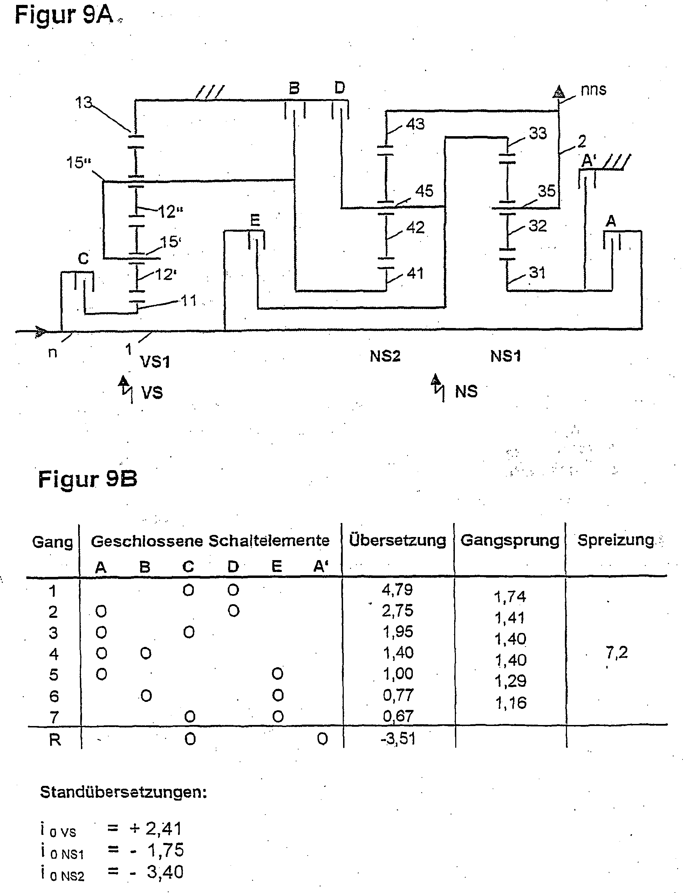

In den Figuren 6A, 6B bis 9A, 9B werden vier weitere Ausführungsformen eines Mehrstufengetriebes gemäß der zweiten Erfindung erläutert, die aus der zuvor beschriebenen dritten Ausführungsform abgeleitet sind. Wesentlich bei diesen Ausführungsformen sechs bis neun ist, daß der Vorschaltradsatz VS nunmehr schaltbar ausgebildet ist, d.h. daß durch Schließen bestimmter Schaltelemente Drehzahlen verschiedenen Komponenten des Vorschaltsatzes VS auf den (schaltbaren) Nachschaltsatz NS übertragen werden.

Alle vier Ausführungsformen sechs bis neun weisen nur einen - nunmehr schaltbaren - Vorschalt-Planetenradsatz VS1 auf, jeweils in unterschiedlicher Ausbildung. Der Nachschaltsatz NS ist jeweils identisch ausgebildet, und es sind jeweils - wie bei der dritten Ausführungsform - sechs Schaltelemente A, B, C, D, E, A' vorgesehen. Entsprechend ist die Anzahl der ohne Gruppenschaltung schaltbaren Gänge identisch.

In anderen Ausbildungen eines erfindungsgemäßen Mehrstufengetriebes können selbstverständlich auch andere Ausgestaltungen des Nachschaltsatzes NS vorgesehen sein. Selbstverständlich kann in anderen Ausbildungen eines erfindungsgemäßen Mehrstufengetriebes auch vorgesehen sein, daß der Vorschaltsatz VS zwei schaltbare Vorschalt-Planetenradsätze oder auch einen nicht schaltbaren und einen schaltbaren Vorschalt-Planetenradsatz aufweist.

Figur 6A zeigt nun die sechste Ausführungsform eines erfindungsgemäßen Mehrstufengetriebes, bei der gemäß der in Figur 6B dargestellten Schaltlogik insgesamt sieben Vorwärtsgänge und ein Rückwärtsgang ohne Gruppenschaltung schaltbar sind. In vorteilhafter Weise sind vier der sechs Schaltelemente Bremsen, entsprechend gering ist der Bauaufwand insbesondere bezüglich der Druckzuführung dieser vier Bremsen. Alle drei Planetengetriebe, also der erste Vorschalt-Planetenradsatz VS1 sowie der erste und zweite Nachschalt-Planetenradsatz NS1, NS2, sind als Minus-Getriebe ausgebildet.

Die Antriebswelle 1 (Drehzahl n) ist hierbei mit dem Sonnenrad 11 des Vorschalt-Planetenradsatzes VS1 verbunden. Der Steg 15 des Vorschalt-Planetenradsatzes VS1 mit den Planetenrädern 12 ist über das dritte als Bremse ausgebildete Schaltelement C festsetzbar. Das Hohlrad 13 des Vorschalt-Planetenradsatzes VS1 ist mit dem Sonnenrad 41 des zweiten Nachschalt-Planetenradsatzes NS2 verbunden und über das zweite als Bremse ausgebildete Schaltelement B festsetzbar. Das Sonnenrad 31 des ersten Nachschalt-Planetenradsatzes NS1 ist über das als Kupplung ausgebildete erste Schaltelement A mit der Antriebswelle 1 verbindbar und über das als Bremse ausgebildete sechste Schaltelement A' festsetzbar. Das Hohlrad 33 des ersten Nachschalt-Planetenradsatzes NS1 und der Steg 45 mit den Planetenrädern 42 des zweiten Nachschalt-Planetenradsatzes NS2 sind miteinander verbunden, über das als Bremse ausgebildete vierte Schaltelement D festsetzbar, sowie über das als Kupplung ausgebildete fünfte Schaltelement E mit der Antriebswelle 1 verbindbar. Das Hohlrad 43 des zweiten Nachschalt-Planetenradsatzes NS2 und der Steg 35 des ersten Nachschalt-Planetenradsatzes NS1 sind miteinander und mit der Abtriebswelle 2 (Drehzahl nns) verbunden.

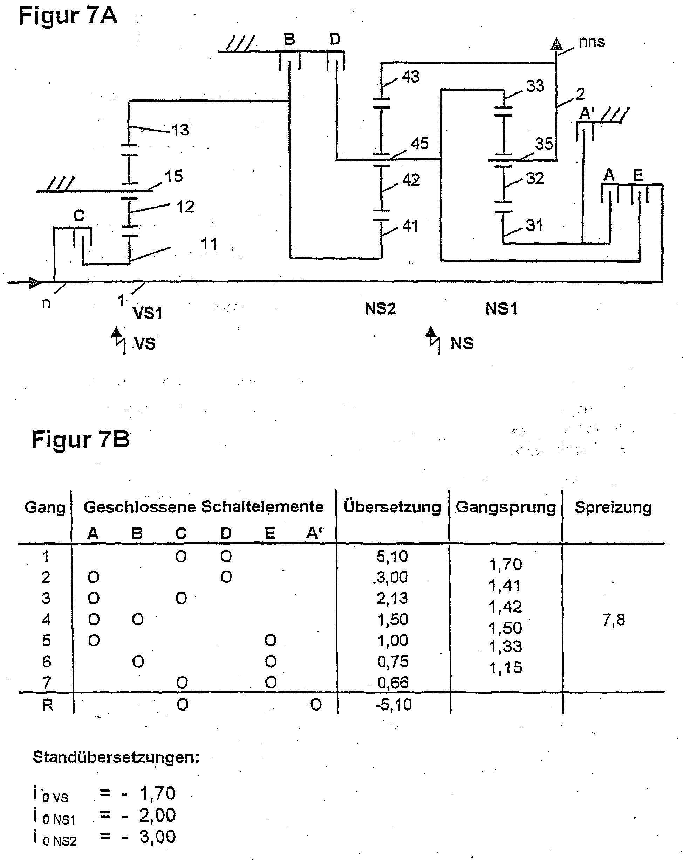

Figur 7A zeigt die siebte Ausführungsform eines erfindungsgemäßen Mehrstufengetriebes, bei der gemäß der in Figur 7B dargestellten Schaltlogik wiederum insgesamt sieben Vorwärtsgänge und ein Rückwärtsgang ohne Gruppenschaltung schaltbar sind. Gegenüber der sechsten Ausführungsform ist das dritte Schaltelement C nunmehr als Kupplung ausgebildet und das hierüber zu übertragende Drehmoment in vorteilhafter Weise geringer. Entsprechend günstiger ist deren Bauteiledimensionierung. Alle drei Planetengetriebe, also der erste Vorschalt-Planetenradsatz VS1 sowie der erste und zweite Nachschalt-Planetenradsatz NS1, NS2 sind wiederum als Minus-Getriebe ausgebildet.

Wie in Figur 7A dargestellt, ist das Sonnenrad 11 des Vorschalt-Planetenradsatzes VS1 nunmehr über das dritte als Kupplung ausgebildete Schaltelement C mit der Antriebswelle 1 (Drehzahl n) verbindbar. Der Steg 15 des Vorschalt-Planetenradsatzes VS1 mit den Planetenrädern 12 ist festgesetzt. Das Hohlrad 13 des Vorschalt-Planetenradsatzes VS1 ist mit dem Sonnenrad 41 des zweiten Nachschalt-Planetenradsatzes NS2 verbunden und über das zweite als Bremse ausgebildete Schaltelement B festsetzbar. Die Ausbildung des schaltbaren Nachschaltsatzes NS entspricht ansonsten der der sechsten Ausführungsform.

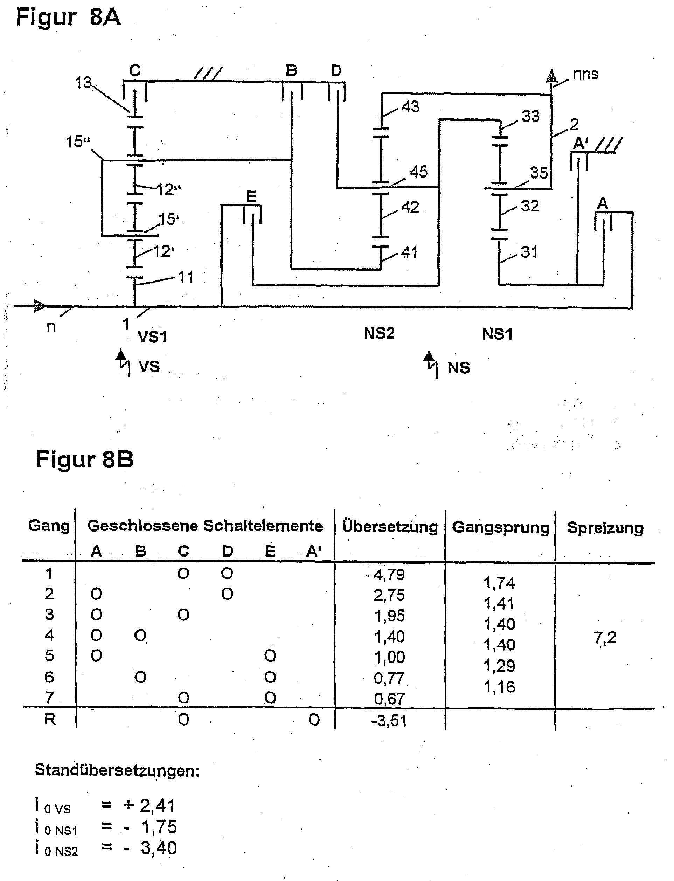

Figur 8A zeigt die achte Ausführungsform eines erfindungsgemäßen Mehrstufengetriebes, bei der gemäß der in Figur 8B dargestellten Schaltlogik wiederum insgesamt sieben Vorwärtsgänge und ein Rückwärtsgang ohne Gruppenschaltung schaltbar sind. Wie bei der sechsten Ausführungsform sind in vorteilhafter Weise vier der sechs Schaltelemente als Bremse ausgebildet, mit den bekannten Vorteilen hinsichtlich Bauaufwand. In Unterschied zu der sechsten und siebten Ausführungsform ist der Vorschalt-Planetenradsatz VS1 nunmehr als Plus-Getriebe ausgebildet. Entsprechend günstig sind die Relativdrehzahlen an den Planetenrädern des Vorschalt-Planetenradsatzes VS1. Weiterhin sind die Gangsprünge gegenüber der sechsten und siebten Ausführungsform harmonischer.

Wie in Figur 8A dargestellt, ist der erste (und einzige) schaltbare Vorschaltradsatz VS1 als Doppelplanetenradsatz ausgebildet und umfaßt ein Sonnenrad 11, ein Hohlrad 13 und zwei gekoppelte Stege 15', 15'' mit inneren und äußeren Planetenrädern 12', 12". Das Sonnenrad 11 ist mit der Antriebswelle 1 (Drehzahl n) verbunden. Das Hohlrad 13 ist über das als Bremse ausgebildete dritte Schaltelement C festsetzbar. Die gekoppelten Steg 15', 15'' sind mit dem Sonnenrad 41 des zweiten Nachschalt-Planeten-radsatzes NS2 verbunden und über das zweite als Bremse ausgebildete Schaltelement B festsetzbar. Die Ausbildung des schaltbaren Nachschaltsatzes NS entspricht ansonsten der sechsten und siebten Ausführungsform.

Figur 9A zeigt die neunte Ausführungsform eines erfindungsgemäßen Mehrstufengetriebes, bei der gemäß der in Figur 9B dargestellten Schaltlogik wiederum insgesamt sieben Vorwärtsgänge und ein Rückwärtsgang ohne Gruppenschaltung schaltbar sind. Wie bei der siebten Ausführungsform ist das dritte Schaltelement C nunmehr als Kupplung ausgebildet und das hierüber zu übertragende Drehmoment in vorteilhafter Weise geringer als das bei der sechsten und achten Ausführungsform. Wie bei der achten Ausführungsform ist der Vorschalt-Planetenradsatz VS1 als Plus-Getriebe ausgebildet.

Wie in Figur 9A dargestellt, ist der erste (und einzige) schaltbare Vorschaltradsatz VS1 als Doppelplanetenradsatz ausgebildet und umfaßt ein Sonnenrad 11, ein Hohlrad 13 und zwei gekoppelte Stege 15', 15'' mit inneren und äußeren Planetenrädern 12', 12''. Das Sonnenrad 11 ist über das dritte als Kupplung ausgebildete Schaltelement C mit der Antriebswelle 1 (Drehzahl n) verbindbar. Das Hohlrad 13 ist festgesetzt. Die gekoppelten Stege 15', 15'' sind mit dem Sonnenrad 41 des zweiten Nachschalt-Planeten-radsatzes NS2 verbunden und über das zweite als Bremse ausgebildete Schaltelement B festsetzbar. Die Ausbildung des schaltbaren Nachschaltsatzes NS entspricht ansonsten der der sechsten bis achten Ausführungsform.

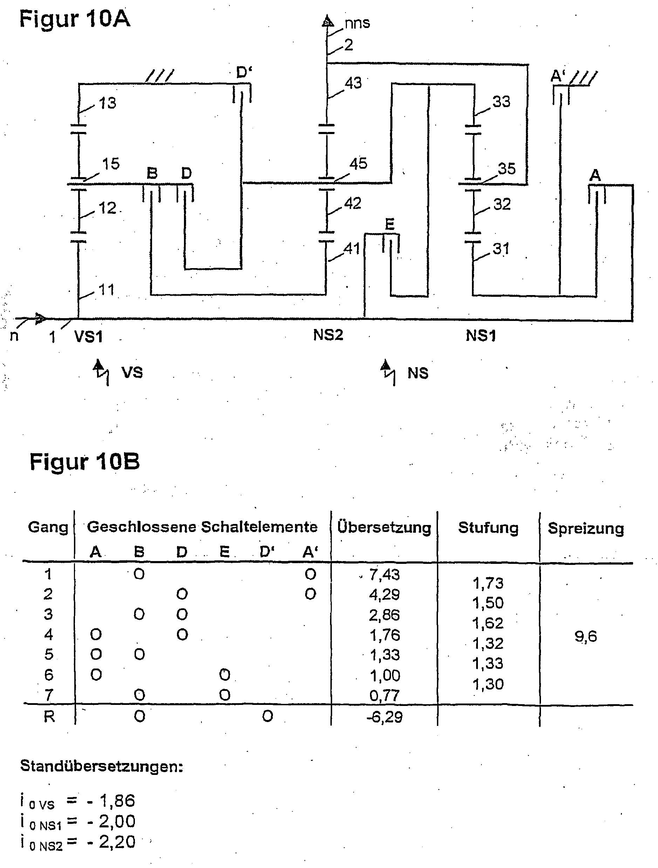

Beispielhaft für die dritte erfindungsgemäße Lösung der Aufgabe wird nun anhand der Figuren 10A und 10B eine zehnte Ausführungsform eines erfindungsgemäßen Mehrstufengetriebes erläutert. Diese zehnte Ausführungsform umfaßt einen ersten nicht schaltbaren Vorschalt-Planetenradsatz VS1, zwei schaltbare Nachschalt-Planetenradsätze NS1 und NS2, sowie sechs Schaltelemente A, B, D, E, D', A'. Erfindungsgemäß ist die freie Welle des als Zweisteg-Vierwellen-Getriebes ausgebildeten Nachschaltsatzes NS, mit der das vierte Schaltelement D verbunden ist, mit einem weiteren fünften Schaltelement D' verbunden, sowie die freie Welle des Nachschaltsatzes NS, mit der das erste Schaltelement A verbunden ist, mit einem weiteren sechsten Schaltelement A'. Die ersten vier Schaltelemente A, B, D, E sind als Kupplung ausgebildet, das fünfte und sechste Schaltelement D', A' als Bremse.

Hierbei ist die Antriebswelle 1 mit dem Sonnenrad 11 des ersten Vorschalt-Planetenradsatzes VS1 verbunden und über die vierte Kupplung E mit dem Steg 45 der Planetenräder 42 des zweiten Nachschalt-Planetenradsatzes NS2 und dem an diesen Steg 45 angebundenem Hohlrad 33 des ersten Nachschalt-Planetenradsatzes NS1 verbindbar, sowie über die erste Kupplung A mit dem Sonnenrad 31 des ersten Nachschalt-Planetenradsatzes NS1. Das Hohlrad 13 des ersten Vorschalt-Planetenradsatzes VS1 ist festgesetzt. Der Steg 15 der Planetenräder 12 des ersten Vorschalt-Planetenradsatzes VS1 ist über die zweite Kupplung B mit dem Sonnenrad 41 des zweiten Nachschalt-Planetenradsatzes NS2 und über die dritte Kupplung D mit dem Steg 45 des zweiten Nachschalt-Planetenradsatzes NS2 verbindbar. Der Steg 45 des zweiten Nachschalt-Planetenradsatzes NS2 und das mit diesem Steg 45 verbundene Hohlrad 33 des ersten Nachschalt-Planetenradsatzes NS1 sind über die Bremse D' festsetzbar. Das Sonnenrad 31 des ersten Nachschalt-Planetenradsatzes NS1 ist über die Bremse A' festsetzbar. Der Steg 35 der Planetenräder 32 des ersten Nachschalt-Planetenradsatzes NS1 und das Hohlrad 43 des zweiten Nachschalt-Planetenradsatzes NS2 und die Abtriebswelle 3 (Drehzahl nns) sind miteinander verbunden.

Durch selektives Schalten der sechs Schaltelemente können gemäß der in Figur 10B dargestellten Schaltlogik insgesamt sieben Vorwärtsgänge und ein Rückwärtsgang geschaltet werden. Wie schon die zuvor beschriebene fünfte erfindungsgemäße Ausführungsform, eignet sich auch diese zehnte erfindungsgemäße Ausführungsform des Mehrstufengetriebes in besonderer Weise für eine Front-Quer-Anwendung. Bedingt durch die beschriebene Bauteilkoppelung der beiden Nachschalt-Planetenradsätze NS1, NS2 und deren kraftflußseitige Anbindung durch die Kupplungen A, E und die Bremse A' ist die räumliche Anordnung der beiden Schaltelemente A, A' auf der der Antriebsseite abgewandten Getriebesseite, also in Kraftflußrichtung räumlich hinter allen vorzugsweise koaxial zur Antriebswelle 1 angeordneten Planetenradsätzen vorteilhaft, sowie die räumliche Anordnung der Kupplung E zwischen den beiden Nachschalt-Planetenradsätzen NS2 und NS1. Hierdurch wird ein für die Front-Quer-Anwendung vorteilhafter ungefähr getriebemittiger Abtrieb ermöglicht.

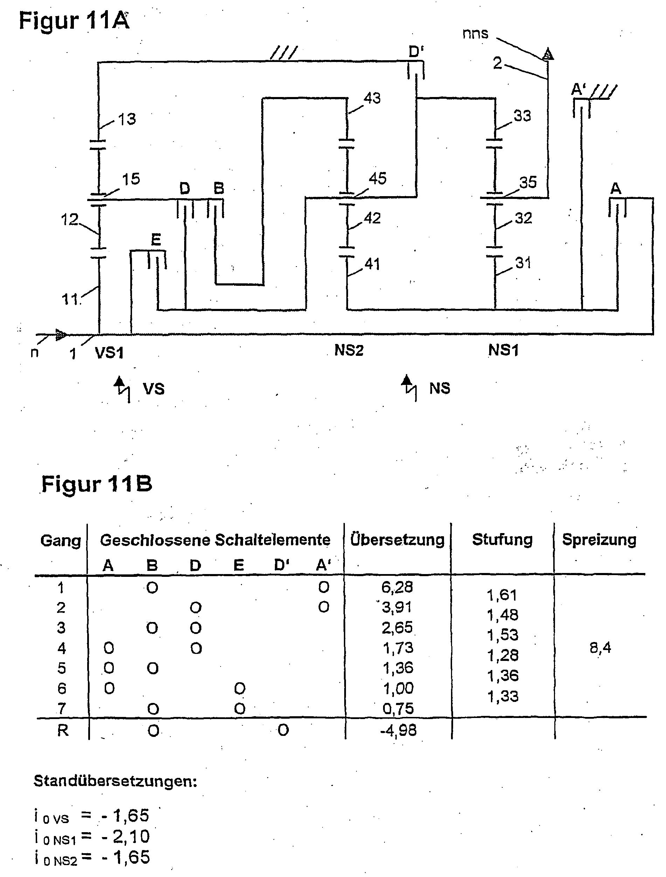

Anhand der Figuren 11A und 11B wird nun eine weitere, elfte Ausführungsform eines erfindungsgemäßen Mehrstufengetriebes erläutert, beispielhaft für die dritte erfindungsgemäße Lösung der Aufgabe. Der wesentliche Unterschied zu der zuvor beschriebenen zehnten erfindungsgemäßen Ausführungsform besteht in der Ausgestaltung des Nachschaltsatzes NS, nunmehr mit gekoppelten Sonnenrädern.

Wie in Figur 11A dargestellt, weist der Nachschaltsatz NS einen ersten und einen zweiten Nachschalt-Planetenradsatz NS1 und NS2 auf, wobei deren Sonnenrädern 31, 41 gekoppelt sind und das Hohlrad 33 des ersten Nachschalt-Planetenradsatzes NS1 mit dem Steg 45 des zweiten Nachschalt-Planetenradsatzes NS2 gekoppelt ist. Der Aufbau des Vorschaltsatzes VS mit nur einem ersten, nicht schaltbaren Vorschalt-Planetenradsatz VS1 entspricht dem der zuvor beschriebenen zehnten Ausführungsform des erfindungsgemäßen Mehrstufengetriebes. Es sind sechs Schaltelemente A, B, D, E, D', A' vorgesehen. Die Antriebswelle 1 ist mit dem Sonnenrad 11 des ersten Vorschalt-Planetenradsatzes VS1 verbunden. Weiterhin ist die Antriebswelle 1 über das erste Schaltelement A mit dem Sonnenrad 31 des ersten Nachschalt-Planetenradsatzes NS1 verbindbar, sowie über das vierte Schaltelement E mit dem Steg 45 des zweiten Nachschalt-Planetenrad-satzes NS2 und dem daran angebundenem Hohlrad 33 des ersten Nachschalt-Planetenradsatzes NS1 verbindbar. Das Hohlrad 13 des ersten Vorschalt-Planetenradsatzes VS1 ist festgesetzt. Der Steg 15 des ersten Vorschalt-Planetenradsatzes VS1 ist über das zweite Schaltelement B mit dem Hohlrad 43 des zweiten Nachschalt-Planetenradsatzes NS2 und über das dritte Schaltelement D mit dem Steg 45 des zweiten Nachschalt-Planetenradsatzes NS2 und dem mit diesem Steg 45 verbundenen Hohlrad 33 des ersten Nachschalt-Planetenradsatzes NS1 verbindbar. Der Steg 45 des zweiten Nachschalt-Planetenradsatzes NS2 und das mit diesem Steg 45 verbundene Hohlrad 33 des ersten Nachschalt-Planetenradsatzes NS1 sind über das fünfte Schaltelement D' festsetzbar. Die verbundenen Sonnenräder 31, 41 des ersten und zweiten Nachschalt-Planetenradsatzes NS1, NS2 sind über das sechste Schaltelement A' festsetzbar. Der Steg 35 des ersten Nachschalt-Planetenradsatzes NS1 bildet den Abtrieb des Nachschaltsatzes NS und ist mit der Abtriebswelle 3 (Drehzahl nns) verbunden.

Wie in Figur 11B dargestellt, sind durch selektives Schalten der Schaltelemente A, B, D, E, D' und A' insgesamt sieben Vorwärtsgänge und ein Rückwärtsgang ohne Gruppenschaltung schaltbar, bei günstiger Gangabstufung und großer Spreizung. In besonders vorteilhafter Weise wird durch diese elfte Ausführungsform eines erfindungsgemäßen Mehrstufengetriebes die Blindleistung des Nachschaltsatzes NS bei geschaltetem ersten Gang reduziert.

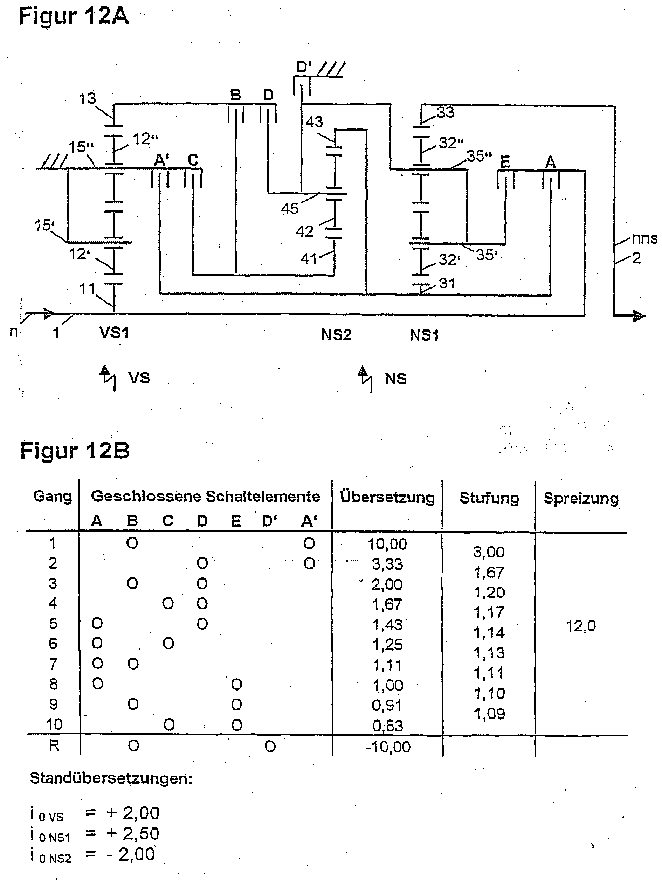

Beispielhaft für die vierte erfindungsgemäße Lösung der Aufgabe wird nun anhand Figur 12A eine zwölfte Ausführungsform eines erfindungsgemäßen Mehrstufengetriebes erläutert. Diese zwölfte Ausführungsform umfaßt einen ersten nicht schaltbaren Vorschalt-Planetenradsatz VS1, zwei schaltbare Nachschalt-Planetenradsätze NS1 und NS2, sowie sieben Schaltelemente A, B, C, D, E, D', A'. Wie bei der zehnten und elften erfindungsgemäßen Ausführungsform ist die freie Welle des als Zweisteg-Vierwellen-Getriebes ausgebildeten Nachschaltsatzes NS, mit der das vierte Schaltelement D verbunden ist, mit einem weiteren sechsten Schaltelement D' verbunden, sowie die freie Welle des Nachschaltsatzes NS, mit der das erste Schaltelement A verbunden ist, mit einem weiteren siebten Schaltelement A'.

Wie in Figur 12A dargestellt, sind die Schaltelemente A, B, D, E als Kupplung und die Schaltelemente C, D', A' als Bremse ausgebildet. Der erste, nicht schaltbare Vorschalt-Planetenradsatz VS1 ist als Plus-Getriebe mit Doppelplaneten ausgebildet, wobei dessen Stege 15' und 15'' der inneren und äußeren Planetenräder 12' und 12'' gekoppelt sind. Auch der erste Nachschalt-Planetenradsatz NS1 ist als Doppenplanetenradsatz mit gekoppelten Stegen 35' und 35'' der inneren und äußeren Planetenräder 32' und 32'' ausgeführt.

Die Antriebswelle 1 (Drehzahl n) ist mit dem Sonnenrad 11 des ersten Vorschalt-Planetenradsatzes VS1 verbunden und über das erste Schaltelement A mit dem Sonnenrad 31 des ersten Nachschalt-Planetenradsatzes NS1 verbindbar. Weiterhin ist die Antriebswelle 1 über das fünfte Schaltelement E mit den gekoppelten Stege 35', 35'' des ersten Nachschalt-Planetenradsatzes NS1 und mit dem an die Stege 35', 35'' des ersten Nachschalt-Planetenradsatzes NS1 gekoppelten Steg 45 der Planetenräder 42 des zweiten Nachschalt-Planetenradsatzes NS2 verbindbar. Die gekoppelten Stege 15', 15'' des ersten Vorschalt-Planetenradsatzes VS1 sind festgesetzt. Das Sonnenrad 31 des ersten Nachschalt-Planetenradsatzes NS1 ist über das siebte Schaltelement A' festsetzbar, vorzugsweise über den Steg 15'' der äußeren Planetenräder 12'' des ersten Vorschalt-Planetenradsatzes VS1. Das Sonnenrad 41 des zweiten Nachschalt-Planetenradsatzes NS2 ist über das dritte Schaltelement C festsetzbar, ebenfalls vorzugsweise über den Steg 15'' der äußeren Planetenräder 12'' des ersten Vorschalt-Planetenradsatzes VS1. Das Hohlrad 13 des ersten Vorschalt-Planetenradsatzes VS1 ist über das zweite Schaltelement B mit dem Sonnenrad 41 des zweiten Nachschalt-Planetenradsatzes NS2 und über das vierte Schaltelement D mit dem Steg 45 des zweiten Nachschalt-Planetenradsatzes NS2 verbindbar. Der Steg 45 des zweiten Nachschalt-Planetenradsatzes NS2 ist über das sechste Schaltelement D' festsetzbar. Das Sonnenrad 31 des ersten Nachschalt-Planetenradsatzes NS1 ist mit dem Hohlrad 43 des zweiten Nachschalt-Planetenradsatzes NS2 verbunden. Ebenfalls verbunden sind das Hohlrad 33 des ersten Nachschalt-Planetenradsatzes NS1 und die Abtriebswelle 3 (Drehzahl nns).

Durch selektives Schalten der sieben Schaltelemente können gemäß der in Figur 12B dargestellten Schaltlogik insgesamt zehn Vorwärtsgänge und ein Rückwärtsgang ohne Gruppenschaltung geschaltet werden. Der erste Vorwärtsgang und der Rückwärtsgang haben eine Kriechgangcharakteristik, ähnlich wie bei der zuvor beschriebenen fünften Ausführungsform. Im Vergleich zu der fünften Ausführungsform benötigt diese zwölfte Ausführungsform eines erfindungsgemäßen Mehrstufengetriebes für zehn Vorwärtsgänge nur drei Radsätze, also einen Radsatz weniger.

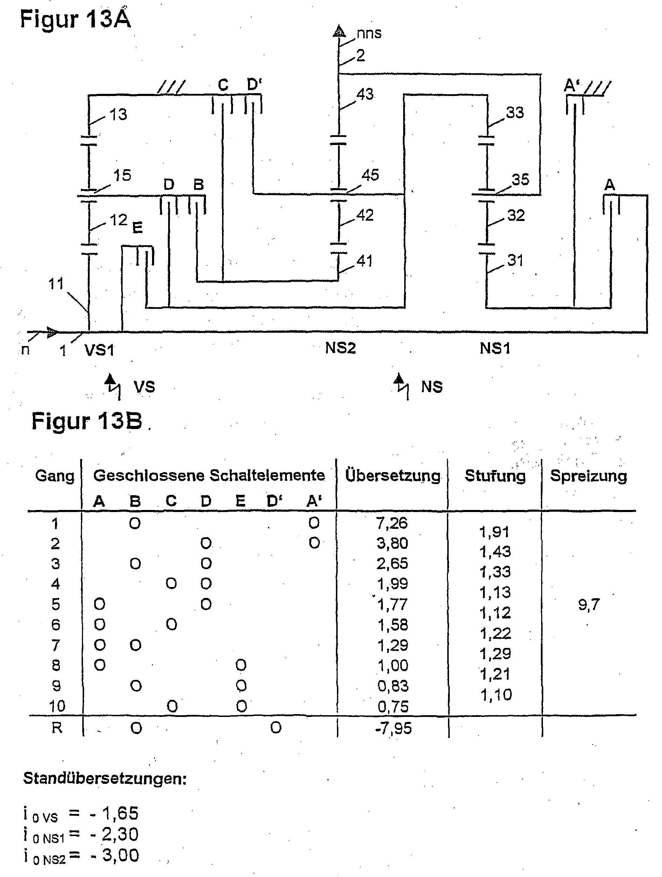

Figur 13A zeigt nun eine dreizehnte Ausführungsform eines erfindungsgemäßen Mehrstufengetriebes, beispielhaft für die vierte erfindungsgemäße Lösung der Aufgabe. Ausgehend von der zuvor in Figur 10A detailliert beschriebenen zehnten Ausführungsform weist das Mehrstufengetriebe nunmehr sieben Schaltelemente A, B, C, D, E, D' und A' auf. Das gegenüber der zehnten Ausführungsform zusätzliche Schaltelement C ist als Bremse ausgebildet und derart angeordnet, daß das Sonnenrad 41 des zweiten Nachschalt-Planetenradsatzes NS2 zusätzlich über diese Bremse C festsetzbar ist.

Wie in Figur 13B dargestellt, können durch dieses zusätzliche Schaltelement nunmehr insgesamt zehn Vorwärtsgänge und ein Rückwärtsgang geschaltet werden. In vorteilhafter Weise sind alle drei Planetenradsätze als hinsichtlich Bauaufwand günstige Minusgetriebe ausgeführt. Im Vergleich zu der zwölften Ausführungsform ist die Kriechgang-Charakteristik des ersten Vorwärtsgangs und des Rückwärtsgangs verringert, der Stufensprung vom ersten zum zweiten Vorwärtsgang entsprechend geringer. Wie die zehnte erfindungsgemäße Ausführungsform eignet sich auch diese dreizehnte Ausführungsform eines erfindungsgemäßen Mehrstufengetriebes besonders für ein Fahrzeug mit in Front-Quer-Antrieb.

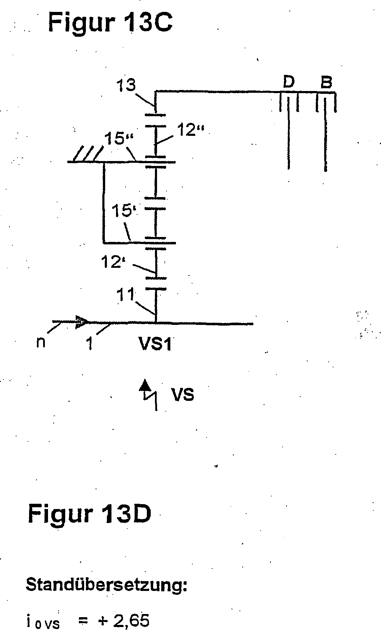

In einer Weiterbildung der zehnten und/oder elften und/oder dreizehnten erfindungsgemäßen Ausführungsform eines Mehrstufengetriebes wird vorgeschlagen, den ersten nicht schaltbaren Vorschalt-Planetenradsatz VS1 als Plus-Getriebe mit einem Sonnenrad 11, einem Hohlrad 13 und zwei gekoppelten Stegen 15', 15'' mit inneren und äußeren Planetenrädern 12', 12" auszubilden, wie in Figur 13C dargestellt. Hierbei sind die gekoppelten Stege 15', 15'' des ersten Vorschalt-Planetenradsatzes VS1 festgesetzt (anstelle dessen Hohlrads 13) und das zweite und dritte Schaltelement B und D mit dem Hohlrad 13 des ersten Vorschalt-Planetenrad-satzes VS1 verbunden (anstelle mit dessem Steg). Figur 13D zeigt die Standübersetzung des Vorschaltsatzes VS dieser Weiterbildung.

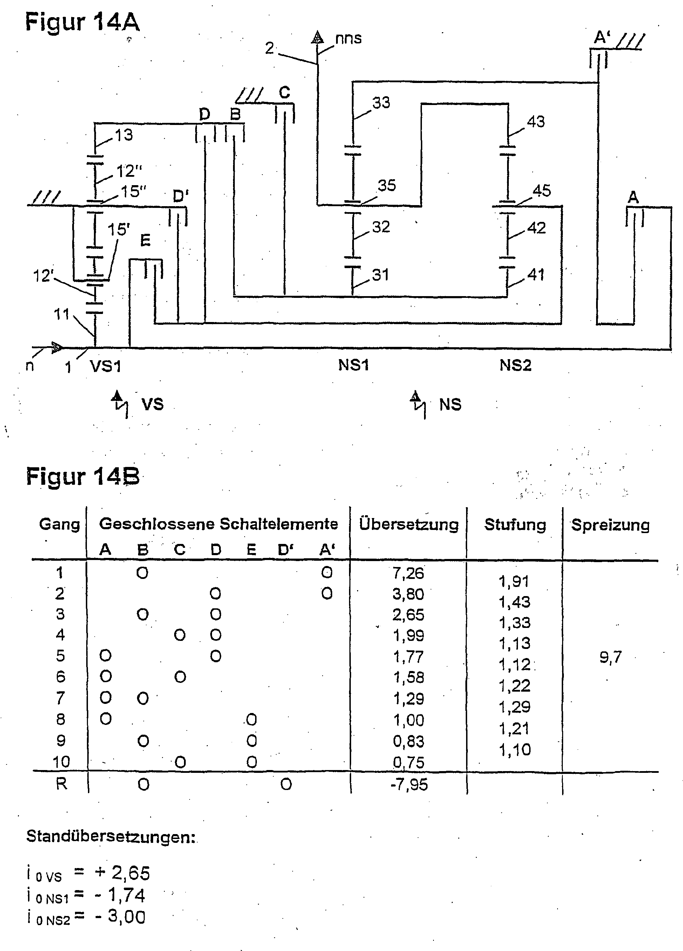

Beispielhaft für die vierte erfindungsgemäße Lösung der Aufgabe wird nun anhand Figur 14A eine vierzehnte Ausführungsform eines erfindungsgemäßen Mehrstufengetriebes erläutert. Diese vierzehnte Ausführungsform umfaßt einen ersten nicht schaltbaren Vorschalt-Planetenradsatz VS1, zwei schaltbare Nachschalt-Planetenradsätze NS1 und NS2, sowie sieben Schaltelemente A, B, C, D, E, D', A'. Wie bei der zwölften und dreizehnten erfindungsgemäßen Ausführungsform ist die freie Welle des als Zweisteg-Vierwellen-Getriebes ausgebildeten Nachschaltsatzes NS, mit der das vierte Schaltelement D verbunden ist, mit einem weiteren sechsten Schaltelement D' verbunden, sowie die freie Welle des Nachschaltsatzes NS, mit der das erste Schaltelement A verbunden ist, mit einem weiteren siebten Schaltelement A'.

Wie in Figur 14A dargestellt, sind die Schaltelemente A, B, D, E als Kupplung und die Schaltelemente C, D', A' als Bremse ausgebildet. Der erste Vorschalt-Planetenradsatz VS1 ist als Plusgetriebe mit Doppelplaneten ausgebildet, wobei dessen Stege 15' und 15'' der inneren und äußeren Planetenräder 12' und 12'' gekoppelt sind. Die Antriebswelle 1 (Drehzahl n) ist mit dem Sonnenrad 11 des ersten Vorschalt-Planetenradsatzes VS1 verbunden und über das erste Schaltelement A mit dem Hohlrad 33 des ersten Nachschalt-Planetenradsatzes NS1 verbindbar. Weiterhin ist die Antriebswelle 1 über das fünfte Schaltelement E mit dem Steg 45 der Planetenräder 42 des zweiten Nachschalt-Planetenradsatzes NS2 verbindbar. Die gekoppelten Stege 15' und 15'' des ersten Vorschalt-Planetenradsatzes VS1 sind festgesetzt. Das Sonnenrad 31 des ersten Nachschalt-Planetenradsatzes NS1 ist mit dem Sonnenrad 41 des zweiten Nachschalt-Planetenradsatzes NS2 verbunden. Das Hohlrad 33 des ersten Nachschalt-Planetenradsatzes NS1 ist über das siebte Schaltelement A' festsetzbar. Der Steg 45 der Planetenräder 42 des zweiten Nachschalt-Planetenradsatzes NS2 ist über das sechste Schaltelement D' festsetzbar, vorzugsweise über den Steg 15'' der äußeren Planetenräder 12'' des ersten Vorschalt-Planetenradsatzes VS1. Das Hohlrad 13 des ersten Vorschalt-Planetenradsatzes VS1 ist über das zweite Schaltelement B mit dem Sonnenrad 31 des ersten Nachschalt-Planetenradsatzes NS1 und dem angebundenen Sonnenrad 41 des zweiten Nachschalt-Planetenradsatzes NS2 und über das vierte Schaltelement D mit dem Steg 45 des zweiten Nachschalt-Planetenradsatzes NS2 verbindbar. Über das dritte Schaltelement C sind das Sonnenrad 31 des ersten Nachschalt-Planetenradsatzes NS1 und das angebundene Sonnenrad 41 des zweiten Nachschalt-Planetenradsatzes NS2 festsetzbar. Ebenfalls verbunden sind der Steg 35 der Planetenräder 32 des ersten Nachschalt-Planetenradsatzes NS1 und das Hohlrad 43 des zweiten Nachschalt-Planetenradsatzes NS2 und die Abtriebswelle 3 (Drehzahl nns).

Durch selektives Schalten der sieben Schaltelemente sind gemäß der in Figur 14B dargestellten Schaltlogik insgesamt zehn Vorwärtsgänge und ein Rückwärtsgang ohne Gruppenschaltung schaltbar. Im Vergleich zu der dreizehnten Ausführungsform wird bei dieser vierzehnten Ausführungsform eines erfindungsgemäßen Mehrstufengetriebes in besonders vorteilhafter Weise die Blindleistung des Nachschaltsatzes NS bei geschaltetem ersten Gang reduziert.

In einer Ausgestaltung der vierzehnten Ausführungsform eines erfindungsgemäßen Mehrstufengetriebes kann auch vorgesehen sein, anstelle der möglichen zehn nur neun Vorwärtsgänge zu schalten, unter Auslassung des in Figur 14B dargestellten fünften Gangs. Die Stufung dieses Neungang-Getriebes ist sehr harmonisch.

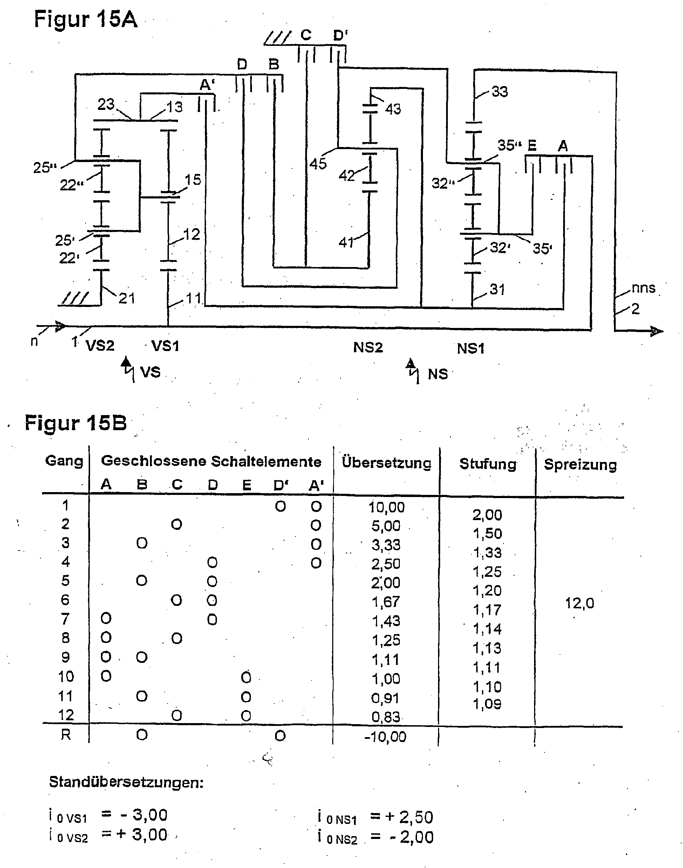

Anhand der Figuren 15A und 15B wird nun eine weitere, fünfzehnte Ausführungsform eines erfindungsgemäßen Mehrstufengetriebes beschrieben, beispielhaft für die vierte erfindungsgemäße Lösung der Aufgabe. Diese fünfzehnte Ausführungsform basiert auf der Nachschaltsatz-Anordnung der zwölften Ausführungsform gemäß Figur 12A und weist im Vorschaltsatz VS nunmehr zwei gekoppelte, nicht schaltbare Vorschalt-Planeten-radsätze VS1 und VS2 auf. Außerdem ist das siebte Schaltelement A' nunmehr als Kupplung ausgebildet. Durch diese Änderungen können zwölf anstatt zehn Vorwärtsgänge geschaltet werden.

Wie in Figur 15A dargestellt, ist die Antriebswelle 1 (Drehzahl n) mit dem Sonnenrad 11 des ersten Vorschalt-Planetenradsatzes VS1 verbunden und über das als Kupplung ausgebildete erste Schaltelement A mit dem Sonnenrad 31 des ersten Nachschalt-Planetenradsatzes NS1 und über das als Kupplung ausgebildete fünfte Schaltelement E mit den gekoppelten Stegen 35', 35'' der inneren und äußeren Planetenräder 32', 32" des ersten Nachschalt-Planetenradsatzes NS1 und mit dem an die Stege 35', 35'' des ersten Nachschalt-Planetenradsatzes NS1 gekoppelten Steg 45 der Planetenräder 42 des zweiten Nachschalt-Planetenradsatzes NS2 verbindbar. Der Steg 25' der inneren Planetenräder 22' des zweiten Vorschalt-Planetenradsatzes VS2 und der Steg 25'' der äußeren Planetenräder 22'' des zweiten Vorschalt-Planetenradsatzes VS2 und der Steg 15 der Planetenräder 12 des ersten Vorschalt-Planetenradsatzes VS1 sind miteinander verbunden. Das Sonnenrad 21 des zweiten Vorschalt-Planetenradsatzes VS2 ist festgesetzt. Das Hohlrad 13 des ersten Vorschalt-Planetenradsatzes VS1 und das Hohlrad 23 des zweiten Vorschalt-Planetenradsatzes VS2 sind miteinander verbunden und über das als Kupplung ausgebildete siebte Schaltelement A' mit dem Sonnenrad 31 des ersten Nachschalt-Planetenradsatzes NS1 verbindbar. Der Steg 25" der äußeren Planetenräder 22'' des zweiten Vorschalt-Planetenradsatzes VS2 ist über das als Kupplung ausgebildete vierte Schaltelement D mit dem Steg 45 des zweiten Nachschalt-Planetenradsatzes NS2 und über das als Kupplung ausgebildete zweite Schaltelement B mit dem Sonnenrad 41 des zweiten Nachschalt-Planetenradsatzes NS2 verbindbar. Das Sonnenrad 41 des zweiten Nachschalt-Planetenradsatzes NS2 ist über das als Bremse ausgebildete dritte Schaltelement C festsetzbar. Der Steg 45 des zweiten Nachschalt-Planetenradsatzes NS2 ist über das als Bremse ausgebildete sechste Schaltelement D' festsetzbar. Das Sonnenrad 31 des ersten Nachschalt-Planetenradsatzes NS1 und das Hohlrad 43 des zweiten Nachschalt-Planetenradsatzes NS2 sind miteinander verbunden. Ebenfalls verbunden sind das Hohlrad 33 des ersten Nachschalt-Planetenradsatzes NS1 und die Abtriebswelle 3 (Drehzahl nns).

Durch selektives Schalten der sieben Schaltelemente können gemäß der in Figur 15B dargestellten Schaltlogik in vorteilhafter Weise insgesamt zwölf Vorwärtsgänge und ein Rückwärtsgang geschaltet werden.

### Bezugszeichen

- VS: Vorschaltsatz
- VS1: erster Vorschalt-Planetenradsatz
- VS2: zweiter Vorschalt-Planetenradsatz

- NS: Nachschaltsatz
- NS1: erster Nachschalt-Planetenradsatz
- NS2: zweiter Nachschalt-Planetenradsatz

- A, B, C, D E, D', A': erstes bis siebtes Schaltelement

- n: Eingangsdrehzahl der Antriebswelle
- nns: Ausgangsdrehzahl des Nachschaltsatzes NS

- 1: Antriebswelle
- 2: Abtriebswelle

- 11: Sonnenrad des Radsatzes VS1
- 12: Planetenrad des Radsatzes VS1
- 12k: kleines Planetenrad des Radsatzes VS1
- 12g: großes Planetenrad des Radsatzes VS1
- 12': inneres Planetenrad des Radsatzes VS1
- 12'': äußeres Planetenrad des Radsatzes VS1
- 13: Hohlrad des Radsatzes VS1
- 15: Steg des Radsatzes VS1
- 15': Steg der inneren Planetenräder des Radsatzes VS1
- 15'': Steg der äußeren Planetenräder des Radsatzes VS1
- 21: Sonnenrad des Radsatzes VS2
- 22: Planetenrad des Radsatzes VS2
- 22': inneres Planetenrad des Radsatzes VS2
- 22'': äußeres Planetenrad des Radsatzes VS2
- 23: Hohlrad des Radsatzes VS2
- 25: Steg des Radsatzes VS2
- 25': Steg der inneren Planetenräder des Radsatzes VS2
- 25'': Steg der äußeren Planetenräder des Radsatzes VS2

- 31: Sonnenrad des Radsatzes NS1
- 32: Planetenrad des Radsatzes NS1
- 32': inneres Planetenrad des Radsatzes NS1
- 32'': äußeres Planetenrad des Radsatzes NS1
- 33: Hohlrad des Radsatzes NS1
- 35: Steg des Radsatzes NS1
- 35': Steg der inneren Planetenräder des Radsatzes NS1
- 35'': Steg der äußeren Planetenräder des Radsatzes NS1

- 41: Sonnenrad des Radsatzes NS2
- 42: Planetenrad des Radsatzes NS2
- 43: Hohlrad des Radsatzes NS2
- 45: Steg des Radsatzes NS2

## Patentansprüche

1. Mehrstufengetriebe
mit einer Antriebswelle (1),
die mit einem Vorschaltsatz (VS) verbunden ist;
mit einer Abtriebswelle (2),
die mit einem Nachschaltsatz (NS) verbunden ist;
und mit sechs Schaltelementen (A, B, C. D. E. D'),
durch deren wahlweises Schalten eine Eingangsdrehzahl (n) der Antriebsseite (1) sowie im Vorschaltsatz (VS) erzeugte Drehzahlen selektiv zur Schaltung von mindestens sieben Vorwärtsgängen derart auf den Nachschaltsatz (NS) übertragbar sind,
derart, dass zum Umschalten von einem Gang in den nächstfolgenden höheren oder niedrigeren Gang von den beiden gerade betätigten Schaltelementen jeweils nur ein Schaltelement abgeschaltet und ein weiteres Schaltelement zugeschaltet wird;
wobei der Vorschaltsatz (VS) aus einem Vorschalt-Planetenradsatz (VS1) oder aus maximal zwei gekoppelten Vorschalt-Planetenradsätzen (VS1, VS2) gebildet wird,
und wobei der Nachschaltsatz (NS) als Zweisteg-Vierwellen-Getriebe mit zwei schaltbaren Nachschalt-Planetenradsätzen (NS1, NS2) ausgebildet ist,
wobei eine erste freie Welle des Nachschaltsatzes (NS) mit dem ersten Schaltelement (A) verbunden ist
und bei geschaltetem ersten Schaltelement (A) mit einer Drehzahl kleiner oder gleich der Eingangsdrehzahl (n) der Antriebswelle (1) rotiert,
und wobei eine zweite freie Welle des Nachschaltsatzes (NS) mit dem zweiten und dritten Schaltelement (B, C) verbunden ist,
und wobei eine dritte freie Welle des Nachschaltsatzes (NS) mit dem vierten Schaltelement (D) verbunden ist
und bei geschaltetem vierten Schaltelement (D) mit einer Drehzahl kleiner der Eingangsdrehzahl (n) der Antriebswelle (1) rotiert,
und wobei die dritte freie Welle des Nachschaltsatzes (NS) mit dem fünften Schaltelement (E) verbunden ist
und bei geschaltetem fünften Schaltelement (E) mit Eingangsdrehzahl (n) der Antriebswelle (1) rotiert
und bei geschaltetem fünften Schaltelement (E) denjenigen Vorwärtsgang, der als Direktgang ausgeführt ist, sowie alle diejenigen Vorwärtsgäncge, die als Overdrivegang ausgeführt sind, erzeugt:
und wobei eine vierte freie Welle des Nachschaltsatzes (NS) mit der Abtriebswelle (2) verbunden ist;
und wobei die dritte freie Welle des Nachschaltsatzes (NS) zusätzlich zum vierten Schaltelement (D) mit dem sechsten Schaltelement (D') verbunden ist
und bei geschaltetem sechsten Schaltelement (D') mit einer Drehzahl kleiner der Eingangsdrehzahl (n) der Antriebswelle (1) rotiert.

2. Mehrstufengetriebe, mit einer Antriebswelle (1), die mit einem Vorschaltsatz (VS) verbunden ist, mit einer Abtriebswelle (2), die mit einem Nachschaltsatz (NS) verbunden ist, und mit maximal sieben Schaltelementen (A, B, C,' D, E, D', A'), durch deren wahlweises Schalten eine Eingangsdrehzahl (n) der Antriebswelle (1) sowie im Vorschaltsatz (VS) erzeugte Drehzahlen selektiv zur Schaltung von mindestens sieben Vorwärtsgängen derart auf den Nachschaltsatz (NS) übertragbar sind, daß zum Umschalten von einem Gang in den nächstfolgenden höheren oder niedrigeren Gang von den gerade betätigten Schaltelementen jeweils nur ein Schaltelement abgeschaltet und ein weiteres Schaltelement zugeschaltet wird, wobei der Vorschaltsatz (VS) aus einem Vorschalt-Planetenradsatz (VS1) oder maximal zwei gekoppelten Vorschalt-Planetenradsätzen (VS1, VS2) gebildet wird und der Nachschaltsatz (NS) als Zweisteg-Vierwellen-Getriebe mit zwei schaltbaren Nachschalt-Planetenradsätzen (NS1, NS2) ausgebildet ist, wobei eine erste freie Welle des Nachschaltsatzes (NS) mit dem ersten Schaltelement (A) verbunden ist und bei geschaltetem ersten Schaltelement (A) mit einer Drehzahl kleiner oder gleich der Eingangsdrehzahl (n) der Antriebswelle rotiert, und wobei eine zweite freie Welle des Nachschaltsatzes (NS) mit dem zweiten und dritten Schaltelement (B, C) verbunden ist, und wobei eine dritte freie Welle des Nachschaltsatzes (NS) mit dem vierten Schaltelement (D) verbunden ist und bei geschaltetem vierten Schaltelement (D) mit einer Drehzahl kleiner der Antriebsdrehzahl (n) der Eingangswelle (1) rotiert, und wobei die dritte freie Welle des Nachschaltsatzes (NS) mit dem fünften Schaltelement (E) verbunden ist und bei geschaltetem fünften Schaltelement (E) mit Antriebsdrehzahl (n) der Eingangswelle (1) rotiert, und wobei eine vierte freie Welle des Nachschaltsatzes (NS) mit der Abtriebswelle (2) verbunden ist, wobei sechs Schaltelemente (A, B, C, D, E, A') vorgesehen sind, und die erste freie Welle des Nachschaltsatzes (NS) zusätzlich zum ersten Schaltelement (A) mit einem weiteren Schaltelement (A') verbunden ist und bei geschaltetem Schaltelement (A') mit einer Drehzahl kleiner der Eingangsdrehzahl (n) der Antriebswelle (1) rotiert.

3. Mehrstufengetriebe, mit einer Antriebswelle (1), die mit einem Vorschaltsatz (VS) verbunden ist, mit einer Abtriebswelle (2), die mit einem Nachschaltsatz (NS) verbunden ist, und mit maximal sieben Schaltelementen (A, B, C, D, E, D', A'), durch deren wahlweises Schalten eine Eingangsdrehzahl (n) der Antriebswelle (1) sowie im Vorschaltsatz (VS) erzeugte Drehzahlen selektiv zur Schaltung von mindestens sieben Vorwärtsgängen derart auf den Nachschaltsatz (NS) übertragbar sind, daß zum Umschalten von einem Gang in den nächstfolgenden höheren oder niedrigeren Gang von den gerade betätigten Schaltelementen jeweils nur ein Schaltelement abgeschaltet und ein weiteres Schaltelement zugeschaltet wird, wobei der Vorschaltsatz (VS) aus einem Vorschalt-Planetenradsatz (VS1) oder maximal zwei gekoppelten Vorschalt-Planetenradsätzen (VS1, VS2) gebildet wird und der Nachschaltsatz (NS) als Zweisteg-Vierwellen-Getriebe mit zwei schaltbaren Nachschalt-Planetenradsätzen (NS1, NS2) ausgebildet ist, wobei eine erste freie Welle des Nachschaltsatzes (NS) mit dem ersten Schaltelement (A) verbunden ist und bei geschaltetem ersten Schaltelement (A) mit einer Drehzahl kleiner oder gleich der Eingangsdrehzahl (n) der Antriebswelle rotiert, und wobei eine zweite freie Welle des Nachschaltsatzes (NS) mit dem zweiten und dritten Schaltelement (B, C) verbunden ist, und wobei eine dritte freie Welle des Nachschaltsatzes (NS) mit dem vierten Schaltelement (D) verbunden ist und bei geschaltetem vierten Schaltelement (D) mit einer Drehzahl kleiner der Antriebsdrehzahl (n) der Eingangswelle (1) rotiert, und wobei die dritte freie Welle des Nachschaltsatzes (NS) mit dem fünften Schaltelement (E) verbunden ist und bei geschaltetem fünften Schaltelement (E) mit Antriebsdrehzahl (n) der Eingangswelle (1) rotiert, und wobei eine vierte freie Welle des Nachschaltsatzes (NS) mit der Abtriebswelle (2) verbunden ist, sechs Schaltelemente (A, B, D, E, D', A') vorgesehen sind, und die dritte freie Welle des Nachschaltsatzes (NS) zusätzlich zum vierten Schaltelement (D) mit einem weiteren Schaltelement (D') verbunden ist und bei geschaltetem Schaltelement (D') mit einer Drehzahl kleiner der Antriebsdrehzahl (n) der Eingangswelle (1) rotiert, und daß die erste freie Welle des Nachschaltsatzes (NS) zusätzlich zum ersten Schaltelement (A) mit einem weiteren Schaltelement (A') verbunden ist und bei geschaltetem Schaltelement (A') mit einer Drehzahl kleiner der Eingangsdrehzahl (n) der Antriebswelle (1) rotiert.

4. Mehrstufengetriebe, mit einer Antriebswelle (1), die mit einem Vorschaltsatz (VS) verbunden ist, mit einer Abtriebswelle (2), die mit einem Nachschaltsatz (NS) verbunden ist, und mit maximal sieben Schaltelementen (A, B, C, D, E, D', A'), durch deren wahlweises Schalten eine Eingangsdrehzahl (n) der Antriebswelle (1) sowie im Vorschaltsatz (VS) erzeugte Drehzahlen selektiv zur Schaltung von mindestens sieben Vorwärtsgängen derart auf den Nachschaltsatz (NS) übertragbar sind, daß zum Umschalten von einem Gang in den nächstfolgenden höheren oder niedrigeren Gang von den gerade betätigten Schaltelementen jeweils nur ein Schaltelement abgeschaltet und ein weiteres Schaltelement zugeschaltet wird, wobei der Vorschaltsatz (VS) aus einem Vorschalt-Planetenradsatz (VS1) oder maximal zwei gekoppelten Vorschalt-Planetenradsätzen (VS1, VS2) gebildet wird und der Nachschaltsatz (NS) als Zweisteg-Vierwellen-Getriebe mit zwei schaltbaren Nachschalt-Planetenradsätzen (NS1, NS2) ausgebildet ist, wobei eine erste freie Welle des Nachschaltsatzes (NS) mit dem ersten Schaltelement (A) verbunden ist und bei geschaltetem ersten Schaltelement (A) mit einer Drehzahl kleiner oder gleich der Eingangsdrehzahl (n) der Antriebswelle rotiert, und wobei eine zweite freie Welle des Nachschaltsatzes (NS) mit dem zweiten und dritten Schaltelement (B, C) verbunden ist, und wobei eine dritte freie Welle des Nachschaltsatzes (NS) mit dem vierten Schaltelement (D) verbunden ist und bei geschaltetem vierten Schaltelement (D) mit einer Drehzahl kleiner der Antriebsdrehzahl (n) der Eingangswelle (1) rotiert, und wobei die dritte freie Welle des Nachschaltsatzes (NS) mit dem fünften Schaltelement (E) verbunden ist und bei geschaltetem fünften Schaltelement (E) mit Antriebsdrehzahl (n) der Eingangswelle (1) rotiert, und wobei eine vierte freie Welle des Nachschaltsatzes (NS) mit der Abtriebswelle (2) verbunden ist, wobei sieben Schaltelemente (A, B, C, D, E, D', A') vorgesehen sind, und die dritte freie Welle des des Nachschaltsatzes (NS) zusätzlich zum vierten Schaltelement (D) mit einem weiteren Schaltelement (D') verbunden ist und bei geschaltetem Schaltelement (D') mit einer Drehzahl kleiner der Antriebsdrehzahl (n) der Eingangswelle (1) rotiert, und daß die erste freie Welle des des Nachschaltsatzes (NS) zusätzlich zum ersten Schaltelement (A) mit einem weiteren Schaltelement (A') verbunden ist und bei geschaltetem Schaltelement (A') mit einer Drehzahl kleiner der Eingangsdrehzahl (n) der Antriebswelle (1) rotiert.

5. Mehrstufengetriebe nach Anspruch 1 oder 2 oder 3 oder 4,
wobei der Vorschaltsatz (VS) nur einen, nicht schaltbaren Vorschaltt-Planetenradsatz (VS1) aufweist.

6. Mehrstufengetriebe nach Anspruch 1 oder 2 oder 3 oder 4, **dadurch gekennzeichnet, daß** der Vorschaltsatz zwei gekoppelte, nicht schaltbare Vorschalt-Planetenradsätze (VS1, VS2) aufweist.

7. Mehrstufengetriebe nach Anspruch 1 oder 2 oder 3 oder 4, **dadurch gekennzeichnet, daß** der Vorschaltsatz nur einen, schaltbaren Vorschalt-Planetenradsatz (VS1) aufweist.

8. Mehrstufengetriebe nach Anspruch 1 und 5, **gekennzeichnet durch** folgende Merkmale:
- der ersten Vorschalt-Planetenradsatz (VS1) weist ein Sonnenrad (11), ein Hohlrad (15), sowie einen Steg (15) mit aus kleinen Planetenrädern (12k) und großen Planetenrädern (12g) gebildeten Stufenplanetenrädern auf;
- der erste Nachschalt-Planetenradsatz (NS1) ist als Doppelplanetenradsatz ausgebildet, mit einem Sonnenrad (31), einem Hohlrad (33), einem Steg (35') mit inneren Planetenrädern (32'), sowie einem Steg (35'') mit äußeren Planetenrädern (32");
- der zweite Nachschalt-Planetenradsatz (NS2) weist ein Sonnenrad (41), ein Hohlrad (43), sowie einen Steg (45) mit Planetenrädern (42) auf;
- die Antriebswelle (1) ist mit dem Sonnenrad (11) des ersten Vorschalt-Planetenradsatzes (VS1) verbunden,
- die Antriebswelle (1) ist über das fünfte Schaltelement (E) mit dem Steg (45) des zweiten Nachschalt-Planetenradsatzes (NS2) verbindbar;
- die Antriebswelle (1) ist über das zweite Schaltelement (B) mit dem Sonnenrad (41) des zweiten Nachschalt-Planetenradsatzes (NS2) verbindbar;
- das Hohlrad (13) des ersten Vorschalt-Planetenradsatzes (VS1) ist festgesetzt;
- die kleinen Planetenräder (12k) des ersten Vorschalt-Planetenradsatzes (VS1) kämmen mit dessem Sonnenrad (11), die großen Planetenräder (12g) des ersten Vorschalt-Planetenradsatzes (VS1) kämmen mit dessem Hohlrad (13);
- der Steg (15) des ersten Vorschalt-Planetenradsatzes (VS1) ist über das erste Schaltelement (A) mit dem Sonnenrad (31) des ersten Nachschalt-Planetenradsatzes (NS1) verbindbar;
- der Steg (15) des ersten Vorschalt-Planetenradsatzes (VS1) ist über das sechste Schaltelement (D') mit dem Steg (35') der inneren Planetenräder (32') des ersten Nachschalt-Planetenradsatzes (NS1) verbindbar;
- der Steg (35') der inneren Planetenräder (32') des ersten Nachschalt-Planetenradsatzes (NS1) ist über das vierte Schaltelement (D) festsetzbar;
- das Sonnenrad (41) des zweiten Nachschalt-Planetenradsatzes (NS2) ist über das dritte Schaltelement (C) festsetzbar;
- der Steg (35') der inneren Planetenräder (32') des ersten Nachschalt-Planetenradsatzes (NS1) ist mit dem Steg (35'') der äußeren Planetenräder (32'') des ersten Nachschalt-Planetenradsatzes (NS1) und dem Steg (45) des zweiten Nachschalt-Planetenradsatzes (NS2) verbunden;
- die äußeren Planetenräder (32'') des ersten Nachschalt-Planetenradsatzes (NS1) und die Planetenräder (42) des zweiten Nachschalt-Planetenradsatzes (NS2) sind miteinander verbunden; und
- das Hohlrad (33) des ersten Nachschalt-Planetenradsatzes (NS1) und das Hohlrad (43) des zweiten Nachschalt-Planetenradsatzes (NS2) sind zusammengefasst und mit der Abtriebswelle (3) verbunden.

9. Mehrstufengetriebe nach Anspruch 2 und 5, **gekennzeichnet durch** folgende Merkmale:
- der erste Vorschalt-Planetenradsatz (VS1) weist ein Sonnenrad (11), ein Hohlrad (13), sowie zwei gekoppelte Stege (15', 15'') mit inneren und äußeren Planetenrädern (12', 12'') auf;
- der erste Nachschalt-Planetenradsatz (NS1) ist als Doppelplanetenradsatz ausgebildet, mit einem Sonnenrad (31), einem Hohlrad (33), sowie zwei gekoppelte Stege (35', 35'') mit inneren und äußeren Planetenrädern (32', 32'');
- der zweite Nachschalt-Planetenradsatz (NS2) weist ein Sonnenrad (41), ein Hohlrad (43), sowie einen Steg (45) mit Planetenrädern (42) auf;
- das Sonnenrad (11) des ersten Vorschalt-Planetenradsatzes (VS1) ist festgesetzt;
- die gekoppelten Stegen (15', 15'') des ersten Vorschalt-Planetenradsatzes (VS1) sind mit der Antriebswelle (1) verbunden;
- das Hohlrad (13) des ersten Vorschalt-Planetenradsatzes (VS1) ist über das sechste Schaltelement (A') mit dem Sonnenrad (31) des ersten Nachschalt-Planetenradsatzes (NS1) und über das zweite Schaltelement (B) mit dem Sonnenrad (41) des zweiten Nachschalt-Planetenradsatzes (NS2) verbindbar;
- das Sonnenrad (31) des ersten Nachschalt-Planetenradsatzes (NS1) ist über das erste Schaltelement (A) mit der Antriebswelle (1) verbindbar;
- die gekoppelten Stegen (35', 35'') des ersten Nachschalt-Planetenradsatzes (NS1) sind mit dem Steg (45) des zweiten Nachschalt-Planetenradsatzes (NS2) verbunden und über das fünfte Schaltelement (E) mit der Antriebswelle (1) verbindbar;
- das Sonnenrad (41) des zweiten Nachschalt-Planetenradsatzes (NS2) ist über das dritte Schaltelement (C) festsetzbar;
- die Planetenräder (42) des zweiten Nachschalt-Planetenradsatzes (NS2) und die äußeren Planetenräder (32'') des ersten Nachschalt-Planetenradsatzes (NS1) sind zusammengefaßt;
- der Steg (45) des zweiten Nachschalt-Planetenradsatzes (NS2) ist über das vierte Schaltelement (D) festsetzbar; und
- das Hohlrad (33) des ersten Nachschalt-Planetenradsatzes (NS1) und das Hohlrad (43) des zweiten Nachschalt-Planetenradsatzes (NS2) sind miteinander und mit der Abtriebswelle (3) verbunden.

10. Mehrstufengetriebe nach Anspruch 2 und 5, **gekennzeichnet durch** folgende Merkmale:
- der erste Vorschalt-Planetenradsatz (VS1) weist ein Sonnenrad (11), ein Hohlrad (13), sowie zwei gekoppelten Stegen (15', 15'') mit inneren und äußeren Planetenrädern (12', 12'') auf;
- beide Nachschalt-Planetenradsätze (NS1, NS2) weisen jeweils ein Sonnenrad (31, 41), ein Hohlrad (33, 43), sowie einen Steg (35, 45) mit Planetenrädern (32, 42) auf;
- das Sonnenrad (11) des ersten Vorschalt-Planetenradsatzes (VS1) ist mit der Antriebswelle (1) verbunden;
- die gekoppelten Stege (15', 15") des ersten Vorschalt-Planetenradsatzes (VS1) sind über das dritte Schaltelement (C) mit dem Sonnenrad (41) des zweiten Nachschalt-Planetenradsatzes (NS2) verbindbar;
- das Hohlrad (13) des ersten Vorschalt-Planetenradsatzes (VS1) ist festgesetzt;
- das Sonnenrad (31) des ersten Nachschalt-Planetenradsatzes (NS1) ist über das erste Schaltelement (A) mit der Antriebswelle (1) verbindbar und über das sechste Schaltelement (A') festsetzbar;
- das Sonnenrad (41) des zweiten Nachschalt-Planetenradsatzes (NS2) ist über das zweite Schaltelement (B) festsetzbar;
- der Steg (45) des zweiten Nachschalt-Planetenradsatzes (NS2) und das Hohlrad (33) des ersten Nachschalt-Planetenradsatzes (NS1) sind miteinander verbunden, über das fünfte Schaltelement (E) mit der Antriebswelle (1) verbindbar, sowie über das vierte Schaltelement (D) festsetzbar; und
- der Steg (35) des ersten Nachschalt-Planetenradsatzes (NS1) und das Hohlrad (43) des zweiten Nachschalt-Planetenradsatzes (NS2) sind miteinander und mit der Abtriebswelle (3) verbunden.

11. Mehrstufengetriebe nach Anspruch 2 und 5, **gekennzeichnet durch** folgende Merkmale:
- der erste Vorschalt-Planetenradsatz (VS1) weist ein Sonnenrad (11), ein Hohlrad (13), sowie einen Steg (15) mit aus kleinen Planetenrädern (12k) und großen Planetenrädern (12g) gebildeten Stufenplanetenrädern auf;
- beide Nachschalt-Planetenradsätze (NS1, NS2) weisen jeweils ein Sonnenrad (31, 41), ein Hohlrad (33, 43), sowie einen Steg (35, 45) mit Planetenrädern (32, 42) auf;
- das Sonnenrad (11) des ersten Vorschalt-Planetenradsatzes (VS1) ist mit der Antriebswelle (1) verbunden,
- der Steg (15) des ersten Vorschalt-Planetenradsatzes (VS1) ist festgesetzt;
- die kleinen Planetenräder (12k) des ersten Vorschalt-Planetenradsatzes (VS1) kämmen mit dessem Sonnenrad (11), die großen Planetenräder (12g) des ersten Vorschalt-Planetenradsatzes (VS1) kämmen mit dessem Hohlrad (13);
- das Hohlrad (13) des ersten Vorschalt-Planetenradsatzes (VS1) ist über das dritte Schaltelement (C) mit dem Sonnenrad (41) des zweiten Nachschalt-Planetenradsatzes (NS2) verbindbar;
- das Sonnenrad (31) des ersten Nachschalt-Planetenradsatzes (NS1) ist über das erste Schaltelement (A) mit der Antriebswelle (1) verbindbar, sowie über das sechste Schaltelement (A') festsetzbar;
- das Sonnenrad (41) des zweiten Nachschalt-Planetenradsatzes (NS2) ist über das zweite Schaltelement (B) festsetzbar;
- der Steg (45) des zweiten Nachschalt-Planetenradsatzes (NS2) und das Hohlrad (33) des ersten Nachschalt-Planetenradsatzes (NS1) sind miteinander verbunden, über das fünfte Schaltelement (E) mit der Antriebswelle (1) verbindbar, sowie über das vierte Schaltelement (D) festsetzbar; und
- der Steg (35) des ersten Nachschalt-Planetenradsatzes (NS1) und das Hohlrad (43) des zweiten Nachschalt-Planetenradsatzes (NS2) sind miteinander und mit der Abtriebswelle (3) verbunden.

12. Mehrstufengetriebe nach Anspruch 2 und 5, **gekennzeichnet durch** folgende Merkmale:
- der erste Vorschalt-Planetenradsatz (VS1) weist ein Sonnenrad (11), ein Hohlrad (13), sowie einen Steg (15) mit aus kleinen Planetenrädern (12k) und großen Planetenrädern (12g) gebildeten Stufenplanetenrädern auf;
- beide Nachschalt-Planetenradsätze (NS1, NS2) weisen jeweils ein Sonnenrad (31, 41), ein Hohlrad (33, 43), sowie einen Steg (35, 45) mit Planetenrädern (32, 42) auf;
- das Sonnenrad (11) des ersten Vorschalt-Planetenradsatzes (VS1) ist mit der Antriebswelle (1) verbunden,
- der Steg (15) des ersten Vorschalt-Planetenradsatzes (VS1) ist festgesetzt;
- die kleinen Planetenräder (12k) des ersten Vorschalt-Planetenradsatzes (VS1) kämmen mit dessem Sonnenrad (11), die großen Planetenräder (12g) des ersten Vorschalt-Planetenradsatzes (VS1) kämmen mit dessem Hohlrad (13);
- die Sonnenräder (31, 41) der beiden Nachschalt-Planetenradsätze (NS1, NS2) sind miteinander verbunden, über das dritte Schaltelement (C) mit dem Hohlrad (13) des ersten Vorschalt-Planetenradsatzes (VS1) verbindbar, sowie über das zweite Schaltelement (B) festsetzbar;
- das Hohlrad (33) des ersten Nachschalt-Planetenradsatzes (NS1) ist über das erste Schaltelement (A) mit der Antriebswelle (1) verbindbar und über das sechste Schaltelement (A') festsetzbar;
- der Steg (45) des zweiten Nachschalt-Planetenradsatzes (NS2) ist über das fünfte Schaltelement (E) mit der Antriebswelle (1) verbindbar, sowie über das vierte Schaltelement (D) festsetzbar, insbesondere über den Steg (15) des ersten Vorschalt-Planetenradsatzes (VS1); und
- der Steg (35) des ersten Nachschalt-Planetenradsatzes (NS1) und das Hohlrad (43) des zweiten Nachschalt-Planetenradsatzes (NS2) sind miteinander und mit der Abtriebswelle (3) verbunden.

13. Mehrstufengetriebe nach Anspruch 2 und 6, **gekennzeichnet durch** folgende Merkmale:
- beide Vorschalt-Planetenradsätze (VS1, VS2) und beide Nachschalt-Planetenradsätze (NS1, NS1) weisen jeweils ein Sonnenrad (11, 21, 31, 41), ein Hohlrad (13, 23, 33, 43), sowie einen Steg (15, 25, 35, 45) mit Planetenrädern (12, 22, 32, 42) auf;
- das Sonnenrad (11) des ersten Vorschalt-Planetenradsatzes (VS1) ist mit der Antriebswelle (1) verbunden;
- das Hohlrad (13) des ersten Vorschalt-Planetenradsatzes (VS1) ist festgesetzt;
- das Sonnenrad (21) des zweiten Vorschalt-Planetenradsatzes (VS2) ist mit der Antriebswelle (1) verbunden,
- der Steg (25) des zweiten Vorschalt-Planetenradsatzes (VS2) ist festgesetzt;
- die Sonnenräder (31, 41) der beiden Nachschalt-Planetenradsätze (NS1, NS2) sind miteinander verbunden, über das zweite Schaltelement (B) mit dem Steg (15) des ersten Vorschalt-Planetenradsatzes (VS1) verbindbar, sowie über das dritte Schaltelement (C) mit dem Hohlrad (23) des zweiten Vorschalt-Planetenradsatzes (VS2) verbindbar;
- das Hohlrad (43) des zweiten Nachschalt-Planetenradsatzes (NS2) und das Hohlrad (33) ersten Nachschalt-Planetenradsatzes (NS1) sind miteinander verbunden, über das erste Schaltelement (A) mit der Antriebswelle (1) verbindbar, sowie über das sechste Schaltelement (A') festsetzbar;
- der Steg (45) des zweiten Nachschalt-Planetenradsatzes (NS2) ist über das fünfte Schaltelement (E) mit der die Antriebswelle (1) und über das vierte Schaltelement (D) mit dem Steg (15) des ersten Vorschalt-Planetenradsatzes (VS1) verbindbar; und
- der Steg (35) des ersten Nachschalt-Planetenradsatzes (NS1) ist mit der Abtriebswelle (3) verbunden.

14. Mehrstufengetriebe nach Anspruch 2 und 7, **gekennzeichnet durch** folgende Merkmale:
- der erste schaltbare Vorschalt-Planetenradsatz (VS1) sowie die beiden Nachschalt-Planetenradsätze (NS1, NS1) weisen jeweils ein Sonnenrad (11, 31, 41), ein Hohlrad (13, 33, 43), sowie einen Steg (15, 35, 45) mit Planetenrädern (12, 32, 42) auf;
- das Sonnenrad (11) des ersten Vorschalt-Planetenradsatzes (VS1) ist mit der Antriebswelle (1) verbunden,
- der Steg (15) des ersten Vorschalt-Planetenradsatzes (VS1) ist über das dritte Schaltelement (C) festsetzbar;
- das Hohlrad (13) des ersten Vorschalt-Planetenradsatzes (VS1) ist mit dem Sonnenrad (41) des zweiten Nachschalt-Planetenradsatzes (NS2) verbunden und über das zweite Schaltelement (B) festsetzbar;
- das Sonnenrad (31) des ersten Nachschalt-Planetenradsatzes (NS1) ist über das erste Schaltelement (A) mit der Antriebswelle (1) verbindbar und über das sechste Schaltelement (A') festsetzbar;
- das Hohlrad (33) des ersten Nachschalt-Planetenradsatzes (NS1) und der Steg (45) des zweiten Nachschalt-Planetenradsatzes (NS2) sind miteinander verbunden, über das vierte Schaltelement (D) festsetzbar, sowie über das fünfte Schaltelement (E) mit der Antriebswelle (1) verbindbar; und
- das Hohlrad (43) des zweiten Nachschalt-Planetenradsatzes (NS2) und der Steg (35) des ersten Nachschalt-Planetenradsatzes (NS1) sind miteinander und mit der Abtriebswelle (2) verbunden.

15. Mehrstufengetriebe nach Anspruch 2 und 7, **gekennzeichnet durch** folgende Merkmale:
- der erste schaltbare Vorschalt-Planetenradsatz (VS1) sowie die beiden Nachschalt-Planetenradsätze (NS1, NS1) weisen jeweils ein Sonnenrad (11, 31, 41), ein Hohlrad (13, 33, 43), sowie einen Steg (15, 35, 45) mit Planetenrädern (12, 32, 42) auf;
- das Sonnenrad (11) des ersten Vorschalt-Planetenradsatzes (VS1) ist über das dritte Schaltelement (C) mit der Antriebswelle (1) verbindbar;
- der Steg (15) des ersten Vorschalt-Planetenradsatzes (VS1) ist festgesetzt;
- das Hohlrad (13) des ersten Vorschalt-Planetenradsatzes (VS1) und das Sonnenrad (41) des zweiten Nachschalt-Planetenradsatzes (NS2) sind miteinander verbunden und über das zweite Schaltelement (B) festsetzbar;
- das Sonnenrad (31) des ersten Nachschalt-Planetenradsatzes (NS1) ist über das erste Schaltelement (A) mit der Antriebswelle (1) verbindbar und über das sechste Schaltelement (A') festsetzbar;
- das Hohlrad (33) des ersten Nachschalt-Planetenradsatzes (NS1) und der Steg (45) des zweiten Nachschalt-Planetenradsatzes (NS2) sind miteinander verbunden, über das vierte Schaltelement (D) festsetzbar, sowie über das fünfte Schaltelement (E) mit der Antriebswelle (1) verbindbar; und
- das Hohlrad (43) des zweiten Nachschalt-Planetenradsatzes (NS2) und der Steg (35) des ersten Nachschalt-Planetenradsatzes (NS1) sind miteinander und mit der Abtriebswelle (2) verbunden.

16. Mehrstufengetriebe nach Anspruch 2 und 7, **gekennzeichnet durch** folgende Merkmale:
- der erste schaltbare Vorschalt-Planetenradsatz (VS1) weist ein Sonnenrad (11), ein Hohlrad (13) sowie zwei gekoppelte Stege (15', 15'') mit inneren und äußeren Planetenrädern (12', 12'') auf;
- beide Nachschalt-Planetenradsätze (NS1, NS1) weisen jeweils ein Sonnenrad (31, 41), ein Hohlrad (33, 43), sowie einen Steg (35, 45) mit Planetenrädern (32, 42) auf;
- das Sonnenrad (11) des ersten Vorschalt-Planetenradsatzes (VS1) ist mit der Antriebswelle (1) verbunden;
- die gekoppelten Stege (15', 15'') des ersten Vorschalt-Planetenradsatzes (VS1) sind mit dem Sonnenrad (41) des zweiten Nachschalt-Planetenradsatzes (NS2) verbunden und über das zweite Schaltelement (B) festsetzbar;
- das Hohlrad (13) des ersten Vorschalt-Planetenradsatzes (VS1) ist über das dritte Schaltelement (C) festsetzbar;
- das Sonnenrad (31) des ersten Nachschalt-Planetenradsatzes (NS1) ist über das erste Schaltelement (A) mit der Antriebswelle (1) verbindbar und über das sechste Schaltelement (A') festsetzbar;
- das Hohlrad (33) des ersten Nachschalt-Planetenradsatzes (NS1) und der Steg (45) des zweiten Nachschalt-Planetenradsatzes (NS2) sind miteinander verbunden, über das vierte Schaltelement (D) festsetzbar, sowie über das fünfte Schaltelement (E) mit der Antriebswelle (1) verbindbar; und
- das Hohlrad (43) des zweiten Nachschalt-Planetenradsatzes (NS2) und der Steg (35) des ersten Nachschalt-Planetenradsatzes (NS1) sind miteinander und mit der Abtriebswelle (2) verbunden.

17. Mehrstufengetriebe nach Anspruch 2 und 7, **gekennzeichnet durch** folgende Merkmale:
- der erste schaltbare Vorschalt-Planetenradsatz (VS1) weist ein Sonnenrad (11), ein Hohlrad (13) sowie zwei gekoppelte Stege (15', 15'') mit inneren und äußeren Planetenrädern (12', 12'') auf;
- beide Nachschalt-Planetenradsätze (NS1, NS1) weisen jeweils ein Sonnenrad (31, 41), ein Hohlrad (33, 43), sowie einen Steg (35, 45) mit Planetenrädern (32, 42) auf;
- das Sonnenrad (11) des ersten Vorschalt-Planetenradsatzes (VS1) ist über das dritte Schaltelement (C) mit der Antriebswelle (1) verbindbar;
- die gekoppelten Stege (15', 15'') des ersten Vorschalt-Planetenradsatzes (VS1) und das Sonnenrad (41) des zweiten Nachschalt-Planetenradsatzes (NS2) sind miteinander verbunden und über das zweite Schaltelement (B) festsetzbar;
- das Hohlrad (13) des ersten Vorschalt-Planetenradsatzes (VS1) ist festgesetzt;
- das Sonnenrad (31) des ersten Nachschalt-Planetenradsatzes (NS1) ist über das erste Schaltelement (A) mit der Antriebswelle (1) verbindbar und über das sechste Schaltelement (A') festsetzbar;
- das Hohlrad (33) des ersten Nachschalt-Planetenradsatzes (NS1) und der Steg (45) des zweiten Nachschalt-Planetenradsatzes (NS2) sind miteinander verbunden, über das vierte Schaltelement (D) festsetzbar, sowie über das fünfte Schaltelement (E) mit der Antriebswelle (1) verbindbar; und
- das Hohlrad (43) des zweiten Nachschalt-Planetenradsatzes (NS2) und der Steg (35) des ersten Nachschalt-Planetenradsatzes (NS1) sind miteinander und mit der Abtriebswelle (2) verbunden.

18. Mehrstufengetriebe nach Anspruch 3 und 5, **gekennzeichnet durch** folgende Merkmale:
- der erste Vorschalt-Planetenradsatz (VS1) weist ein Sonnenrad (11), ein Hohlrad (13), sowie einen Steg (15) mit Planetenrädern (12) auf;
- beide Nachschalt-Planetenradsätze (NS1, NS2) weisen jeweils ein Sonnenrad (31, 41), ein Hohlrad (33, 43), sowie einen Steg (35, 45) mit Planetenrädern (32, 42) auf;
- das Sonnenrad (11) des ersten Vorschalt-Planetenradsatzes (VS1) ist mit der Antriebswelle (1) verbunden,
- das Hohlrad (13) des ersten Vorschalt-Planetenradsatzes (VS1) ist festgesetzt;
- der Steg (15) des ersten Vorschalt-Planetenradsatzes (VS1) ist über das zweite Schaltelement (B) mit dem Sonnenrad (41) des zweiten Nachschalt-Planetenradsatzes (NS2) verbindbar;
- das Sonnenrad (31) des ersten Nachschalt-Planetenradsatzes (NS1) ist über das erste Schaltelement (A) mit der Antriebswelle (1) verbindbar und über das sechste Schaltelement (A') festsetzbar;
- der Steg (45) des zweiten Nachschalt-Planetenradsatzes (NS2) und das Hohlrad (33) des ersten Nachschalt-Planetenradsatzes (NS1) sind miteinander verbunden, über das vierte Schaltelement (E) mit der Antriebswelle (1) verbindbar, über das dritte Schaltelement (D) mit dem Steg (15) des ersten Vorschalt-Planetenradsatzes (VS1) verbindbar, sowie über das fünfte Schaltelement (D') festsetzbar; und
- der Steg (35) des ersten Nachschalt-Planetenradsatzes (NS1) und das Hohlrad (43) des zweiten Nachschalt-Planetenradsatzes (NS2) sind miteinander und mit der Abtriebswelle (3) verbunden.

19. Mehrstufengetriebe nach Anspruch 3 und 5, **gekennzeichnet durch** folgende Merkmale:
- der erste Vorschalt-Planetenradsatz (VS1) und die beiden Nachschalt-Planetenradsätze (NS1, NS2) weisen jeweils ein Sonnenrad (11, 31, 41), ein Hohlrad (13, 33, 43), sowie einen Steg (15, 35, 45) mit Planetenrädern (12, 32, 42) auf;
- das Sonnenrad (11) des ersten Vorschalt-Planetenradsatzes (VS1) ist mit der Antriebswelle (1) verbunden,
- das Hohlrad (13) des ersten Vorschalt-Planetenradsatzes (VS1) ist festgesetzt;
- der Steg (15) des ersten Vorschalt-Planetenradsatzes (VS1) ist über das zweite Schaltelement (B) mit dem Hohlrad (43) des zweiten Nachschalt-Planetenradsatzes (NS2) verbindbar;
- die Sonnenräder (31, 41) der beiden Nachschalt-Planetenradsätze (NS1, NS2) sind miteinander verbunden, über das erste Schaltelement (A) mit der Antriebswelle (1) verbindbar, sowie über das sechste Schaltelement (A') festsetzbar;
- der Steg (45) des zweiten Nachschalt-Planetenradsatzes (NS2) und das Hohlrad (33) des ersten Nachschalt-Planetenradsatzes (NS1) sind miteinander verbunden, über das dritte Schaltelement (D) mit dem Steg (15) des ersten Vorschalt-Planetenradsatzes (VS1) verbindbar, über das vierte Schaltelement (E) mit der Antriebswelle (1) verbindbar, sowie über das fünfte Schaltelement (D') festsetzbar; und
- der Steg (35) des ersten Nachschalt-Planetenradsatzes (NS1) ist mit der Abtriebswelle (3) verbunden.

20. Mehrstufengetriebe nach Anspruch 4 und 5, **gekennzeichnet durch** folgende Merkmale:
- der erste Vorschalt-Planetenradsatz (VS1) weist ein Sonnenrad (11), ein Hohlrad (13), sowie zwei gekoppelte Stege (15', 15 ") mit inneren und äußeren Planetenrädern (12', 12'') auf;
- der erste Nachschalt-Planetenradsatz (NS1) ist als Doppelplanetenradsatz ausgebildet, mit einem Sonnenrad (31), einem Hohlrad (33), sowie zwei gekoppelten Stegen (35', 35'') mit inneren und äußeren Planetenrädern (32', 32'');
- der zweite Nachschalt-Planetenradsatz (NS2) weist ein Sonnenrad (41), ein Hohlrad (43) sowie einen Steg (45) mit Planetenrädern (42) auf;
- das Sonnenrad (11) des ersten Vorschalt-Planetenradsatzes (VS1) ist mit der Antriebswelle (1) verbunden,
- die gekoppelten Stege (15', 15'') des ersten Vorschalt-Planetenradsatzes (VS1) sind festgesetzt;
- das Sonnenrad (31) des ersten Nachschalt-Planetenradsatzes (NS1) ist über das erste Schaltelement (A) mit der Antriebswelle (1) verbindbar, sowie über das siebte Schaltelement (A') festsetzbar, insbesondere über den Steg (15'') der äußeren Planetenräder (12") des ersten Vorschalt-Planeten-radsatzes (VS1);
- das Sonnenrad (41) des zweiten Nachschalt-Planetenradsatzes (NS2) ist über das zweite Schaltelement (B) mit dem Hohlrad (13) des ersten Vorschalt-Planetenradsatzes (VS1) verbindbar, sowie über das dritte Schaltelement (C) festsetzbar, insbesondere über den Steg (15'') der äußeren Planetenräder (12'') des ersten Vorschalt-Planetenradsatzes (VS1);
- der Steg (45) des zweiten Nachschalt-Planetenradsatzes (NS2) und die gekoppelten Stege (35', 35'') des ersten Nachschalt-Planetenradsatzes (NS1) sind miteinander verbunden, über das vierte Schaltelement (D) mit dem Hohlrad (13) des ersten Vorschalt-Planetenradsatzes (VS1) verbindbar, über das fünfte Schaltelement (E) mit der Antriebswelle (1) verbindbar, sowie über das sechste Schaltelement (D') festsetzbar,
- das Sonnenrad (31) des ersten Nachschalt-Planetenradsatzes (NS1) und das Hohlrad (43) des zweiten Nachschalt-Planetenradsatzes (NS2) sind miteinander verbunden; und
- das Hohlrad (33) des ersten Nachschalt-Planetenradsatzes (NS1) ist mit der Abtriebswelle (3) verbunden.

21. Mehrstufengetriebe nach Anspruch 4 und 5, **gekennzeichnet durch** folgende Merkmale:
- der erste Vorschalt-Planetenradsatz (VS1) und die beiden Nachschalt-Planetenradsätze (NS1, NS2) weisen jeweils ein Sonnenrad (11, 31, 41), ein Hohlrad (13, 33, 34), sowie einen Steg (15, 35, 45) mit Planetenrädern (12, 32, 42) auf;
- das Sonnenrad (11) des ersten Vorschalt-Planetenradsatzes (VS1) ist mit der Antriebswelle (1) verbunden,
- das Hohlrad (13) des ersten Vorschalt-Planetenradsatzes (VS1) ist festgesetzt;
- das Sonnenrad (31) des ersten Nachschalt-Planetenradsatzes (NS1) ist über das erste Schaltelement (A) mit der Antriebswelle (1) verbindbar, sowie über das siebte Schaltelement (A') festsetzbar;
- das Sonnenrad (41) des zweiten Nachschalt-Planetenradsatzes (NS2) ist über das zweite Schaltelement (B) mit dem Steg (15) des ersten Vorschalt-Planetenradsatzes (VS1) verbindbar, sowie über das dritte Schaltelement (C) festsetzbar;
- der Steg (45) des zweiten Nachschalt-Planetenradsatzes (NS2) und das Hohlrad (33) des ersten Nachschalt-Planetenradsatzes (NS1) sind miteinander verbunden, über das vierte Schaltelement (D) mit dem der Steg (15) des ersten Vorschalt-Planetenradsatzes (VS1) verbindbar, über das fünfte Schaltelement (E) mit der Antriebswelle (1) verbindbar, sowie über das sechste Schaltelement (D') festsetzbar; und
- der Steg (35) des ersten Nachschalt-Planetenradsatzes (NS1) und das Hohlrad (43) des zweiten Nachschalt-Planetenradsatzes (NS2) sind miteinander und mit der Abtriebswelle (3) verbunden.

22. Mehrstufengetriebe nach Anspruch 18 oder 19 oder 21, **dadurch gekennzeichnet, daß** der erste Vorschaltsatz (VS1) als Plus-Getriebe mit einem Sonnenrad (11), einem Hohlrad (13) und zwei gekoppelten Stegen (15', 15'') mit inneren und äußeren Planetenrädern (12', 12"), wobei die gekoppelten Stege (15', 15'') des ersten Vorschalt-Planetenradsatzes (VS1) festgesetzt sind anstelle dessen Hohlrads (13), und wobei das zweite und dritte bzw. zweite und vierte Schaltelement (B, D) mit dem Hohlrad (13) des ersten Vorschalt-Planetenradsatzes (VS1) verbunden ist anstelle mit dessem Steg.

23. Mehrstufengetriebe nach Anspruch 4 und 5, **gekennzeichnet durch** folgende Merkmale:
- der erste Vorschalt-Planetenradsatz (VS1) weist ein Sonnenrad (11), ein Hohlrad (13), sowie zwei gekoppelte Stege (15', 15'') mit inneren und äußeren Planetenrädern (12', 12'') auf;
- beide Nachschalt-Planetenradsätze (NS1, NS2) weisen jeweils ein Sonnenrad (31, 41), ein Hohlrad (33, 43), sowie einen Steg (35, 45) mit Planetenrädern (32, 42) auf;
- das Sonnenrad (11) des ersten Vorschalt-Planetenradsatzes (VS1) ist mit der Antriebswelle (1) ist mit verbunden;
- die gekoppelten Stege (15', 15'') des ersten Vorschalt-Planetenradsatzes (VS1) sind festgesetzt;
- die Sonnenräder (31, 41) der beiden Nachschalt-Planetenradsätze (NS1, NS2) sind miteinander verbunden, über das zweite Schaltelement (B) mit dem Hohlrad (13) des ersten Vorschalt-Planetenradsatzes (VS1) verbindbar, sowie über das dritte Schaltelement (C) festsetzbar,
- das Hohlrad (33) des ersten Nachschalt-Planetenradsatzes (NS1) ist über das erste Schaltelement (A) mit die Antriebswelle (1) verbindbar, sowie über das siebte Schaltelement (A') festsetzbar;
- der Steg (45) des zweiten Nachschalt-Planetenradsatzes (NS2) ist über das vierte Schaltelement (D) mit dem Hohlrad (13) des ersten Vorschalt-Planetenradsatzes (VS1) verbindbar, über das fünfte Schaltelement (E) mit der Antriebswelle (1) verbindbar, sowie über das sechste Schaltelement (D') festsetzbar, insbesondere über den Steg (15'') der äußeren Planetenräder (12'') des ersten Vorschalt-Planetenradsatzes (VS1); und
- der Steg (35) des ersten Nachschalt-Planetenradsatzes (NS1) und das Hohlrad (43) des zweiten Nachschalt-Planetenradsatzes (NS2) sind miteinander und mit der Abtriebswelle (3) verbunden.

24. Mehrstufengetriebe nach Anspruch 4 und 6, **gekennzeichnet durch** folgende Merkmale:
- der erste Vorschalt-Planetenradsatz (VS1) und der zweite Nachschalt-Planetenradsatz (NS2) weisen jeweils ein Sonnenrad (11, 41), ein Hohlrad (13, 43), sowie einen Steg (15, 45) mit Planetenrädern (12, 42) auf;
- der zweite Vorschalt-Planetenradsatz (VS2) ist als Doppelplanetenradsatz ausgebildet, mit einem Sonnenrad (21), einem Hohlrad (23), sowie zwei gekoppelte Stege (25', 25") mit inneren und äußeren Planetenrädern (22', 22'');
- der erste Nachschalt-Planetenradsatz (NS1) ist als Doppelplanetenradsatz ausgebildet, mit einem Sonnenrad (31), einem Hohlrad (33), sowie zwei gekoppelten Stegen (35', 35'') mit inneren und äußeren Planetenrädern (32', 32'');
- das Sonnenrad (11) des ersten Vorschalt-Planetenradsatzes (VS1) ist mit der Antriebswelle (1) verbunden;
- das Sonnenrad (21) des zweiten Vorschalt-Planetenradsatzes (VS2) ist festgesetzt;
- die Hohlräder (13, 23) des beiden Vorschalt-Planetenradsätze (VS1, VS2) sind miteinander verbunden und über das siebte Schaltelement (A') mit dem Sonnenrad (31) des ersten Nachschalt-Planetenradsatzes (NS1) verbindbar;
- die gekoppelten Stege (25', 25'') des zweiten Vorschalt-Planetenradsatzes (VS2) und der Steg (15) des ersten Vorschalt-Planetenradsatzes (VS1) sind miteinander verbunden;
- das Sonnenrad (31) des ersten Nachschalt-Planetenradsatzes (NS1) und das Hohlrad (43) des zweiten Nachschalt-Planetenradsatzes (NS2) sind miteinander verbunden und über das erste Schaltelement (A) mit der Antriebswelle (1) verbindbar;
- die gekoppelten Stegen (35', 35'') des ersten Nachschalt-Planetenradsatzes (NS1) sind über das fünfte Schaltelement (E) mit der Antriebswelle (1) verbindbar;
- das Sonnenrad (41) des zweiten Nachschalt-Planetenradsatzes (NS2) ist über das zweite Schaltelement (B) mit den gekoppelten Stegen (25', 25'') des zweiten Vorschalt-Planetenradsatzes (VS2) verbindbar, sowie über das dritte Schaltelement (C) festsetzbar;
- der Steg (45) des zweiten Nachschalt-Planetenradsatzes (NS2) und die gekoppelten Stegen (35', 35'') des ersten Nachschalt-Planetenradsatzes (NS1) sind miteinander verbunden, über das vierte Schaltelement (D) mit den gekoppelten Stegen (25', 25'') des zweiten Vorschalt-Planetenradsatzes (VS2) verbindbar, sowie über das sechste Schaltelement (D') festsetzbar; und
- das Hohlrad (33) des ersten Nachschalt-Planetenradsatzes (NS1) ist mit der Abtriebswelle (3) verbunden.

## Claims

1. Multistep reduction gear
with a drive shaft (1)
linked with a front-mounted set (VS);
with an output shaft (2)
linked with a rear-mounted set (NS);
and with six shifting components (A, B, C, D, E, D'),
selective shifting of which permits selective transfer of an input speed (n) of the drive shaft (1)
as well as speeds generated in the front-mounted set (VS) to the rear-mounted set (NS) for the shifting of at least seven forward gears in such a manner that for the shifting from one gear to the next higher or lower gear always only one of the two currently activated shifting components is deactivated and another shifting component is activated;
with the front-mounted set (VS) being composed of a front-mounted planetary gear set (VS1) or of
maximally two coupled front-mounted planetary gear sets (VS1, VS2),
and with the rear-mounted set (NS) being a dual-carrier four-shaft transmission with two shiftable rear-mounted planetary gear sets (NS1, NS2),
with a first free shaft of the rear-mounted set (NS) being linked with the first shifting component
(A) and rotating at a speed lower than or equal to the input speed (n) of the drive shaft (1) when the first shifting component (A) is activated,
and with a second free shaft of the rear-mounted set (NS) being linked with the second and third shifting component (B, C),
and with a third free shaft of the rear-mounted set (NS) being linked with the fourth shifting component (D) and rotating at a speed lower than input speed (n) of the drive shaft (1) when the fourth shifting component (D) is activated,
and with the third free shaft of the rear-mounted set (NS) being linked with the fifth shifting component (E) and rotating at the input speed (n) of the drive shaft (1) when the fifth shifting component (E) is activated, and generating the forward gear designed as direct gear as well as all forward gears designed as OD gears when the fifth shifting component (E) is activated:
and with a fourth free shaft of the rear-mounted set (NS) being linked with the output shaft (2);
and with the third free shaft of the rear-mounted set (NS) - in addition to the fourth shifting component (D) - being linked with the sixth shifting component (D') and rotating at a speed lower than the input speed (n) of the drive shaft (1) when the sixth shifting component (D') is activated.

2. Multistep reduction gear with a drive shaft (1) linked with a front-mounted set (VS) and an output shaft (2) linked with a rear-mounted set (NS), and with maximally seven shifting components (A, B, C', D, E, D', A',), selective shifting of which permits selective transfer of an input speed (n) of the drive shaft (1) as well as speeds generated in the front-mounted set (VS) to the rear-mounted set (NS) for the shifting of at least seven forward gears in such a manner that for the shifting from one gear to the next higher or lower gear always only one of the two currently activated shifting components is deactivated and another shifting component is activated, with the front-mounted set (VS) being composed of a front-mounted planetary gear set (VS1) or maximally two coupled front-mounted planetary gear sets (VS1, VS2) and the rear-mounted set (NS) being a dual-carrier four-shaft transmission with two shiftable rear-mounted planetary gear sets (NS1, NS2), with a first free shaft of the rear-mounted set (NS) being linked with the first shifting component (A) and rotating at a speed lower than or equal to the input speed (n) of the drive shaft when the first shifting component (A) is activated, and with a second free shaft of the rear-mounted set (NS) being linked with the second and third shifting component (B, C), and with a third free shaft of the rear-mounted set (NS) being linked with the fourth shifting component (D) and rotating at a speed lower than the input speed (n) of the drive shaft (1) when the fourth shifting component (D) is activated, and with the third free shaft of the rear-mounted set (NS) being linked with the fifth shifting component (E) and rotating at the input speed (n) of the drive shaft (1) when the fifth shifting component (E) is activated, and with a fourth free shaft of the rear-mounted set (NS) being linked with the output shaft (2), with six shifting components (A, B, C, D, E, A') being provided, and with the first free shaft of the rear-mounted set (NS) - in addition to the first shifting component (A) - being linked with another shifting component (A') and rotating at a speed lower than the input speed (n) of the drive shaft (1) when the shifting component (A') is activated.

3. Multistep reduction gear with a drive shaft (1) linked with a front-mounted set (VS) and an output shaft (2) linked with a rear-mounted set (NS) and maximally seven shifting components (A, B, C, D, E, D', A'), selective shifting of which permits selective transfer of an input speed (n) of the drive shaft (1) as well as speeds generated in the front-mounted set (VS) to the rear-mounted set (NS) for the shifting of at least seven forward gears in such a manner that for the shifting from one gear to the next higher or lower gear always only one of the two currently activated shifting components is deactivated and another shifting component is activated, with the front-mounted set (VS) being composed of a front-mounted planetary gear set (VS1) or maximally two coupled front-mounted planetary gear sets (VS1, VS2) and the rear-mounted set (NS) being a dual-carrier four-shaft transmission with two shiftable rear-mounted planetary gear sets (NS1, NS2), with a first free shaft of the rear-mounted set (NS) being linked with the first shifting component (A) and rotating at a speed lower than or equal to the input speed (n) of the drive shaft when the first shifting component (A) is activated, and with a second free shaft of the rear-mounted set (NS) being linked with the second and third shifting component (B, C), and with a third free shaft of the rear-mounted set (NS) being linked with the fourth shifting component (D) and rotating at a speed lower than the input speed (n) of the drive shaft (1) when the fourth shifting component (D) is activated, and with the third free shaft of the rear-mounted set (NS) being linked with the fifth shifting component (E) and rotating at the input speed (n) of the drive shaft (1) when the fifth shifting component (E) is activated, and with a fourth free shaft of the rear-mounted set (NS) being linked with the output shaft (2), six shifting components (A, B, D, E, D', A') being provided, and the third free shaft of the rear-mounted set (NS) - in addition to the fourth shifting component (D) - being linked with another shifting component (D') and rotating at a speed lower than the input speed (n) of the drive shaft (1) when the shifting component (D') is activated, and with the first free shaft of the rear-mounted set (NS) - in addition to the first shifting component (A) - being linked with another shifting component (A') and rotating at a speed lower than the input speed (n) of the drive shaft (1) when the shifting component (A') is activated.

4. Multistep reduction gear with a drive shaft (1) linked with a front-mounted set (VS) and an output shaft (2) linked with a rear-mounted set (NS) and maximally seven shifting components (A, B, C, D, E, D', A'), selective shifting of which permits selective transfer of an input speed (n) of the drive shaft (1) as well as speeds generated in the front-mounted set (VS) to the rear-mounted set (NS) for the shifting of at least seven forward gears in such a manner that for the shifting from one gear to the next higher or lower gear always only one of the two currently activated shifting components is deactivated and another shifting component is activated, with the front-mounted set (VS) being composed of a front-mounted planetary gear set (VS1) or maximally two coupled front-mounted planetary gear sets (VS1, VS2) and the rear-mounted set (NS) being a dual-carrier four-shaft transmission with two shiftable rear-mounted planetary gear sets (NS 1, NS2), with a first free shaft of the rear-mounted set (NS) being linked with the first shifting component (A) and rotating at a speed lower than or equal to the input speed (n) of the drive shaft when the first shifting component (A) is activated, and with a second free shaft of the rear-mounted set (NS) being linked with the second and third shifting component (B, C), and with a third free shaft of the rear-mounted set (NS) being linked with the fourth shifting component (D) and rotating at a speed lower than the input speed (n) of the drive shaft (1) when the fourth shifting component (D) is activated, and with the third free shaft of the rear-mounted set (NS) being linked with the fifth shifting component (E) and rotating at the input speed (n) of the drive shaft (1) when the fifth shifting component (E) is activated, and with a fourth free shaft of the rear-mounted set (NS) being linked with the output shaft (2), with seven shifting components (A, B, C, D, E, D', A') being provided, and with the third free shaft of the rear-mounted set (NS) - in addition to the fourth shifting component (D) - being linked with another shifting component (D') and rotating at a speed lower than the input speed (n) of the drive shaft (1) when the shifting component (D') is activated, and with the first free shaft of the rear-mounted set (NS) - in addition to the first shifting component (A) - being linked with another shifting component (A') and rotating at a speed lower than the input speed (n) of the drive shaft (1) when the shifting component (A') is activated.

5. Multistep reduction gear according to claim 1 or 2 or 3 or 4,
with the front-mounted set (VS) featuring only one non-shiftable front-mounted planetary gear set (VS1).

6. Multistep reduction gear according to claim 1 or 2 or 3 or 4, **characterized in that** the front-mounted set features two coupled non-shiftable front-mounted planetary gear sets (VS1, VS2).

7. Multistep reduction gear according to claim 1 or 2 or 3 or 4, **characterized in that** the front-mounted set features only one shiftable front-mounted planetary gear set (VS1).

8. Multistep reduction gear according to claim 1 and 5, **characterized by** the following features:
- the first front-mounted planetary gear set (VS1) features a center gear (11), a ring gear (15) and a carrier (15) with stepped planetary gears composed of small planetary gears (12k) and large planetary gears (12g);
- the first rear-mounted planetary gear set (NS1) is a dual planetary gear set with a center gear (31), a ring gear (33), a carrier (35') with inner planetary gears (32') and a carrier (35") with outer planetary gears (32");
- the second rear-mounted planetary gear set (NS2) features a center gear (41), a ring gear (43) and a carrier (45) with planetary gears (42);
- the drive shaft (1) is linked with the center gear (11) of the first front-mounted planetary gear set (VS1);
- the drive shaft (1) is linkable via the fifth shifting component (E) with the carrier (45) of the second rear-mounted planetary gear set (NS2);
- the drive shaft (1) is linkable via the second shifting component (B) with the center gear (41) of the second rear-mounted planetary gear set (NS2);
- the ring gear (13) of the first front-mounted planetary gear set (VS1) is fixed;
- the small planetary gears (12k) of the first front-mounted planetary gear set (VS1) mesh with its center gear (11), the large planetary gears (12g) of the first front-mounted planetary gear set (VS1) mesh with its ring gear (13);
- the carrier (15) of the first front-mounted planetary gear set (VS1) is linkable via the first shifting component (A) with the center gear (31) of the first rear-mounted planetary gear set (NS1);
- the carrier (15) of the first front-mounted planetary gear set (VS1) is linkable via the sixth shifting component (D') with the carrier (35') of the inner planetary gears (32') of the first rear-mounted planetary gear set (NS1);
- the carrier (35') of the inner planetary gear sets (32') of the first rear-mounted planetary gear set (NS1) can be fixed via the fourth shifting component (D);
- the center gear (41) of the second rear-mounted planetary gear set (NS2) can be fixed via the third shifting component (C);
- the carrier (35') of the inner planetary gears (32') of the first rear-mounted planetary gear set (NS1) is linked with the carrier (35") of the outer planetary gears (32") of the first rear-mounted planetary gear set (NS1) and the carrier (45) of the second rear-mounted planetary gear set (NS2);
- the outer planetary gears (32") of the first rear-mounted planetary gear set (NS1) and the planetary gears (42) of the second rear-mounted planetary gear set (NS2) are linked with each other;
- the ring gear (33) of the first rear-mounted planetary gear set (NS1) and the ring gear (43) of the second rear-mounted planetary gear set (NS2) are integrated and linked with the output shaft (3).

9. Multistep reduction gear according to claim 2 and 5, **characterized by** the following features:
- the first front-mounted planetary gear set (VS1) features as center gear (11), a ring gear (13) and two coupled carriers (15', 15") with inner and outer planetary gears (12', 12");
- the first rear-mounted planetary gear set (NS1) is a dual planetary gear set with a center gear (31), a ring gear (33) and two coupled carriers (35', 35") with inner and outer planetary gears (32', 32");
- the second rear-mounted planetary gear set (NS2) features a center gear (41), a ring gear (43) and a carrier (45) with planetary gears (42);
- the center gear (11) of the first front-mounted planetary gear set (VS1) is fixed;
- the coupled carriers (15', 16") of the first front-mounted planetary gear set (VS1) are linked with the drive shaft (1);
- the ring gear (13) of the first front-mounted planetary gear set (VS1) is linkable via the sixth shifting component (A') with the center gear (31) of the first rear-mounted planetary gear set (NS1) and via the second shifting component (B) with the center gear (41) of the second rear-mounted planetary gear set (NS2);
- the center gear (31) of the first rear-mounted planetary gear set (NS1) is linkable via the first shifting component (A) with the drive shaft (1);
- the coupled carriers (35', 35") of the first rear-mounted planetary gear set (NS1) are linked with the carrier (45) of the second rear-mounted planetary gear set (NS2) and linkable via the fifth shifting component (E) with the drive shaft (1);
- the center gear (41) of the second rear-mounted planetary gear set (NS2) can be fixed via the third shifting component (C);
- the planetary gears (42) of the second rear-mounted planetary gear set (NS2) and the outer planetary gears (32") of the first rear-mounted planetary gear set (NS1) are integrated;
- the carrier (45) of the second rear-mounted planetary gear set (NS2) can be fixed via the fourth shifting component (D);
- the ring gear (33) of the first rear-mounted planetary gear set (NS1) and the ring gear (43) of the second rear-mounted planetary gear set (N52) are linked with each other and with the output shaft (3).

10. Multistep reduction gear according to claim 2 and 5, **characterized by** the following features:
- the first front-mounted planetary gear set (VS1) features a center gear (11), a ring gear (13) and two coupled carriers (15', 15") with inner and outer planetary gears (12', 12");
- each rear-mounted planetary gear set (NS1, NS2) features a center gear (31, 41), a ring gear (33, 43) and a carrier (35, 45) with planetary gears (32, 42);
- the center gear (11) of the first front-mounted planetary gear set (VS1) is linked with the drive shaft (1);
- the coupled carriers (15', 15") of the first front-mounted planetary gear set (VS1) are linkable via the third shifting component (C) with the center gear (41) of the second rear-mounted planetary gear set (NS2);
- the ring gear (13) of the first front-mounted planetary gear set (VS1) is fixed;
- the center gear (31) of the first rear-mounted planetary gear set (NS1) is linkable via the first shifting component (A) with the drive shaft (1) and fixable via the sixth shifting component (A');
- the center gear (41) of the second rear-mounted planetary gear set (NS2) is fixable via the second shifting component (B);
- the carrier (45) of the second rear-mounted planetary gear set (NS2) and the ring gear (33) of the first rear-mounted planetary gear set (NS1) are linked with each other, linkable via the fifth shifting component (E) with the drive shaft (1) and fixable via the fourth shifting component (D);
- the carrier (35) of the first rear-mounted planetary gear set (NS1) and the ring gear (43) of the second rear-mounted planetary gear set (NS2) are linked with each other and with the output shaft (3).

11. Multistep reduction gear according to claim 2 and 5, **characterized by** the following features:
- the first front-mounted planetary gear set (VS1) features a center gear (11), a ring gear (13) and a carrier (15) with stepped planetary gears composed of small planetary gears (12k) and large planetary gears (12g);
- each rear-mounted planetary gear set (NS1, NS2) features a center gear (31, 41), a ring gear (33, 43) and a carrier (35, 45) with planetary gears (32, 42);
- the center gear (11) of the first front-mounted planetary gear set (VS1) is linked with the drive shaft (1);
- the carrier (15) of the first front-mounted planetary gear set (VS1) is fixed;
- the small planetary gears (12k) of the first front-mounted planetar gear set (VS1) mesh with its center gear (11), the large planetary gears (12g) of the first front-mounted planetary gear set
(VS1) mesh with its ring gear (13);
- the ring gear (13) of the first front-mounted planetary gear set (VS1) is linkable via the third shifting component (C) with the center gear (41) of the second rear-mounted planetary gear set (NS2);
- the center gear (31) of the first rear-mounted planetary gear set (NS1) is linkable via the first shifting component (A) with the drive shaft (1), and fixable via the sixth shifting component (A');
- the center gear (41) of the second rear-mounted planetary gear set (NS2) is fixable via the second shifting component (B);
- the carrier (45) of the second rear-mounted planetary gear set (NS2) and the ring gear (33) of the first rear-mounted planetary gear set (NS1) are linked with each other, linkable via the fifth shifting component (E) with the drive shaft (1), and fixable via the fourth shifting component (D);
- the carrier (35) of the first rear-mounted planetary gear set (NS1) and the ring gear (43) of the second rear-mounted planetary gear set (NS2) are linked with each other and with the output shaft (3).

12. Multistep reduction gear according to claim 2 and 5, **characterized by** the following features:
- the first front-mounted planetary gear set (VS1) features a center gear (11), a ring gear (13) and a carrier (15) with stepped planetary gears composed of small planetary gears (12k) and large planetary gears (12g); each rear-mounted planetary gear set (NS1, NS2) features a center gear (31, 41), a ring gear (33, 43) and a carrier (35, 45) with planetary gears (32, 42);
- the center gear (11) of the first front-mounted planetary gear set (VS1) is linked with the drive shaft (1);
- the carrier (15) of the first front-mounted planetary gear set (VS1) is fixed;
- the small planetary gears (12k) of the first front-mounted planetary gear set (VS1) mesh with its center gear (11), the large planetary gears (12g) of the first front-mounted planetary gear set (VS1) mesh with its ring gear (13);
- the center gears (31, 41) of the two rear-mounted planetary gears (NS1, NS2) are linked with each other, linkable via the third shifting component (C) with the ring gear (13) of the first front-mounted planetary gear set (VS1), and fixable via the second shifting component (B);
- the ring gear (33) of the first rear-mounted planetary gear set (NS1) is linkable via the first shifting component (A) with the drive shaft (1), and fixabe via the sixth shifting component (A');
- the carrier (45) of the second rear-mounted planetary gear set (NS2) is linkable via the fifth shifting component (E) with the drive shaft (1), and fixable via the fourth shifting component (D), especially via the carrier (15) of the first front-mounted planetary gear set (VS1);
- the carrier (35) of the first rear-mounted planetary gear set (NS1) and the ring gear (43) of the second rear-mounted planetary gear set (NS2) are linked with each other and with the output shaft (3).

13. Multistep reduction gear according to claim 2 and 6, **characterized by** the following features:
- each of the two front-mounted planetary gear sets (VS1, VS2) and each of the two rear-mounted gear sets (NS1, NS1) features a center gear (11, 21, 31, 41), a ring gear (13, 23, 33, 43) and a carrier (15, 25, 35, 45) with planetary gear set (12, 22, 32, 42);
- the center gear (11) of the first front-mounted planetary gear set (VS1) is linked with the drive shaft (1);
- the ring gear (13) of the first front-mounted planetary gear set (VS1) is fixed;
- the center gear (21) of the second front-mounted planetary gear set (VS2) is linked with the drive shaft (1);
- the carrier (25) of the second front-mounted planetary gear set (VS2) is fixed;
- the center gears (31,'41) of the two rear-mounted planetary gear sets (NS1, NS2) are linked with each other, linkable via the second shifting component (B) with the carrier (15) of the first front-mounted planetary gear set (VS1) and linkable via the third shifting component (C) with the ring gear (23) of the second front-mounted planetary gear set (VS2);
- the ring gear (43) of the second rear-mounted planetary gear set (NS2) and the ring gear (33) of the first rear-mounted planetary gear set (NS1) are linked with each other, linkable via the first shifting component (A) with the drive shaft (1), and fixable via the sixth shifting component (A');
- the carrier (45) of the second rear-mounted planetary gear set (NS2) is linkable via the fifth shifting component (E) with the drive shaft (1) and via the fourth shifting component (D) with the carrier (15) of the first front-mounted planetary gear set (VS1);
- the carrier (35) of the first rear-mounted planetary gear set (NS1) is linked with the output shaft (3).

14. Multistep reduction gear according to claim 2 and 7, **characterized by** the following features:
- the first shiftable front-mounted planetary gear set (VS1) and each of the two rear-mounted planetary gear sets (NS1, NS1) feature a center gear (11, 31, 41), a ring gear (13, 33, 43) and a carrier (15, 35; 45) with planetary gears (12, 32, 42);
- the center gear (11) of the first front-mounted planetary gear set (VS1) is linked with the drive shaft (1);
- the carrier (15) of the first front-mounted planetary gear set (VS1) is fixable via the third shifting component (C);
- the ring gear (13) of the first front-mounted planetary gear set (VS1) is linked with the center gear (41) of the second rear-mounted planetary gear set (NS2), and fixable via the second shifting component (B);
- the center gear (31) of the first rear-mounted planetary gear set (NS1) is linkable via the first shifting component (A) with the drive shaft (1), and fixable via the sixth shifting component (A');
- the ring gear (33) of the first rear-mounted planetary gear set (NS1) and the carrier (45) of the second rear-mounted planetary gear set (NS2) are linked with each other, fixable via the fourth shifting component (D), and fixable via the fifth shifting component (E) with the drive shaft (1);
- the ring gear (43) of the second rear-mounted planetary gear set (NS2) and the carrier (35) of the first rear-mounted planetary gear set (NS1) are linked with each other and with the output shaft (2).

15. Multistep reduction gear according to claim 2 and 7, **characterized by** the following features:
- the first shiftable front-mounted planetary gear set (VS1) and each of the two rear-mounted planetary gear sets (NS1, NS1) feature a center gear (11, 31, 41), a ring gear (13, 33, 43) and a carrier (15, 35, 45) with planetary gears (12, 32, 42);
- the center gear (11) of the first front-mounted planetary gear set (VS1) is linkable via the third shifting component (C) with the drive shaft (1);
- the carrier (15) of the first front-mounted planetary gear set (VS1) is fixed;
- the ring gear (13) of the first front-mounted planetary gear set (VS1) and the center gear (41) of the second rear-mounted planetary gear set (NS2) are linked with each other, and fixable via the second shifting component (B);
- the center gear (31) of the first rear-mounted planetary gear set (NS1) is linkable via the first shifting component (A) with the drive shaft (1), and fixable via the sixth shifting component (A');
- the ring gear (33) of the first rear-mounted planetary gear set (NS1) and the carrier (45) of the second rear-mounted planetary gear set (NS2) are linked with each other, fixable via the fourth shifting component (D) and linkable via the fifth shifting component (E) with the drive shaft (1);
- the ring gear (43) of the second rear-mounted planetary gear set (NS2) and the carrier (35) of the first rear-mounted planetary gear set (NS1) are linked with each other and with the output shaft (2).

16. Multistep reducltion gear according to claim 2 and 7, **characterized by** the following features:
- the first shiftable front-mounted planetary gear set (VS1) features a center gear (11), a ring gear (13) and two coupled carriers (15', 15") with inner and outer planetary gears (12', 12");
- each rear-mounted planetary gear set (NS1, NS1) features a center gear (31, 41), a ring gear (33, 43) and a carrier (35, 45) with planetary gears (32, 42);
- the center gear (11) of the first front-mounted planetary gear set (VS1) is linked with the drive shaft (1);
- the coupled carriers (15', 15") of the first front-mounted planetary gears set (VS1) are linked with the center gear (41) of the second rear-mounted planetary gear set (NS2), and fixable via the second shifting component (B);
- the ring gear (13) of the first front-mounted planetary gear set (VS1) is fixable via the third shifting component (C);
- the center gear (31) of the first rear-mounted planetary gear set (NS1) is linkable via the first shifting component (A) with the drive shaft (1), and fixable via the sixth shifting component (A');
- the ring gear (33) of the first rear-mounted planetary gear set (NS1) and the carrier (45) of the second rear-mounted planetary gear set (NS2) are linked with each other, fixable via the fourth shifting component (D) and linkable via the fifth shifting component (E) with the drive shaft (1);
- the ring gear (43) of the second rear-mounted planetary gear set (NS2) and the carrier (35) of the first rear-mounted planetary gear set (NS1) are linked with each other and with the output shaft (2).

17. Multistep reduction gear according to claim 2 and 7, **characterized by** the following features:
- the first shiftable front-mounted planetary gear set (VS1) features a center gear (11), a ring gear (13) and two coupled carriers (15'; 15") with inner and outer planetary gears (12', 12");
- each of the rear-mounted planetary gear sets (NS1, NS1) features a center gear (31; 41), a ring gear (33, 43) and a carrier (35, 45) with planetary gears (32, 42);
- the center gear (11) of the first front-mounted planetary gear set (VS1) is linkable via the third shifting component (C) with the drive shaft (1);
- the coupled carriers (15', 15") of the first front-mounted planetary gear set (VS1) and the center gear (41) of the second rear-mounted planetary gear set (NS2) are linked with each other, and fixable via the second shifting component (B);
- the ring gear (13) of the first front-mounted planetary gear set (VS1) is fixed;
- the center gear (31) of the first rear-mounted planetary gear set (NS1) is linkable via the first shifting component (A) with the drive shaft (1), and fixable via the sixth shifting component (A');
- the ring gear (33) of the first rear-mounted planetary gear set (NS1) and the carrier (45) of the second rear-mounted planetary gear set (NS2) are linked with each other, fixable via the fourth shifting component (D), and linkable via the fifth shifting component (E) with the drive shaft (1);
- the ring gear (43) of the second rear-mounted planetary gear set (NS2) and the carrier (35) of the first rear-mounted planetary gear set (NS1) are linked with each other and with the output shaft (2).

18. Multistep reduction gear according to claim 3 and 5, **characterized by** the following features:
- the first front-mounted planetary gear set (VS1) features a center gear (11), a ring gear (13) and a carrier (15) with planetary gears (12);
- each rear-mounted planetary gear set (NS1, NS2) features a center gear (31, 41), a ring gear (33, 43) and a carrier (35, 45) with planetary gears (32, 42);
- the center gear (11) of the first front-mounted planetary gear set (VS1) is linked with the drive shaft (1), the ring gear (13) of the first front-mounted planetary gear set (VS1) is fixed;
- the carrier (15) of the first front-mounted planetary gear set (VS1) is linkable via the second shifting component (B) with the center gear (41) of the second rear-mounted planetary gear set (NS2);
- the center gear (31) of the first rear-mounted planetary gear set (NS1) is linkable via the first shifting component (A) with the drive shaft (1), and fixable via the sixth shifting component (A');
- the carrier (45) of the second rear-mounted planetary gear set (NS2) and the ring gear (33) of the first rear-mounted planetary gear set (NS1) are linked with each other, linkable via the fourth shifting component (E) with the drive shaft (1), linkable via the third shifting component (D) with the carrier (15) of the first front-mounted planetary gear set (VS1), and fixable via the fifth shifting component (D');
- the carrier (35) of the first rear-mounted planetary gear set (NS1) and the ring gear (43) of the second rear-mounted planetary gear set (NS2) are linked with each other and with the output shaft (3).

19. Multistep reduction gear according to claim 3 and 5, **characterized by** the following features:
- the first front-mounted planetary gear set (VS1) and each of the two rear-mounted planetary gear sets (NS1, NS2) feature a center gear (11, 31, 41), a ring gear (13, 33, 43) and a carrier (15, 35, 45) with planetary gears (12, 32, 42);
- the center gear (11) of the first front-mounted planetary gear set (VS1) is linked with the drive shaft (1);
- the ring gear (13) of the first front-mounted planetary gear set (VS1) is fixed;
- the carrier (15) of the first front-mounted planetary gear set (VS1) is linkable via the second shifting component (B) with the ring gear (43) of the second rear-mounted planetary gear set (NS2);
- the center gears (31, 41) of the two rear-mounted planetary gear sets (NS1, NS2) are linked with each other, linkable via the first shifting component (A) with the drive shaft (1), and fixable via the sixth shifting component (A');
- the carrier (45) of the second rear-mounted planetary gear set (NS2) and the ring gear (33) of the first rear-mounted planetary gear set (NS1) are linked with each other, linkable via the third shifting component (D) with the carrier (15) of the first front-mounted planetary gear set (VS1), linkable via the fourth shifting component (E) with the drive shaft (1), and fixable via the fifth shifting component (D');
- the carrier (35) of the first rear-mounted planetary gear set (NS1) is linked with the output shaft (3).

20. Multistep reduction gear according to claim 4 and 5, **characterized by** the following features:
- the first front-mounted planetary gear set (VS1) features a center gear (11), a ring gear (13) and two coupled carriers (15', 15") with inner and outer planetary gears (12', 12");
- the first rear-mounted planetary gear set (NS1) is a dual planetary gear set with a center gear (31), a ring gear (33) and two coupled carriers (35', 35") with inner and outer planetary gears (32'. 32");
- the second rear-mounted planetary gear set (NS2) features a center gear (41), a ring gear (43) and a carrier (45) with planetary gears (42);
- the center gear (11) of the first front-mounted planetary gear set (VS1) is linked with the drive shaft (1);
- the coupled carriers (15', 15") of the first front-mounted planetary gear set (VS1) are fixed;
- the center gear (31) of the first rear-mounted planetary gear set (NS1) is linkable via the first shifting component (A) with the drive shaft (1), and fixable via the seventh shifting component (A'), especially via the carrier (15") of the outer planetary gears (12") of the first front-mounted planetary gear set (VS1);
- the center gear (41) of the second rear-mounted planetary gear set (NS2) is linkable via the second shifting component (B) with the ring gear (13) of the first front-mounted planetary gear set (VS1), and fixable via the third shifting component (C), especially via the carrier (15") of the outer planetary gears (12") of the first front-mounted planetary gear set (VS1);
- the carrier (45) of the second rear-mounted planetary gear set (NS2) and the coupled carriers (35', (35") of the first rear-mounted planetary gear set (NS1) are linked with each other, linkable via the fourth shifting component (D) with the ring gear (13) of the first front-mounted planetary gear set (VS1), linkable via the fifth shifting component (E) with the drive shaft (1), and fixable via the sixth shifting component (D');
- the center gear (31) of the first rear-mounted planetary gear set (NS1) and the ring gear (43) of the second rear-mounted planetary gear set (NS2) are linked with each other;
- the ring gear (33) of the first rear-mounted planetary gear set (NS1) is linked with the output shaft (3).

21. Multistep reduction gear according to claim 4 and 5, **characterized by** the following features:
- the first front-mounted planetary gear set (VS1) and each of the two rear-mounted planetary gear sets (NS1, NS2) feature a center gear (11, 31, 41), a ring gear (13, 33, 34) and a carrier (15, 35, 45) with planetary gears (12, 32, 42);
- the center gear (11) of the first front-mounted planetary gear set (VS1) is linked with the drive shaft (1);
- the ring gear (13) of the first front-mounted planetary gear set (VS1) is fixed;
- the center gear (31) of the first rear-mounted planetary gear set (NS1) is linkable via the first shifting component (A) with the drive shaft (1), and fixable via the seventh shifting component (A');
- the center gear (41) of the second rear-mounted planetary gear set (NS2) is linkable via the second shifting component (B) with the carrier (15) of the first front-mounted planetary gear set (VS1), and fixable via the third shifting component (C);
- the carrier (45) of the second rear-mounted planetary gear set (NS2) and the ring gear (33) of the first rear-mounted planetary gear set (NS 1) are linked with each other, linkable via the fourth shifting component (D) with the carrier (15) of the first front-mounted planetary gear set (VS1), linkable via the fifth shifting component (E) with the drive shaft (1), and fixable via the sixth shifting component (D');
- the carrier (35) of the first rear-mounted planetary gear set (NS1) and the ring gear (43) of the second rear-mounted planetary gear set (NS2) are linked with each other and with the output shaft (3).

22. Multistep reduction gear according to claim 18 or 19 or 21, **characterized in that** the first front-mounted set (VS1) is a plus transmission with a center gear (11), a ring gear (13) and two coupled carriers (15', 15") with inner and outer planetary gears (12', 12"), with the coupled carriers (15', 15") of the first front-mounted planetary gear set (VS1) being fixed instead of its ring gear (13), and with the second and third or second and fourth shifting component (B, D) being linked with the ring gear (13) of the first front-mounted planetary gear set (VS1) instead of with its carrier.

23. Multistep reduction gear according to claim 4 and 5, **characterized by** the following features:
- the first front-mounted planetary gear set (VS1) features a center gear (11), a ring gear (13) and two coupled carriers (15', 15") with inner and outer planetary gears (12', 12");
- each of the two rear-mounted planetary gear sets (NS1; NS2) features a center gear (31, 41), a ring gear (33,43) and a carrier with (35, 45) with planetary gears (32, 42);
- the center gear (11) of the first front-mounted planetary gear set (VS1) is linked with the drive shaft (1);
- the coupled carriers (15', 15") of the first front-mounted planetary gear set (VSI) are fixed;
- the center gears (31, 41) of the two rear-mounted planetary gear sets (NS1, NS2) are linked with each other, linkable via the second shifting component (B) with the ring gear (13) of the first front-mounted planetary gear set (VS1), and fixable via the third shifting component (C);
- the ring gear (33) of the first rear-mounted planetary gear set (NS1) is linkable via the first shifting component (A) with the drive shaft (1), and fixable via the seventh shifting component (A');
- the carrier (45) of the second rear-mounted planetary gear set (NS2) is linkable via the fourth shifting component (D) with the ring gear (13) of the first front-mounted planetary gear set (VS1), linkable via the fifth shifting component (E) with the drive shaft (1), and fixable via the sixth shifting component (D'), especially via the carrier (15") of the outer planetary gears (12") of the first front-mounted planetary gear set (VS1);
- the carrier (35) of the first rear-mounted planetary gear set (NS1) and the ring gear (43) of the second rear-mounted planetary gear set (NS2) are linked with each other and with the output shaft (3).

24. Multistep reduction gear according to claim 4 and 6, **characterized by** the following features:
- the first front-mounted planetary gear set (VS1) and the second rear-mounted planetary gear set (NS2) each feature a center gear (11, 41), a ring gear (13, 43) and a carrier (15, 45) with planetary gears (12, 42);
- the second front-mounted planetary gear set (VS2) is a dual planetary gear set with a center gear (21), a ring gear (23) and two coupled carriers (25', 25") with inner and outer planetary gears (22', 22");
- the first rear-mounted planetary gear set (NS1) is a dual planetary gear set with a center gear (31), a ring gear (33) and two coupled carriers (35', 35") with inner and outer planetary gears (32', 32");
- the center gear (11) of the first front-mounted planetary gear set (VS1) is linked with the drive shaft (1);
- the center gear (21) of the second front-mounted planetary gear set (VS2) is fixed;
- the ring gears (13, 23) of the two front-mounted planetary gear sets (VS1, VS2) are linked with each other and linkable via the seventh shifting component (A') with the center gear (31) of the first rear-mounted planetary gear set (NS1);
- the coupled carriers (25', 25") of the second front-mounted planetary gear set (VS2) and the carrier (15) of the first front-mounted planetary gear set (VS1) are linked with each other;
- the center gear (31) of the first rear-mounted planetary gear set (NS1) and the ring gear (43) of the second rear-mounted planetary gear set (NS2) are linked with each other, and linkable via the first shifting component (A) with the drive shaft (1);
- the coupled carriers (35', 35") of the first rear-mounted planetary gear set (NS1) are linkable via the fifth shifting component (E) with the drive shaft (1);
- the center gear (41) of the second rear-mounted planetary gear set (NS2) is linkable via the second shifting component (B) with the coupled carriers (25', 25") of the second front-mounted planetary gear set (VS2), and fixable via the third shifting component (C);
- the carrier (45) of the second rear-mounted planetary gear set (NS2) and the coupled carriers (35', 35") of the first rear-mounted planetary gear set (NS1) are linked with each other, linkable via the fourth shifting component (D) with the coupled carriers (25', 25") of the second front-mounted planetary gear set (VS2), and fixable via the sixth shifting component (D');
- the ring gear (33) of the first rear-mounted planetary gear set (NS1) is linked with the output shaft (3).

## Revendications

1. Transmission à plusieurs étages
dotée d'un arbre d'entrée (1),
celui-ci étant lié à un train d'engrenages monté en amont (VS) ;
dotée d'un arbre de sortie (2),
celui-ci étant lié à un train d'engrenages monté en aval (NS) ;
et dotée de six éléments de commande (A, B, C, D, E, D'),
dont l'enclenchement sélectif permet de transmettre un régime d'entraînement (n) de l'arbre d'entrée (1) ainsi que des régimes générés dans le train d'engrenages monté en amont (VS) de façon sélective au train d'engrenages monté en aval (NS) pour l'enclenchement d'au moins sept rapports de marche avant, et cela de façon à ce que pour le passage d'un rapport au rapport immédiatement supérieur ou inférieur des deux éléments de commande qui viennent d'être actionnés n'est désenclenché à chaque fois qu'un seul élément de commande et un autre étant enclenché ;
sachant que le train d'engrenages monté en amont (VS) est formé d'un train épicycloïdal monté en amont (VS1) ou d'au maximum deux trains épicycloïdaux couplés montés en amont (VS1, VS2),
et sachant que le train d'engrenages monté en aval (NS) est réalisé en tant que transmission à quatre arbres et deux arbres porte-satellites avec deux trains épicycloïdaux couplables montés en aval (NS1, NS2),
sachant qu'un premier arbre libre du train d'engrenages monté en aval (NS) est lié au premier élément de commande (A)
et tourne, lorsque le premier élément de commande (A) est couplé, à un régime inférieur ou égal au régime d'entraînement (n) de l'arbre d'entrée (1),
et sachant qu'un deuxième arbre libre du train d'engrenages monté en aval (NS) est lié au deuxième et au troisième éléments de commande (B, C),
et sachant qu'un troisième arbre libre du train d'engrenages monté en aval (NS) est lié au quatrième élément de commande (D)
et tourne, lorsque le quatrième élément de commande (D) est enclenché à un régime inférieur au régime d'entrée (n) de l'arbre d'entrée (1),
et sachant que le troisième arbre libre du train d'engrenages monté en aval (NS) est lié au cinquième élément de commande (E)
et tourne, lorsque le cinquième élément de commande (E) est enclenché, au régime d'entrée (n) de l'arbre d'entrée (1)
et forme, lorsque le cinquième élément de commande (E) est enclenché, celui des rapports de marche avant qui est réalisé comme prise directe, ainsi que tous ceux des rapports de marche avant qui sont réalisés comme rapports surmultipliés ;
et sachant qu'un quatrième arbre libre du train d'engrenages monté en aval (NS) est lié à l'arbre de sortie (2) ;
et sachant que le troisième arbre libre du train d'engrenages monté en aval (NS) est lié, outre au quatrième élément de commande (D), au sixième élément de commande (D') et tourne, lorsque le sixième élément de commande (D') est enclenché, à un régime inférieur au régime d'entrée (n) de l'arbre d'entrée (1).

2. Transmission à plusieurs étages, dotée d'un arbre d'entrée (1), celui-ci étant lié à un train d'engrenages monté en amont (VS), dotée d'un arbre de sortie (2), celui-ci étant lié à un train d'engrenages monté en aval (NS), et dotée d'au maximum sept éléments de commande (A, B, C, D, E, D', A',), dont l'enclenchement sélectif permet de transmettre un régime d'entrée (n) de l'arbre d'entrée (1) ainsi que des régimes générés dans le train d'engrenages monté en amont (VS) de façon sélective pour l'engagement d'au moins sept rapports de marche avant de telle manière au train d'engrenages monté en aval (NS), que pour le passage d'un rapport au rapport immédiatement supérieur ou inférieur des éléments de commande qui viennent d'être actionnés à chaque fois n'est désenclenché qu'un seul élément de commande et un autre enclenché, sachant que le train d'engrenages monté en amont (VS) est formé d'un train épicycloïdal monté en amont (VS1) ou d'au maximum deux trains épicycloïdaux couplés montés en amont (VS1, VS2) et le train d'engrenages monté en aval (NS) est réalisé en tant que transmission à quatre arbres et deux arbres porte-satellites avec deux trains épicycloïdaux couplables montés en aval (NS1, NS2), sachant qu'un premier arbre libre du train d'engrenages monté en aval (NS) est lié au premier élément de commande (A) et tourne, lorsque le premier élément de commande (A) est enclenché, à un régime inférieur ou égal au régime d'entrée (n) de l'arbre d'entrée, et sachant qu'un deuxième arbre libre du train d'engrenages monté en aval (NS) est lié au deuxième et au troisième éléments de commande (B, C), et sachant qu'un troisième arbre libre du train d'engrenages monté en aval (NS) est lié au quatrième élément de commande (D) et tourne, lorsque le quatrième élément de commande (D) est enclenché, à un régime inférieur au régime d'entrée (n) de l'arbre d'entrée (1), et sachant que le troisième arbre libre du train d'engrenages monté en aval (NS) est lié au cinquième élément de commande (E) et, lorsque le cinquième élément (E) de commande (E) est enclenché, tourne au régime d'entraînement (n) de l'arbre d'entrée (1), et sachant qu'un quatrième arbre libre du train d'engrenages monté en aval (NS) est lié à l'arbre de sortie (2), sachant que sont prévus six éléments de commande (A, B, C, D, E, A'), et le premier arbre libre du train d'engrenages monté en aval (NS) est lié, outre au premier élément de commande (A), à un autre élément de commande (A') et tourne, lorsque l'élément de commande (A') est enclenché, à un régime inférieur au régime d'entrée (n) de l'arbre d'entrée (1).

3. Transmission à plusieurs étages, dotée d'un arbre d'entrée (1), celui-ci étant lié à un train d'engrenages monté en amont (VS), dotée d'un arbre de sortie (2), celui-ci étant lié à un train d'engrenages monté en aval (NS), et dotée d'au maximum sept éléments de commande (A, B, C, D, E, D', A',), dont l'enclenchement sélectif permet de transmettre un régime d'entrée (n) de l'arbre d'entrée (1) ainsi que des régimes générés dans le train d'engrenages monté en amont (VS) de façon sélective pour l'engagement d'au moins sept rapports de marche avant de telle manière au train d'engrenages monté en aval (NS), que pour le passage d'un rapport au rapport immédiatement supérieur ou inférieur des éléments de commande qui viennent d'être actionnés à chaque fois n'est désenclenché qu'un seul élément de commande et un autre enclenché, sachant que le train d'engrenages monté en amont (VS) est formé d'un train épicycloïdal monté en amont (VS1) ou d'au maximum deux trains épicycloïdaux couplés montés en amont (VS1, VS2) et le train d'engrenages monté en aval (NS) est réalisé en tant que transmission à quatre arbres et deux arbres porte-satellites avec deux trains épicycloïdaux couplables montés en aval (NS1, NS2), sachant qu'un premier arbre libre du train d'engrenages monté en aval (NS) est lié au premier élément de commande (A) et tourne, lorsque le premier élément de commande (A) est enclenché, à un régime inférieur ou égal au régime d'entrée (n) de l'arbre d'entrée, et sachant qu'un deuxième arbre libre du train d'engrenages monté en aval (NS) est lié au deuxième et au troisième éléments de commande (B, C), et sachant qu'un troisième arbre libre du train d'engrenages monté en aval (NS) est lié au quatrième élément de commande (D) et tourne, lorsque le quatrième élément de commande (D) est enclenché, à un régime inférieur au régime d'entraînement (n) de l'arbre d'entrée (1), et sachant que le troisième arbre libre du train d'engrenages monté en aval (NS) est lié au cinquième élément de commande (E) et, lorsque le cinquième élément (E) de commande (E) est enclenché, tourne au régime d'entraînement (n) de l'arbre d'entrée (1), et sachant qu'un quatrième arbre libre du train d'engrenages monté en aval (NS) est lié à l'arbre de sortie (2), sachant que sont prévus six éléments de commande (A, B, D, E, D', A'), et le troisième arbre libre du train d'engrenages monté en aval (NS) est lié, outre au quatrième élément de commande (D), à un autre élément de commande (D') et tourne, lorsque l'élément de commande (D') est enclenché, à un régime inférieur au régime d'entraînement (n) de l'arbre d'entrée (1), et que le premier arbre libre du train d'engrenages monté en aval (NS) est lié, outre au premier élément de commande (A), à un autre élément de commande (A') et, lorsque l'élément de commande (A') est enclenché, tourne à un régime inférieur au régime d'entrée (n) de l'arbre d'entrée (1).

4. Transmission à plusieurs étages, dotée d'un arbre d'entrée (1), celui-ci étant lié à un train d'engrenages monté en amont (VS), dotée d'un arbre de sortie (2), celui-ci étant lié à un train d'engrenages monté en aval (NS), et dotée d'au maximum sept éléments de commande (A, B, C, D, E, D', A',), dont l'enclenchement sélectif permet de transmettre un régime d'entrée (n) de l'arbre d'entrée (1) ainsi que des régimes générés dans le train d'engrenages monté en amont (VS) de façon sélective pour l'engagement d'au moins sept rapports de marche avant de telle manière au train d'engrenages monté en aval (NS), que pour le passage d'un rapport au rapport immédiatement supérieur ou inférieur des éléments de commande qui viennent d'être actionnés à chaque fois n'est désenclenché qu'un seul élément de commande et un autre enclenché, sachant que le train d'engrenages monté en amont (VS) est formé d'un train épicycloïdal monté en amont (VS1) ou d'au maximum deux trains épicycloïdaux couplés montés en amont (VS1, VS2) et le train d'engrenages monté en aval (NS) est réalisé en tant que transmission à quatre arbres et deux arbres porte-satellites avec deux trains épicycloïdaux couplables montés en aval (NS1, NS2), sachant qu'un premier arbre libre du train d'engrenages monté en aval (NS) est lié au premier élément de commande (A) et tourne, lorsque le premier élément de commande (A) est enclenché, à un régime inférieur ou égal au régime d'entraînement (n) de l'arbre d'entrée, et sachant qu'un deuxième arbre libre du train d'engrenages monté en aval (NS) est lié au deuxième et au troisième éléments de commande (B, C), et sachant qu'un troisième arbre libre du train d'engrenages monté en aval (NS) est lié au quatrième élément de commande (D) et tourne, lorsque le quatrième élément de commande (D) est enclenché, à un régime inférieur au régime d'entraînement (n) de l'arbre d'entrée (1), et sachant que le troisième arbre libre du train d'engrenages monté en aval (NS) est lié au cinquième élément de commande (E) et, lorsque le cinquième élément (E) de commande (E) est enclenché, tourne au régime d'entraînement (n) de l'arbre d'entrée (1), et sachant qu'un quatrième arbre libre du train d'engrenages monté en aval (NS) est lié à l'arbre de sortie (2), sachant que sont prévus sept éléments de commande (A, B, C, D, E, D', A'), et le troisième arbre libre du train d'engrenages monté en aval (NS) est lié, outre au quatrième élément de commande (D), à un autre élément de commande (D') et tourne, lorsque l'élément de commande (D') est enclenché, à un régime inférieur au régime d'entraînement (n) de l'arbre d'entrée (1), et que le premier arbre libre du train d'engrenages monté en aval (NS) est lié, outre au premier élément de commande (A), à un autre élément de commande (A') et, lorsque l'élément de commande (A') est enclenché, tourne à un régime inférieur au régime d'entrée (n) de l'arbre d'entrée (1).

5. Transmission à plusieurs étages selon la revendication 1 ou 2 ou 3 ou 4,
sachant que le train d'engrenages monté en amont (VS) ne comporte qu'un seul train épicycloïdal non couplable monté en amont (VS1).

6. Transmission à plusieurs rapports selon la revendication 1 ou 2 ou 3 ou 4, **caractérisée en ce que** le train d'engrenages monté en amont comporte deux trains épicycloïdaux couplés montés en amont (VS1, VS2) non couplables.

7. Transmission à plusieurs étages selon la revendication 1 ou 2 ou 3 ou 4, **caractérisée en ce que** le train d'engrenages monté en amont ne comporte qu'un seul train épicycloïdal couplable monté en amont (VS1).

8. Transmission à plusieurs étages selon la revendication 1 et 5, **caractérisée par** les caractéristiques suivantes :
- le premier train épicycloïdal monté en amont (VS1) comporte un planétaire (11) et une couronne (15) ainsi qu'un arbre porte-satellites (15) doté de satellites étagés formés de satellites petits (12k) et de satellites grands (12g) ;
- le premier train épicycloïdal monté en aval (NS1) est réalisé comme train épicycloïdal double, avec un planétaire (31), une couronne (33), un arbre porte-satellites (35') avec des satellites internes (32'), ainsi qu'un arbre porte-satellites (35") avec des satellites externes (32") ;
- le deuxième train épicycloïdal monté en aval (NS2) comporte un planétaire (41) et une couronne (43) ainsi qu'un arbre porte-satellites (45) doté de satellites (42) ;
- l'arbre d'entrée (1) est lié au planétaire (11) du premier train épicycloïdal monté en amont (VS1),
- l'arbre d'entrée (1) peut être lié par l'intermédiaire du cinquième élément de commande (E) à l'arbre porte-satellites (45) du deuxième train épicycloïdal monté en aval (NS2) ;
- l'arbre d'entrée (1) peut être lié par l'intermédiaire du deuxième élément de commande (B) au planétaire (41) du deuxième train épicycloïdal monté en aval (NS2) ;
- la couronne (13) du premier train épicycloïdal monté en amont (VS1) est fixée,
- les petits satellites (12k) du premier train épicycloïdal monté en amont (VS1) engrènent avec son planétaire (11), les grands satellites (12g) du premier train épicycloïdal monté en amont (VS1) engrènent avec sa couronne (13) ;
- l'arbre porte-satellites (15) du premier train épicycloïdal monté en amont (VS1) peut être lié par l'intermédiaire du premier élément de commande (A) au planétaire (31) du premier train épicycloïdal monté en aval (NS1) ;
- l'arbre porte-satellites (15) du premier train épicycloïdal monté en amont (VS1) peut être lié par l'intermédiaire du sixième élément de commande (D') à l'arbre porte-satellites (35') des satellites intérieures (32') du premier train épicycloïdal monté en aval (NS1) ;
- l'arbre porte-satellites (35') des satellites intérieures (32') du premier train épicycloïdal monté en aval (NS1) peut être fixé par l'intermédiaire du quatrième élément de commande (D) ;
- le planétaire (41) du deuxième train épicycloïdal monté en aval (NS2) peut être fixé par le troisième élément de commande (C) ;
- l'arbre porte-satellites (35') des satellites intérieures (32') du premier train épicycloïdal monté en aval (NS1) est lié à l'arbre porte-satellites (35") des satellites extérieures (32") du premier train épicycloïdal monté en aval (NS1) et l'arbre porte-satellites (45) du deuxième train épicycloïdal monté en aval (NS2) ;
- les satellites extérieures (32") du premier train épicycloïdal monté en aval (NS1) et les satellites (42) du deuxième train épicycloïdal monté en aval (NS2) sont liés les uns aux autres ; et
- la couronne (33) du premier train épicycloïdal monté en aval (NS1) et la couronne (43) du deuxième train épicycloïdal monté en aval (NS2) sont réunies et liées à l'arbre de sortie (3).

9. Transmission à plusieurs étages selon la revendication 2 et 5, **caractérisée par** les caractéristiques suivantes :
- le premier train épicycloïdal monté en amont (VS1) comporte un planétaire (11), une couronne
(13) ainsi que deux arbres porte-satellites couplés (15', 15") avec des satellites intérieures et
extérieures (12', 12") ;
- le premier train épicycloïdal monté en aval (NS1) est réalisé comme train épicycloïdal double,
avec un planétaire (31), une couronne (33), ainsi que deux arbres porte-satellites couplés (35',
35") avec des satellites intérieures et extérieures (32', 32") ;
- le deuxième train épicycloïdal monté en aval (NS2) comporte un planétaire (41) et une couronne
(43) ainsi qu'un arbre porte-satellites (45) doté de satellites (42) ;
- le planétaire (11) du premier train épicycloïdal monté en amont (VS1) est fixé,
- les arbres porte-satellites couplés (15', 15") du premier train épicycloïdal monté en amont (VS1)
sont liés à l'arbre d'entrée (1) ;
- la couronne (13) du premier train épicycloïdal monté en amont (VS1) peut être liée par l'intermédiaire du sixième élément de commande (A') au planétaire (31) du premier train épicycloïdal monté en aval (NS1) et par l'intermédiaire du deuxième élément de commande (B)
au planétaire (41) du deuxième train épicycloïdal monté en aval (NS2) ;
- le planétaire (31) du premier train épicycloïdal monté en aval (NS1) peut être lié par l'intermédiaire du premier élément de commande (A) à l'arbre d'entrée (1) ;
- les arbres porte-satellites couplés (35', 35") du premier train épicycloïdal monté en aval (NS1)
sont liés à l'arbre porte-satellites (45) du deuxième train épicycloïdal monté en aval (NS2) et peuvent être liés par l'intermédiaire du cinquième élément de commande (E) à l'arbre d'entrée (1);
- le planétaire (41) du deuxième train épicycloïdal monté en aval (NS2) peut être fixé par l'intermédiaire du troisième élément de commande (C) ;
- les satellites (42) du deuxième train épicycloïdal monté en aval (NS2) et les satellites extérieures
(32") du premier train épicycloïdal monté en aval (NS1) sont réunis ;
- l'arbre porte-satellites (45) du deuxième train épicycloïdal monté en aval (NS2) peut être fixé par
l'intermédiaire du quatrième élément de commande (D) ; et
- la couronne (33) du premier train épicycloïdal monté en aval (NS1) et la couronne (43) du
deuxième train épicycloïdal monté en aval (NS2) sont liées l'une à l'autre et à l'arbre de sortie (3).

10. Transmission à plusieurs étages selon la revendication 2 et 5, **caractérisée par** les caractéristiques suivantes :
- le premier train épicycloïdal monté en amont (VS1) comporte un planétaire (11), une couronne (13) ainsi que deux arbres porte-satellites couplés (15', 15") avec des satellites intérieures et extérieures (12', 12") ;
- les deux trains épicycloïdaux montés en aval (NS1, NS2) comportent respectivement un planétaire (31, 41)), une couronne (33, 43) ainsi qu'un arbre porte-satellites (35, 45) avec des satellites (32, 42) ;
- le planétaire (11) du premier train épicycloïdal monté en amont (VS1) est lié à l'arbre d'entrée (1) ;
- les arbres porte-satellites couplés (15', 15") du premier train épicycloïdal monté en amont (VS1) peuvent être liés par l'intermédiaire du troisième élément de commande (C) au planétaire (41) du deuxième train épicycloïdal monté en aval (NS2) ;
- la couronne (13) du premier train épicycloïdal monté en amont (VS1) est fixée ;
- le planétaire (31) du premier train épicycloïdal monté en aval (NS1) peut être lié par l'intermédiaire du premier élément de commande (A) à l'arbre d'entrée (1) et peut être fixé par l'intermédiaire du sixième élément de commande (A') ;
- le planétaire (41) du deuxième train épicycloïdal monté en aval (NS2) peut être fixé par l'intermédiaire du deuxième élément de commande (B) ;
- l'arbre porte-satellites (45) du deuxième train épicycloïdal monté en aval (NS2) et la couronne (33) du premier train épicycloïdal monté en aval (NS1) sont liés l'un à l'autre et peuvent être liés par l'intermédiaire du cinquième élément de commande (E) à l'arbre d'entrée (1), et peuvent être fixés par l'intermédiaire du quatrième élément de commande (D) ; et
- l'arbre porte-satellites (35) du premier train épicycloïdal monté en aval (NS1) et la couronne (43) du deuxième train épicycloïdal monté en aval (NS2) sont liés l'un à l'autre et à l'arbre de sortie (3).

11. Transmission à plusieurs étages selon la revendication 2 et 5, **caractérisée par** les caractéristiques suivantes :
- le premier train épicycloïdal monté en amont (VS1) comporte un planétaire (11) et une couronne (13) ainsi qu'un arbre porte-satellites (15) doté de satellites étagés formés de satellites petits (12k) et de satellites grands (12g) ;
- les deux trains épicycloïdaux montés en aval (NS1, NS2) comportent respectivement un planétaire (31, 41), une couronne (33, 43) ainsi qu'un arbre porte-satellites (35, 45) avec des satellites (32, 42) ;
- le planétaire (11) du premier train épicycloïdal monté en amont (VS1) est lié à l'arbre d'entrée (1);
- l'arbre porte-satellites (15) du premier train épicycloïdal monté en amont (VS1) est fixé ;
- les petits satellites (12k) du premier train épicycloïdal monté en amont (VS1) engrènent avec son planétaire (11), les grands satellites (12g) du premier train épicycloïdal monté en amont
(VS1) engrènent avec sa couronne (13) ;
- la couronne (13) du premier train épicycloïdal monté en amont (VS1) peut être liée par l'intermédiaire du troisième élément de commande (C) au planétaire (41) du deuxième train épicycloïdal monté en aval (NS2) ;
- le planétaire (31) du premier train épicycloïdal monté en aval (NS1) peut être lié par l'intermédiaire du premier élément de commande (A) à l'arbre d'entrée (1) et peut être fixé par l'intermédiaire du sixième élément de commande (A') ;
- le planétaire (41) du deuxième train épicycloïdal monté en aval (NS2) peut être fixé par le deuxième élément de commande (B) ;
- l'arbre porte-satellites (45) du deuxième train épicycloïdal monté en aval (NS2) et la couronne (33) du premier train épicycloïdal monté en aval (NS1) sont liés l'un à l'autre et peuvent être liés par l'intermédiaire du cinquième élément de commande (E) à l'arbre d'entrée (1) et peuvent être fixés par l'intermédiaire du quatrième élément de commande (D) ; et
- l'arbre porte-satellites (35) du premier train épicycloïdal monté en aval (NS1) et la couronne (43) du deuxième train épicycloïdal monté en aval (NS2) sont liés l'un à l'autre et liés à l'arbre de sortie (3).

12. Transmission à plusieurs étages selon la revendication 2 et 5, **caractérisée par** les caractéristiques suivantes :
- le premier train épicycloïdal monté en amont (VS1) comporte un planétaire (11) et une couronne (13) ainsi qu'un arbre porte-satellites (15) doté de satellites étagés formés de satellites petits (12k) et de satellites grands (12g) ;
- les deux trains épicycloïdaux montés en aval (NS1, NS2) comportent respectivement un planétaire (31, 41), une couronne (33, 43), ainsi qu'un arbre porte-satellites (35, 45) avec des satellites (32, 42) ;
- le planétaire (11) du premier train épicycloïdal monté en amont (VS1) est lié à l'arbre d'entrée (1);
- l'arbre porte-satellites (15) du premier train épicycloïdal monté en amont (VS1) est fixé ;
- les petits satellites (12k) du premier train épicycloïdal monté en amont (VS1) engrènent avec son planétaire (11), les grands satellites (12g) du premier train épicycloïdal monté en amont (VS1) engrènent avec sa couronne (13) ;
- les planétaires (31, 41) des deux trains épicycloïdaux montés en aval (NS1, NS2) sont liés les uns aux autres, ils peuvent être liés par l'intermédiaire du troisième élément de commande (C) à la couronne (13) du premier train épicycloïdal monté en amont (VS1) et peuvent être fixés par l'intermédiaire du deuxième élément de commande (B) ;
- la couronne (33) du premier train épicycloïdal monté en aval (NS1) peut être liée par l'intermédiaire du premier élément de commande (A) à l'arbre d'entrée (1) et peut être fixée par l'intermédiaire du sixième élément de commande (A') ;
- l'arbre porte-satellites (45) du deuxième train épicycloïdal monté en aval (NS2) peut être lié par l'intermédiaire du cinquième élément de commande (E) à l'arbre d'entrée (1) et peut être fixé par l'intermédiaire du quatrième élément de commande (D), et cela en particulier par l'intermédiaire de l'arbre porte-satellites (15) du premier train épicycloïdal monté en amont (NS1) ; et
- l'arbre porte-satellites (35) du premier train épicycloïdal monté en aval (NS1) et la couronne (43) du deuxième train épicycloïdal monté en aval (NS2) sont liés l'un à l'autre et liés à l'arbre de sortie (3).

13. Transmission à plusieurs étages selon la revendication 2 et 6, **caractérisée par** les caractéristiques suivantes :
- les deux trains épicycloïdaux montés en amont (VS1, VS2) et les deux trains épicycloïdaux montés en aval (NS1, NS2) comportent respectivement un planétaire (11, 21, 31, 41), une couronne (13, 23, 33, 43) ainsi qu'un arbre porte-satellites (15, 25, 35, 45) avec des satellites (12, 22, 32, 42) ;
- le planétaire (11) du premier train épicycloïdal monté en amont (VS1) est lié à l'arbre d'entrée (1);
- la couronne (13) du premier train épicycloïdal monté en amont (VS1) est fixé,
- le planétaire (21) du deuxième train épicycloïdal monté en amont (VS2) est lié à l'arbre d'entrée (1) ;
- l'arbre porte-satellites (25) du deuxième train épicycloïdal monté en amont (VS2) est fixé ;
- les planétaires (31, 41) des deux trains épicycloïdaux montés en aval (NS1, NS2) sont liés les uns aux autres, ils peuvent être liés par l'intermédiaire du deuxième élément de commande (B) à l'arbre porte-satellites (15) du premier train épicycloïdal monté en amont (VS1) et peuvent être liés par l'intermédiaire du troisième élément de commande (C) à la couronne (23) du deuxième train épicycloïdal monté en amont (VS2);
- la couronne (43) du deuxième train épicycloïdal monté en aval (NS2) et la couronne (33) du premier train épicycloïdal monté en aval (NS1) sont liés l'une à l'autre et peuvent être liées par l'intermédiaire du premier élément de commande (A) à l'arbre d'entrée (1) et peuvent être fixées par l'intermédiaire du sixième élément de commande (A') ;
- l'arbre porte-satellites (45) du deuxième train épicycloïdal monté en aval (NS2) peut être lié par l'intermédiaire du cinquième élément de commande (E) à l'arbre d'entrée (1) et par l'intermédiaire du quatrième élément de commande (D) à l'arbre porte-satellites (15) du premier train épicycloïdal monté en amont (VS1) ; et
- l'arbre porte-satellites (35) du premier train épicycloïdal monté en aval (NS1) est lié à l'arbre de sortie (3).

14. Transmission à plusieurs étages selon la revendication 2 et 7, **caractérisée par** les caractéristiques suivantes :
- le premier train épicycloïdal couplable monté en amont (VS1) ainsi que les deux trains épicycloïdaux montés en aval (NS1, NS1) comportent respectivement un planétaire (11, 31, 41), une couronne (13, 33, 43) ainsi qu'un arbre porte-satellites (15, 35, 45) avec des satellites (12, 32, 42) ;
- le planétaire (11) du premier train épicycloïdal monté en amont (VS1) est lié à l'arbre d'entrée (1);
- l'arbre porte-satellites (15) du premier train épicycloïdal monté en amont (VS1) peut être fixé par l'intermédiaire du troisième élément de commande (C) ;
- la couronne (13) du premier train épicycloïdal monté en amont (VS1) est liée au planétaire (41) du deuxième train épicycloïdal monté en aval (NS2) et peut être fixée par l'intermédiaire du deuxième élément de commande (B) ;
- le planétaire (31) du premier train épicycloïdal monté en aval (NS1) peut être lié par l'intermédiaire du premier élément de commande (A) à l'arbre d'entrée (1) et peut être fixé par l'intermédiaire du sixième élément de commande (A') ;
- la couronne (33) du premier train épicycloïdal monté en aval (NS1) et l'arbre porte-satellites (45) du deuxième train épicycloïdal monté en aval (NS2) sont liés l'une à l'autre et peuvent être fixés par l'intermédiaire du quatrième élément de commande (D) et peuvent être liés par l'intermédiaire du cinquième élément de commande (E) à l'arbre d'entrée (1) ;
- la couronne (43) du deuxième train épicycloïdal monté en aval (NS2) et l'arbre porte-satellites (35) du premier train épicycloïdal monté en aval (NS1) sont liés l'une à l'autre et liés à l'arbre de sortie (2).

15. Transmission à plusieurs étages selon la revendication 2 et 7, **caractérisée par** les caractéristiques suivantes :
- le premier train épicycloïdal couplable monté en amont (VS1) ainsi que les deux trains épicycloïdaux montés en aval (NS1, NS1) comportent respectivement un planétaire (11, 31, 41), une couronne (13, 33, 43) ainsi qu'un arbre porte-satellites (15, 35, 45) avec des satellites (12, 32, 42) ;
- le planétaire (11) du premier train épicycloïdal monté en amont (VS1) peut être lié par l'intermédiaire du troisième élément de commande (C) à l'arbre d'entrée (1) ;
- l'arbre porte-satellites (15) du premier train épicycloïdal monté en amont (VS1) est fixé ;
- la couronne (13) du premier train épicycloïdal monté en amont (VS1) et la couronne (41) du deuxième train épicycloïdal monté en aval (NS2) sont liées l'une à l'autre peuvent être fixées par l'intermédiaire du deuxième élément de commande (B) ;
- le planétaire (31) du premier train épicycloïdal monté en aval (NS1) peut être lié par l'intermédiaire du premier élément de commande (A) à l'arbre d'entrée (1) et peut être fixé par l'intermédiaire du sixième élément de commande (A') ;
- la couronne (33) du premier train épicycloïdal monté en aval (NS1) et l'arbre porte-satellites (45) du deuxième train épicycloïdal monté en aval (NS2) sont liés l'une à l'autre et peuvent être fixés par l'intermédiaire du quatrième élément de commande (D) et peuvent être liés par l'intermédiaire du cinquième élément de commande (E) à l'arbre d'entrée (1) ;
- la couronne (43) du deuxième train épicycloïdal monté en aval (NS2) et l'arbre porte-satellites (35) du premier train épicycloïdal monté en aval (NS1) sont liés l'une à l'autre et liés à l'arbre de sortie (2).

16. Transmission à plusieurs étages selon la revendication 2 et 7, **caractérisée par** les caractéristiques suivantes :
- le premier train épicycloïdal couplable monté en amont (VS1) comporte un planétaire (11), une couronne (13) ainsi que deux arbres porte-satellites couplés (15', 15") avec des satellites intérieures et extérieures (12', 12") ;
- les deux trains épicycloïdaux montés en aval (NS1, NS1) comportent respectivement un planétaire (31, 41), une couronne (33, 43) ainsi qu'un arbre porte-satellites (35, 45) avec des satellites (32, 42) ;
- le planétaire (11) du premier train épicycloïdal monté en amont (VS1) est lié à l'arbre d'entrée (1) ;
- les arbres porte-satellites couplés (15', 15") du premier train épicycloïdal monté en amont (VS1) sont liés au planétaire (41) du deuxième train épicycloïdal monté en aval (NS2) et peuvent être fixés par l'intermédiaire du deuxième élément de commande (B) ;
- la couronne (13) du premier train épicycloïdal monté en amont (VS1) peut être fixée par l'intermédiaire du troisième élément de commande (C) ;
- le planétaire (31) du premier train épicycloïdal monté en aval (NS1) peut être lié par l'intermédiaire du premier élément de commande (A) à l'arbre d'entrée (1) et peut être fixé par l'intermédiaire du sixième élément de commande (A') ;
- la couronne (33) du premier train épicycloïdal monté en aval (NS1) et l'arbre porte-satellites (45) du deuxième train épicycloïdal monté en aval (NS2) sont liés l'une à l'autre et peuvent être fixés par l'intermédiaire du quatrième élément de commande (D) et peuvent être liés par l'intermédiaire du cinquième élément de commande (E) à l'arbre d'entrée (1) ;
- la couronne (43) du deuxième train épicycloïdal monté en aval (NS2) et l'arbre porte-satellites (35) du premier train épicycloïdal monté en aval (NS1) sont liés l'une à l'autre et liés à l'arbre de sortie (2).

17. Transmission à plusieurs étages selon la revendication 2 et 7, **caractérisée par** les caractéristiques suivantes :
- le premier train épicycloïdal couplable monté en amont (VS1) comporte un planétaire (11), une couronne (13) ainsi que deux arbres porte-satellites couplés (15', 15") avec des satellites intérieures et extérieures (12', 12") ;
- les deux trains épicycloïdaux montés en aval (NS1, NS2) comportent respectivement un planétaire (31, 41), une couronne (33, 43) ainsi qu'un arbre porte-satellites (35, 45) avec des satellites (32, 42) ;
- le planétaire (11) du premier train épicycloïdal monté en amont (VS1) peut être lié par l'intermédiaire du troisième élément de commande (C) à l'arbre d'entrée (1) ;
- les arbres porte-satellites couplés (15', 15") du premier train épicycloïdal monté en amont (VS1) et le planétaire (41) du deuxième train épicycloïdal monté en aval (NS2) sont liés les uns à l'autre et peuvent être fixés par l'intermédiaire du deuxième élément de commande (B) ;
- la couronne (13) du premier train épicycloïdal monté en amont (VS1) est fixée ;
- le planétaire (31) du premier train épicycloïdal monté en aval (NS1) peut être lié par l'intermédiaire du premier élément de commande (A) à l'arbre d'entrée (1) et peut être fixé par l'intermédiaire du sixième élément de commande (A') ;
- la couronne (33) du premier train épicycloïdal monté en aval (NS1) et l'arbre porte-satellites (45) du deuxième train épicycloïdal monté en aval (NS2) sont liés l'une à l'autre et peuvent être fixés par l'intermédiaire du quatrième élément de commande (D), et peuvent être liés par l'intermédiaire du cinquième élément de commande (E) à l'arbre d'entrée (1) ;
- la couronne (43) du deuxième train épicycloïdal monté en aval (NS2) et l'arbre porte-satellites (35) du premier train épicycloïdal monté en aval (NS1) sont liés l'une à l'autre et liés à l'arbre de sortie (2).

18. Transmission à plusieurs étages selon la revendication 3 et 5, **caractérisée par** les caractéristiques suivantes :
- le premier train épicycloïdal monté en amont (VS1) comporte un planétaire (11), une couronne (13) ainsi qu'un arbre porte-satellites (15) avec des satellites (12) ;
- les deux trains épicycloïdaux montés en aval (NS1, NS2) comportent respectivement un planétaire (31, 41), une couronne (33, 43) ainsi qu'un arbre porte-satellites (35, 45) avec des satellites (32, 42) ;
- le planétaire (11) du premier train épicycloïdal monté en amont (VS1) est lié à l'arbre d'entrée (1) ;
- la couronne (13) du premier train épicycloïdal monté en amont (VS1) est fixée ;
- l'arbre porte-satellites (15) du premier train épicycloïdal monté en amont (VS1) peut être lié par l'intermédiaire du deuxième élément de commande (B) au planétaire (41) du deuxième train épicycloïdal monté en aval (NS2) ;
- le planétaire (31) du premier train épicycloïdal monté en aval (NS1) peut être lié par l'intermédiaire du premier élément de commande (A) à l'arbre d'entrée (1) et peut être fixé par l'intermédiaire du sixième élément de commande (A') ;
- l'arbre porte-satellites (45) du deuxième train épicycloïdal monté en aval (NS2) et la couronne (33) du premier train épicycloïdal monté en aval (NS1) sont liés l'un à l'autre et peuvent être liés par l'intermédiaire du quatrième élément de commande (E) à l'arbre d'entrée (1), par l'intermédiaire du troisième élément de commande (D) à l'arbre porte-satellites (15) du premier train épicycloïdal monté en amont (VS1), et peuvent être fixés par l'intermédiaire du cinquième élément de commande (D) ; et
- l'arbre porte-satellites (35) du premier train épicycloïdal monté en aval (NS1) et la couronne (43) du deuxième train épicycloïdal monté en aval (NS2) sont liés l'un à l'autre et liés à l'arbre de sortie (3).

19. Transmission à plusieurs étages selon la revendication 3 et 5, **caractérisée par** les caractéristiques suivantes :
- le premier train épicycloïdal monté en amont (VS1) et les deux trains épicycloïdaux montés en aval (NS1, NS2) comportent respectivement un planétaire (11, 31, 41), une couronne (13, 33, 43) ainsi qu'un arbre porte-satellites (15, 35, 45) avec des satellites (12, 32, 42) ;
- le planétaire (11) du premier train épicycloïdal monté en amont (VS1) est lié à l'arbre d'entrée (1) ;
- la couronne (13) du premier train épicycloïdal monté en amont (VS1) est fixée ;
- l'arbre porte-satellites (15) du premier train épicycloïdal monté en amont (VS1) peut être lié par l'intermédiaire du deuxième élément de commande (B) à la couronne (43) du deuxième train épicycloïdal monté en aval (NS2) ;
- les planétaires (31, 41) des deux trains épicycloïdaux montés en aval (NS1, NS2) sont liés les uns aux autres, ils peuvent être liés par l'intermédiaire du premier élément de commande (A) à l'arbre d'entrée (1) et peuvent être fixés par l'intermédiaire du sixième élément de commande (A') ;
- l'arbre porte-satellites (45) du deuxième train épicycloïdal monté en aval (NS2) et la couronne (33) du premier train épicycloïdal monté en aval (NS1) sont liés l'un à l'autre et peuvent être liés par l'intermédiaire du troisième élément de commande (D) à l'arbre porte-satellites (15) du premier train épicycloïdal monté en amont (VS1), et peuvent être liés par l'intermédiaire du quatrième élément de commande (E) à l'arbre d'entrée (1), et peuvent être fixés par l'intermédiaire du cinquième élément de commande (D') ; et
- l'arbre porte-satellites (35) du premier train épicycloïdal monté en aval (NS1) est lié à l'arbre de sortie (3).

20. Transmission à plusieurs étages selon la revendication 4 et 5, **caractérisée par** les caractéristiques suivantes :
- le premier train épicycloïdal monté en amont (VS1) comporte un planétaire (11), une couronne (13) ainsi que deux arbres porte-satellites couplés (15', 15") avec des satellites intérieures et extérieures (12', 12") ;
- le premier train épicycloïdal monté en aval (NS1) est réalisé comme train épicycloïdal double, avec un planétaire (31), une couronne (33), ainsi que deux arbres porte-satellites couplés (35', 35") avec des satellites intérieures et extérieures (32', 32") ;
- le deuxième train épicycloïdal monté en aval (NS2) comporte un planétaire (41) et une couronne (43) ainsi qu'un arbre porte-satellites (45) doté de satellites (42) ;
- le planétaire (11) du premier train épicycloïdal monté en amont (VS1) est lié à l'arbre d'entrée (1) ;
- les arbres porte-satellites couplés (15', 15") du premier train épicycloïdal monté en amont (VS1) sont fixés ;
- le planétaire (31) du premier train épicycloïdal monté en aval (NS1) peut être lié par l'intermédiaire du premier élément de commande (A) à l'arbre d'entrée (1) et peut être fixé par l'intermédiaire du septième élément de commande (A'), et cela en particulier par l'intermédiaire de l'arbre porte-satellites (15) du premier train épicycloïdal monté en amont (VS1) ;
- le planétaire (41) du deuxième train épicycloïdal monté en aval (NS2) peut être lié par l'intermédiaire du deuxième élément de commande (B) à la couronne (13) du premier train épicycloïdal monté en amont (VS1), et peut être fixé par l'intermédiaire du troisième élément de commande (C), et cela en particulier par l'intermédiaire de l'arbre porte-satellites (15") des satellites extérieures (12") du premier train épicycloïdal monté en amont (VS1) ;
- l'arbre porte-satellites (45) du deuxième train épicycloïdal monté en aval (NS2) et les arbres porte-satellites couplés (35', 35") du premier train épicycloïdal monté en aval (NS1) sont liés l'un aux autres et peuvent être liés par l'intermédiaire du quatrième élément de commande (D) à la couronne (13) du premier train épicycloïdal monté en amont (VS1) et par l'intermédiaire du cinquième élément de commande (E) à l'arbre d'entrée (1) et peuvent être fixés par l'intermédiaire du sixième élément de commande (D') ;
- la couronne (31) du premier train épicycloïdal monté en aval (NS1) et la couronne (43) du deuxième train épicycloïdal monté en aval (NS2) sont liés l'une à l'autre ; et
- la couronne (33) du premier train épicycloïdal monté en aval (NS1) est liée à l'arbre de sortie (3).

21. Transmission à plusieurs étages selon la revendication 4 et 5, **caractérisée par** les caractéristiques suivantes :
- le premier train épicycloïdal monté en amont (VS1) et les deux trains épicycloïdaux montés en aval (NS1, NS2) comportent respectivement un planétaire (11, 31, 41), une couronne (13, 33, 34) ainsi qu'un arbre porte-satellites (15, 35, 45) avec des satellites (12, 32, 42) ;
- le planétaire (11) du premier train épicycloïdal monté en amont (VS1) est lié à l'arbre d'entrée (1) ;
- la couronne (13) du premier train épicycloïdal monté en amont (VS1) est fixée ;
- le planétaire (31) du premier train épicycloïdal monté en aval (NS1) peut être lié par l'intermédiaire du premier élément de commande (A) à l'arbre d'entrée (1) et peut être fixé par l'intermédiaire du septième élément de commande (A') ;
- le planétaire (41) du deuxième train épicycloïdal monté en aval (NS2) peut être lié par l'intermédiaire du deuxième élément de commande (B) à l'arbre porte-satellites (15) du premier train épicycloïdal monté en amont (VS1) et peut être fixé par l'intermédiaire du troisième élément de commande (C) ;
- l'arbre porte-satellites (45) du deuxième train épicycloïdal monté en aval (NS2) et la couronne (33) du premier train épicycloïdal monté en aval (NS1) sont liés l'un à l'autre et peuvent être liés par l'intermédiaire du quatrième élément de commande (D) à l'arbre porte-satellites (15) du premier train épicycloïdal monté en amont (VS1), et peuvent être liés par l'intermédiaire du cinquième élément de commande (E) à l'arbre d'entrée (1) et peuvent être fixés par l'intermédiaire du sixième élément de commande (D') ; et
- l'arbre porte-satellites (35) du premier train épicycloïdal monté en aval (NS1) et la couronne (43) du deuxième train épicycloïdal monté en aval (NS2) sont liés l'un à l'autre et liés à l'arbre de sortie (3).

22. Transmission à plusieurs étages selon la revendication 18 ou 19 ou 21, **caractérisée en ce que** le premier train d'engrenages monté en amont (VS1) est réalisé comme boîte positive avec un planétaire (11), une couronne (13) et deux arbres porte-satellites couplés (15', 15") dotés de satellites intérieures et extérieures (12', 12"), sachant que les arbres porte-satellites couplés (15', 15") du premier train épicycloïdal monté en amont (VS1) sont fixés au lieu de sa couronne (13), et sachant que le deuxième et le troisième ou le deuxième et le quatrième élément de commande (B, D) sont liés à la couronne (13) du premier train épicycloïdal monté en amont (VS1) au lieu de à son arbre porte-satellites.

23. Transmission à plusieurs étages selon la revendication 4 et 5, **caractérisée par** les caractéristiques suivantes :
- le premier train épicycloïdal monté en amont (VS1) comporte un planétaire (11), une couronne (13) ainsi que deux arbres porte-satellites (15', 15") avec des satellites intérieures et extérieures (12', 12") ;
- les deux trains épicycloïdaux montés en aval (NS1, NS2) comportent respectivement un planétaire (31, 41), une couronne (33, 43) ainsi qu'un arbre porte-satellites (35, 45) avec des satellites (32, 42) ;
- le planétaire (11) du premier train épicycloïdal monté en amont (VS1) est lié aussi à l'arbre d'entrée (1) ;
- les arbres porte-satellites couplés (15', 15") du premier train épicycloïdal monté en amont (VS1) sont fixés ;
- les planétaires (31, 41) des deux trains épicycloïdaux montés en aval (NS1, NS2) sont liés les uns aux autres, ils peuvent être liés par l'intermédiaire du deuxième élément de commande (B) à la couronne (13) du premier train épicycloïdal monté en amont (VS1) et peuvent être fixés par l'intermédiaire du troisième élément de commande (C) ;
- la couronne (33) du premier train épicycloïdal monté en aval (NS1) peut être liée par l'intermédiaire du premier élément de commande (A) à l'arbre d'entrée (1) et peut être fixée par l'intermédiaire du septième élément de commande (A') ;
- l'arbre porte-satellites (45) du deuxième train épicycloïdal monté en aval (NS2) peut être lié par l'intermédiaire du quatrième élément de commande (D) à la couronne (13) du premier train épicycloïdal monté en amont (VS1), et peut être lié par l'intermédiaire du cinquième élément de commande (E) à l'arbre d'entrée (1), et peut être fixé par l'intermédiaire du sixième élément de commande (D'), et cela en particulier par l'intermédiaire de l'arbre porte-satellites (15") des satellites extérieures (12") du premier train épicycloïdal monté en amont (VS1) ; et
- l'arbre porte-satellites (35) du premier train épicycloïdal monté en aval (NS1) et la couronne (43) du deuxième train épicycloïdal monté en aval (NS2) sont liés l'un à l'autre et liés à l'arbre de sortie (3).

24. Transmission à plusieurs étages selon la revendication 4 et 6, **caractérisée par** les caractéristiques suivantes :
- le premier train épicycloïdal monté en amont (VS1) et le deuxième train épicycloïdal monté en aval (NS2) comportent respectivement un planétaire (11, 41), une couronne (13, 43) ainsi qu'un arbre porte-satellites (15, 45) avec des satellites (12, 42) ;
- le deuxième train épicycloïdal monté en amont (VS2) est réalisé comme train épicycloïdal double, avec un planétaire (21), une couronne (23), ainsi que deux arbres porte-satellites couplés (25', 25") avec des satellites intérieures et extérieures (22', 22") ;
- le premier train épicycloïdal monté en aval (NS1) est réalisé comme train épicycloïdal double, avec un planétaire (31), une couronne (33), ainsi que deux arbres porte-satellites couplés (35', 35") avec des satellites intérieures et extérieures (32', 32") ;
- le planétaire (11) du premier train épicycloïdal monté en amont (VS1) est lié à l'arbre d'entrée (1) ;
- le planétaire (21) du deuxième train épicycloïdal monté en amont (VS2) est fixé ;
- les couronnes (13, 23) des deux trains épicycloïdaux montés en amont (VS1, VS2) sont liées les unes aux autres, elles peuvent être liées par l'intermédiaire du septième élément de commande (A') à la couronne (31) du premier train épicycloïdal monté en aval (NS1) ;
- les arbres porte-satellites couplés (25', 25") du deuxième train épicycloïdal monté en amont (VS2) et l'arbre porte-satellites (15) du premier train épicycloïdal monté en amont (VS1) sont liés les uns à l'autre ;
- le planétaire (31) du premier train épicycloïdal monté en aval (NS1) et la couronne (43) du deuxième train épicycloïdal monté en aval (NS2) sont liés l'un à l'autre et peuvent être liés par l'intermédiaire du premier élément de commande (A) à l'arbre d'entrée (1) ;
- les arbres porte-satellites (35', 35") du premier train épicycloïdal monté en aval (NS1) peuvent être liés par l'intermédiaire du cinquième élément de commande (E) à l'arbre d'entrée (1) ;
- le planétaire (41) du deuxième train épicycloïdal monté en aval (NS2) peut être lié par l'intermédiaire du deuxième élément de commande (B) aux arbres porte-satellites couplés (25', 25") du deuxième train épicycloïdal monté en amont (VS2) et peut être fixé par l'intermédiaire du troisième élément de commande (C) ;
- l'arbre porte-satellites (45) du deuxième train épicycloïdal monté en aval (NS2) et les arbres porte-satellites couplés (35', 35") du premier train épicycloïdal monté en aval (NS1) sont liés l'un aux autres et peuvent être liés par l'intermédiaire du quatrième élément de commande (D) aux arbres porte-satellites couplés (25', 25") du deuxième train épicycloïdal monté en amont (VS2) et peuvent être fixés par l'intermédiaire du sixième élément de commande (D') ;
et la roue à denture intérieure (33) du premier train de rouses épicycloïdal monté en aval (NS1) est reliée à l'arbre de sortie (2).
